# EUROPEAN PATENT APPLICATION

(11) **EP 4 818 862 A1**
(43) Date of publication of application: **07.10.2026**
(21) Application number: 24897543.5
(22) Date of filing: 26.11.2024
(51) Int. Cl.: G06F 3/04815, B25J 9/22, G05B 19/4068, G05B 19/418, G06Q 50/04

(54) **INFORMATION PROCESSING DEVICE, INFORMATION PROCESSING SYSTEM, AND PROGRAM**

(30) Priority: 28.11.2023 JP 2023201086
(71) Applicant: Kyocera Corporation, Kyoto-shi, Kyoto 612-8501 (JP)
(72) Inventor: YAMAGISHI Yuki, Kyoto-shi, Kyoto 612-8501 (JP); ISHIDA Takayuki, Kyoto-shi, Kyoto 612-8501 (JP)
(74) Representative: TBK
(86) International application number: PCT/JP2024/041833
(87) International publication number: WO 2025/115859

(57) **Abstract**

The information processing device includes a display unit, an input unit that receives a user input, and a controller. The controller causes the display unit to display a layout of a candidate set of a plurality of pieces of hardware for an operation of a robot and an evaluation metric for the operation corresponding to the layout, determines, in response to the input unit receiving a first input about an edit of the layout, the evaluation metric based on the first input, and causes the display unit to redisplay the determined evaluation metric.

## Description

### TECHNICAL FIELD

The present disclosure relates to an information processing device.

### BACKGROUND OF INVENTION

Patent Literature 1 describes a technique for processing information about a robot.

### CITATION LIST

### PATENT LITERATURE

Patent Literature 1: Japanese Unexamined Patent Application Publication No. 2017-24113

### SUMMARY

One or more aspects of the present disclosure are directed to an information processing device, an information processing system, and a program. In one embodiment, an information processing device includes a display unit, an input unit that receives a user input, and a controller. The controller causes the display unit to display a layout of a candidate set of a plurality of pieces of hardware for an operation of a robot and an evaluation metric for the operation corresponding to the layout, determines, in response to the input unit receiving a first input about an edit of the layout, the evaluation metric based on the first input, and causes the display unit to redisplay the determined evaluation metric.

In one embodiment, an information processing system includes the above information processing device and a display device connected to the information processing device to enable mutual communication. The information processing device is configured to output information about the layout to the display device. The display device virtually reproduces and displays the layout based on the information.

In one embodiment, a program causes a computer to function as the above information processing device or the above information processing system.

### BRIEF DESCRIPTION OF THE DRAWINGS

FIG. 1 is a schematic diagram of an example information processing device.
FIG. 2 is a schematic diagram of an example display generated by the information processing device.
FIG. 3 is a schematic diagram of an example display generated by the information processing device.
FIG. 4 is a schematic diagram of an example display generated by the information processing device.
FIG. 5 is a schematic diagram of an example display generated by the information processing device.
FIG. 6 is a schematic diagram of an example display generated by the information processing device.
FIG. 7 is a schematic diagram of an example display generated by the information processing device.
FIG. 8 is a schematic diagram of an example display generated by the information processing device.
FIG. 9 is a schematic diagram of an example display generated by the information processing device.
FIG. 10 is a schematic diagram of an example display generated by the information processing device.
FIG. 11 is a schematic diagram of an example display generated by the information processing device.
FIG. 12 is a schematic diagram of an example display generated by the information processing device.
FIG. 13 is a schematic diagram of an example display generated by the information processing device.
FIG. 14 is a schematic diagram of an example display generated by the information processing device.
FIG. 15 is a schematic diagram of an example display generated by the information processing device.
FIG. 16 is a schematic diagram of an example display generated by the information processing device.
FIG. 17 is a schematic diagram of an example display generated by the information processing device.
FIG. 18 is a schematic diagram of an example display generated by the information processing device.
FIG. 19 is a schematic diagram of an example display generated by the information processing device.
FIG. 20 is a schematic diagram of an example display generated by the information processing device.
FIG. 21 is a schematic diagram of an example display generated by the information processing device.
FIG. 22 is a schematic diagram of an example display generated by the information processing device.
FIG. 23 is a schematic diagram of an example display generated by the information processing device.
FIG. 24 is a schematic diagram of an example display generated by the information processing device.
FIG. 25 is a schematic diagram of an example display generated by the information processing device.
FIG. 26 is a schematic diagram illustrating an operation example of the information processing device.
FIG. 27 is a schematic diagram of an example display generated by the information processing device.
FIG. 28 is a schematic diagram of an example display generated by the information processing device.
FIG. 29 is a schematic diagram of an example display generated by the information processing device.
FIG. 30 is a schematic diagram of an example display of a VR display device.
FIG. 31 is a schematic diagram of an example display of an AR display device.
FIG. 32 is a schematic diagram of an example display generated by the information processing device.
FIG. 33 is a schematic diagram of an example display generated by the information processing device.
FIG. 34 is a schematic diagram of an example display generated by the information processing device.
FIG. 35 is a schematic diagram of an example display generated by the information processing device.
FIG. 36 is a schematic diagram of an example display generated by the information processing device.
FIG. 37 is a schematic diagram of an example display generated by the information processing device.
FIG. 38 is a schematic diagram of an example display generated by the information processing device.
FIG. 39 is a schematic diagram of an example display generated by the information processing device.
FIG. 40 is a schematic diagram of an example display generated by the information processing device.
FIG. 41 is a schematic diagram of an example display generated by the information processing device.
FIG. 42 is a schematic diagram of an example display generated by the information processing device.
FIG. 43 is a schematic diagram of an example display generated by the information processing device.
FIG. 44 is a schematic diagram of an example display generated by the information processing device.
FIG. 45 is a schematic diagram of an example display generated by the information processing device.
FIG. 46 is a schematic diagram of an example display generated by the information processing device.
FIG. 47 is a schematic diagram of an example display generated by the information processing device.
FIG. 48 is a schematic diagram of an example display generated by the information processing device.
FIG. 49 is a schematic diagram of an example display generated by the information processing device.
FIG. 50 is a schematic diagram of an example display generated by the information processing device.

### DESCRIPTION OF EMBODIMENTS

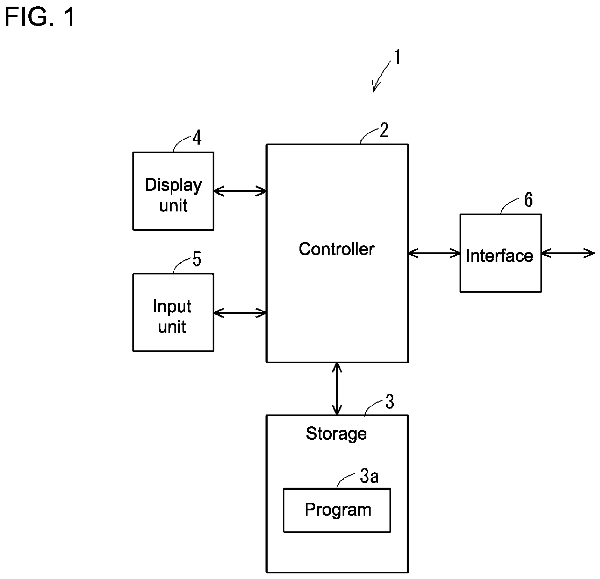

FIG. 1 is a schematic diagram of an example of an information processing device 1. The information processing device 1 can receive a user input and perform processing based on the received input. The information processing device 1 is, for example, a computer. The information processing device 1 may be, for example, a desktop or a laptop personal computer, a tablet terminal, a mobile phone such as a smartphone, or any other device.

The information processing device 1 can interact with the user about an operation of a robot. More specifically, the information processing device 1 can receive requests about the operation of the robot from the user and provide suggestions about the operation of the robot to the user based on the received requests. The information processing device 1 can correct the suggestions based on requests from the user and present corrected suggestions to the user. The operation of the robot, or specifically, the operation performed by the robot, may hereafter be referred to as a robot operation.

### Example Configuration of Information Processing Device

As illustrated in FIG. 1, the information processing device 1 includes, for example, a controller 2, a storage 3, a display unit 4, an input unit 5, and an interface 6.

The interface 6 can communicate with, for example, a device external to the information processing device 1 (also referred to as an external device). The interface 6 may communicate with the external device directly or through a network including, for example, the internet. The interface 6 may perform wired or wireless communication. The interface 6 may be, for example, an interface circuit. The interface 6 may be, for example, a communicator or a communication circuit. The interface 6 inputs information received from the external device into the controller 2. The interface 6 also transmits information from the controller 2 to the external device. The external device may include a cloud server, a mobile phone such as a smartphone, a tablet, a personal computer, a VR display device, or an AR display device. VR is an abbreviation for virtual reality, and AR is an abbreviation for augmented reality.

The controller 2 can control the other components of the information processing device 1 to centrally manage the operation of the information processing device 1. The controller 2 may be, for example, a control circuit. The controller 2 includes at least one processor to provide control and processing capabilities for implementing various functions, as described in more detail below.

In various embodiments, the processor may be a single integrated circuit (IC), or may be multiple ICs or multiple discrete circuits connected to one another to enable mutual communication, or both the multiple ICs and multiple discrete circuits. The processor may be implemented using various known techniques.

In one embodiment, for example, the processor includes one or more circuits or units configured to implement instructions stored in an associated memory to perform one or more data computation procedures or processes. In another embodiment, the processor may be firmware (e.g., a discrete logic component) configured to perform one or more data computation procedures or processes.

In various embodiments, the processor includes one or more processors, controllers, microprocessors, microcontrollers, application-specific integrated circuits (ASICs), digital signal processors, programmable logic devices, field programmable gate arrays, combinations of any of these devices or configurations, or combinations of other known devices and configurations. The processor may implement the functions described below.

The controller 2 may include, for example, a central processing unit (CPU) and a graphics processing unit (GPU) as processors. The storage 3 may include a non-transitory recording medium readable by the CPU in the controller 2, such as a read-only memory (ROM) or a random-access memory (RAM). The storage 3 stores, for example, multiple types of programs 3a for controlling the information processing device 1. The various functions of the controller 2 are implemented by, for example, the CPU in the controller 2 executing the programs 3a in the storage 3.

Note that the structure of the controller 2 is not limited to the above example. For example, the controller 2 may include multiple CPUs. The controller 2 may include at least one digital signal processor (DSP). The functions of the controller 2 may be implemented entirely or partially by a hardware circuit, without using software to implement the functions. The storage 3 may include a non-transitory computer-readable recording medium other than the ROM and the RAM. The storage 3 may include, for example, a small hard disk drive and a solid-state drive (SSD).

The input unit 5 can receive various user inputs. The input unit 5 may include, for example, a mouse and a keyboard. The input unit 5 may include a touch sensor that receives touch operations performed by the user. The input unit 5 may include a microphone that receives a voice input from the user. The input unit 5 may include a VR controller or a gesture controller. The controller 2 can identify the user input received by the input unit 5 based on an output signal from the input unit 5.

The display unit 4 can display various items of information as controlled by the controller 2. The display unit 4 includes a display surface on which various items of information are displayed. The display unit 4 may be, for example, a liquid crystal display, an organic electroluminescent (EL) display, or a plasma display panel. When the input unit 5 includes a touch sensor, the touch sensor and the display surface of the display unit 4 may together serve as a touchscreen display with display and touch detection capabilities. In this case, the input unit 5 can detect touch operations on the display surface of the display unit 4. The input unit 5 and the display unit 4 together serve as a user interface. A display surface hereafter refers to the display surface of the display unit 4. A display refers to a display on the display surface of the display unit 4.

### Operation Example of Information Processing Device

The information processing device 1 displays, on its display surface, icons for executing a predetermined application program 3a included in the multiple types of programs 3a stored in the storage 3. The predetermined application program 3a is executed by the controller 2 to cause the information processing device 1 to interact with the user about the robot operation.

In response to the user selecting a predetermined icon displayed on the display surface, or specifically, when the input unit 5 receives a selection input for selecting the predetermined icon, the controller 2 starts executing the predetermined application program 3a stored in the storage 3. The selection input for selecting an object such as an icon displayed on the display surface may be a touch operation on the object or a predetermined mouse operation performed with the pointer on the object.

When the controller 2 starts executing the predetermined application program 3a, the display unit 4 displays an application screen 10 as controlled by the controller 2. The controller 2 can cause the display unit 4 to display the application screen 10 based on the information stored in the storage 3.

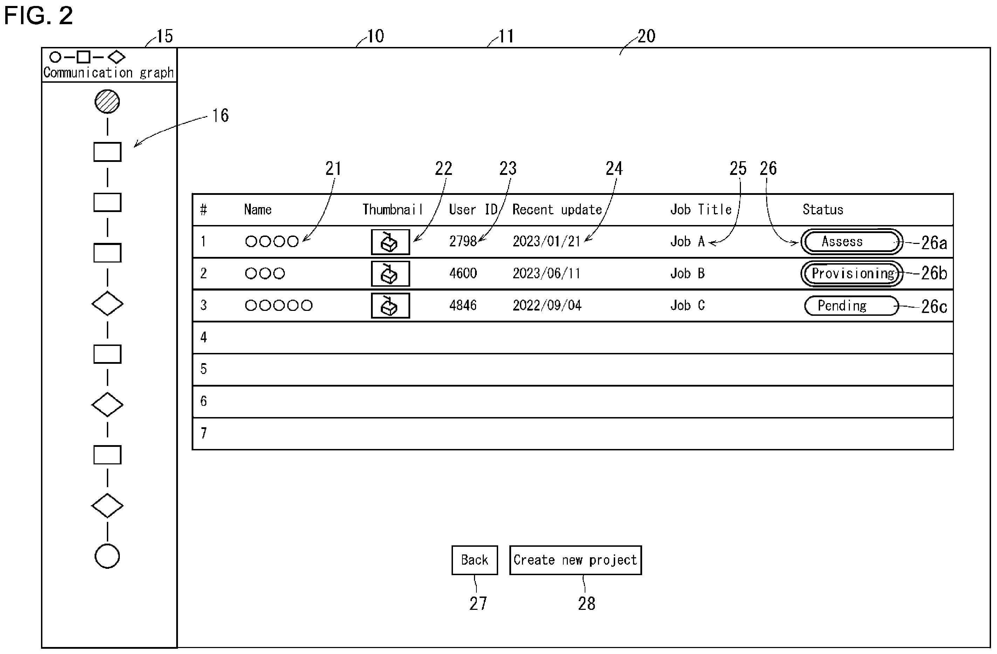

FIG. 2 is a schematic diagram of an example of the application screen 10. The application screen 10 includes, for example, a main screen 11 used in interaction and a sequence screen 15 including a flow diagram 16 indicating the stage of the interaction between the information processing device 1 and the user. The application screen 10 includes the sequence screen 15 on its left end and the main screen 11 on the remaining portion.

In the flow diagram 16, for example, the round, square, and rhombus marks indicate multiple stages of interaction. In the flow diagram 16, the mark indicating the current stage is highlighted. In this example, the mark indicating the current stage is shaded to show the highlight. In the screens (described later) displayed on the display surface, highlighted areas are shaded.

The display on the main screen 11 switches sequentially. In response to the predetermined application program 3a in the storage 3 being started, the main screen 11 first shows a sign-in screen. In response to the user signing in using the sign-in screen, the main screen 11 shows a project management screen 20 as illustrated in FIG. 2.

### Example of Project Management Screen

The project management screen 20 lists projects launched in the past. A project refers to an operation performed between the information processing device 1 and the user through stepwise interaction, including the information processing device 1 providing suggestions to the user about a robot operation based on requests from the user and the user finally agreeing to a suggestion.

The project management screen 20 includes names 21 of the projects, thumbnails 22 for the projects, and identification numbers 23 of the projects. The project management screen 20 also includes titles 25 of robot operations handled in the projects and status information 26 indicating the progress statuses of the projects.

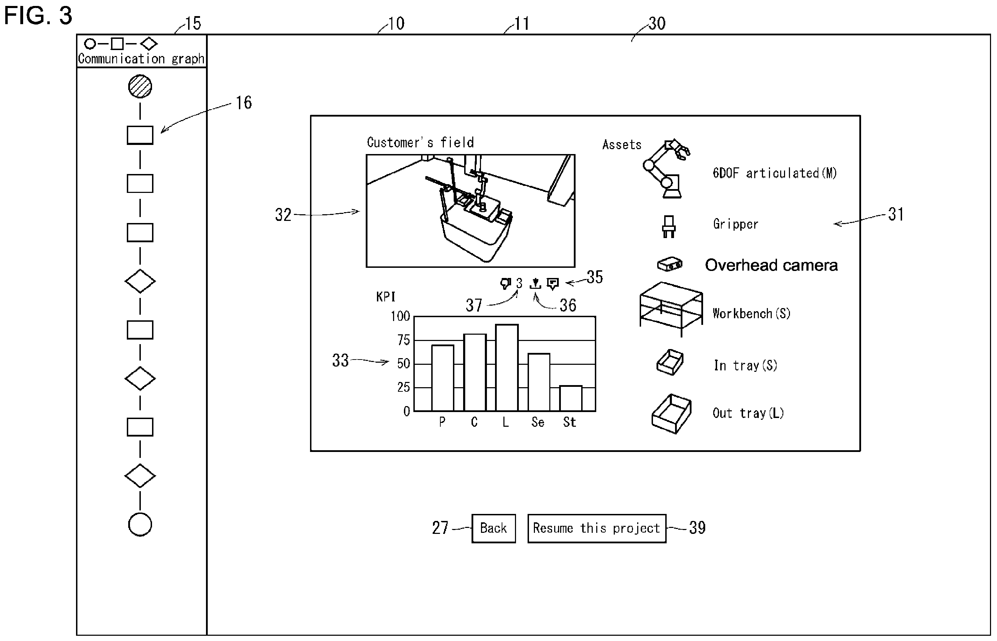

Examples of the items of the status information 26 include status information 26a indicating that the project is in progress, status information 26b indicating that the project is complete, and status information 26c indicating that the project is pending. In response to the user selecting one of the items of the status information 26 displayed on the display surface, or specifically, in response to the input unit 5 receiving a selection input of selecting one of the items of the status information 26, a confirmation screen 30 appears on the main screen 11 to confirm the suggestion for the project at the status indicated by the selected item of the status information 26. FIG. 3 is a schematic diagram of an example display on the application screen 10 including the confirmation screen 30.

The confirmation screen 30 that appears in response to selection of the status information 26a indicating that the project is in progress shows the latest suggestion for an in-progress project. The confirmation screen 30 that appears in response to selection of the status information 26b indicating completion of the project shows the final suggestion for a complete project, or specifically, the suggestion to which the user has finally agreed. The confirmation screen 30 that appears in response to selection of the status information 26c indicating that the project is pending shows the last suggestion for a pending project. The details of the confirmation screen 30 will be described later.

The project management screen 20 includes an instruction area 27 for receiving an instruction to return the main screen 11 to a previous display. In response to the user selecting the instruction area 27, the main screen 11 returns to the sign-in screen.

The project management screen 20 includes an instruction area 28 for receiving an instruction to create a new project. In response to the user selecting the instruction area 28, the interaction advances by one stage, and a new project is created. An overview input screen 40 then appears on the main screen 11 for receiving the overview of an intended robot operation from the user. The interaction may be, for example, at a project stage. The overview input screen 40 can also be a screen for receiving request from the user.

### Example of Overview Input Screen

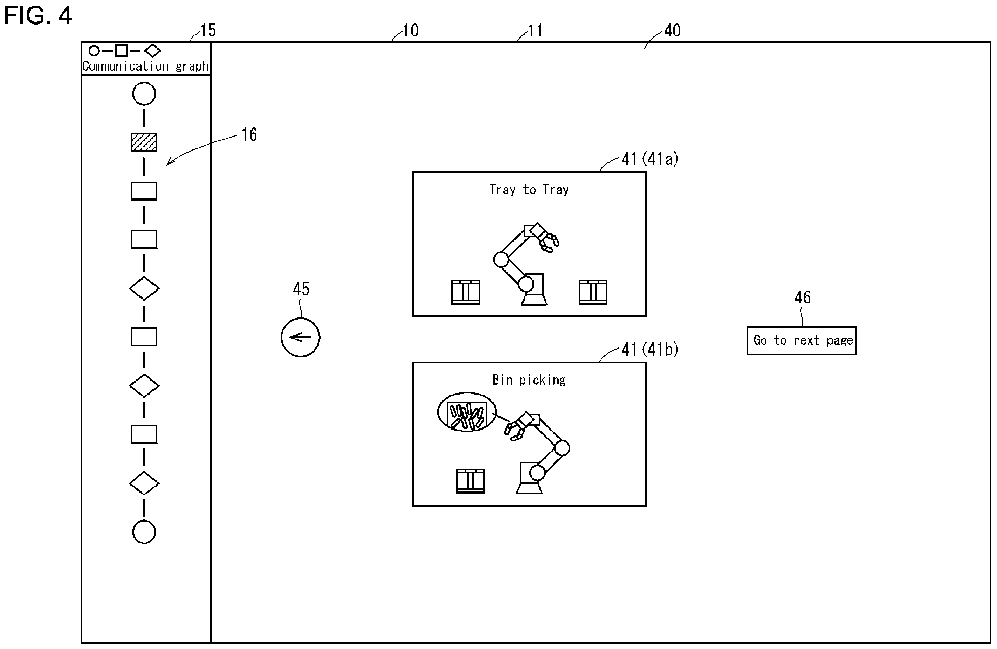

FIG. 4 is a schematic diagram of an example of the overview input screen 40. The overview input screen 40 includes, for example, multiple specification areas 41. Each specification area 41 is used to specify the overview of the robot operation intended by the user. The multiple specification areas 41 include, for example, a specification area 41a corresponding to a first operation overview and a specification area 41b corresponding to a second operation overview. The first operation overview indicates, for example, that a robot holds workpieces aligned in an inbound tray in a work environment (also referred to as an in-tray) and moves the workpieces into an outbound tray (also referred to as an out-tray) in a manner aligned in the out-tray. The second operation overview indicates, for example, that the robot holds workpieces randomly placed in the in-tray.

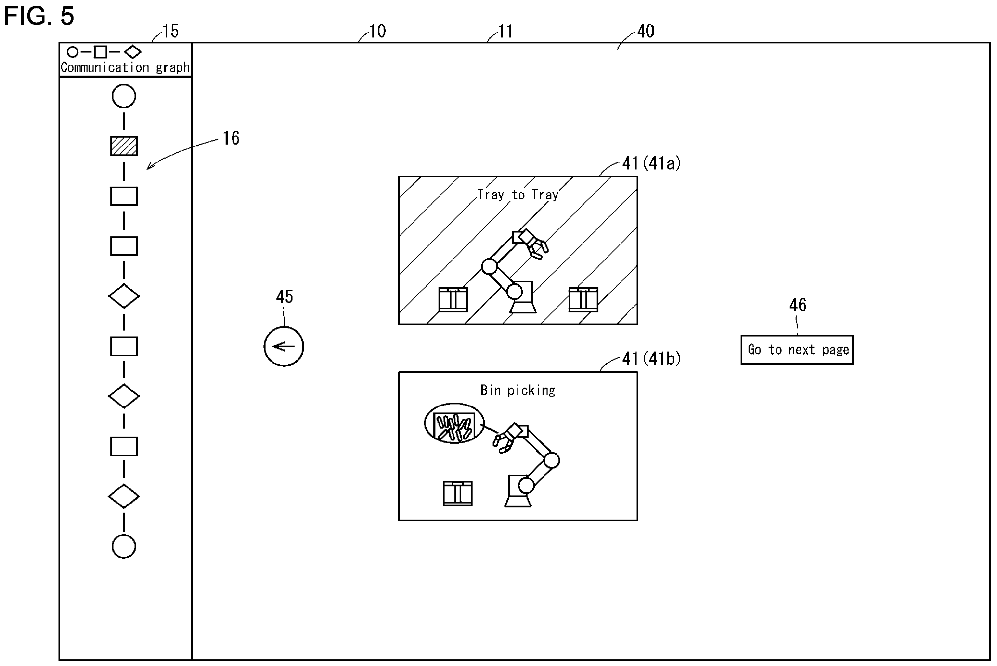

In response to the user selecting the specification area 41a, the controller 2 identifies specifying of the first operation overview and sets the initial settings of the screen that appears after the overview input screen 40 to settings corresponding to the first operation overview. In response to the user selecting the specification area 41b, the controller 2 identifies specifying of the second operation overview and sets the initial settings of the screen that appears after the overview input screen 40 to settings corresponding to the second operation overview. The selected specification area 41 is highlighted. FIG. 5 is a schematic diagram illustrating an example in which the specification area 41a is selected.

The overview input screen 40 includes an instruction area 45 for receiving an instruction to return the main screen 11 to a previous display. In response to the user selecting the instruction area 45, the main screen 11 returns to the project management screen 20, and the interaction returns by one stage.

The overview input screen 40 includes an instruction area 46 for receiving an instruction to switch the main screen 11 to a next display. After selecting the specification area 41, the user may select the instruction area 46 to advance the interaction by one stage. The main screen 11 then shows a detail input screen 50 for receiving detailed requests from the user.

### Example of Detail Input Screen

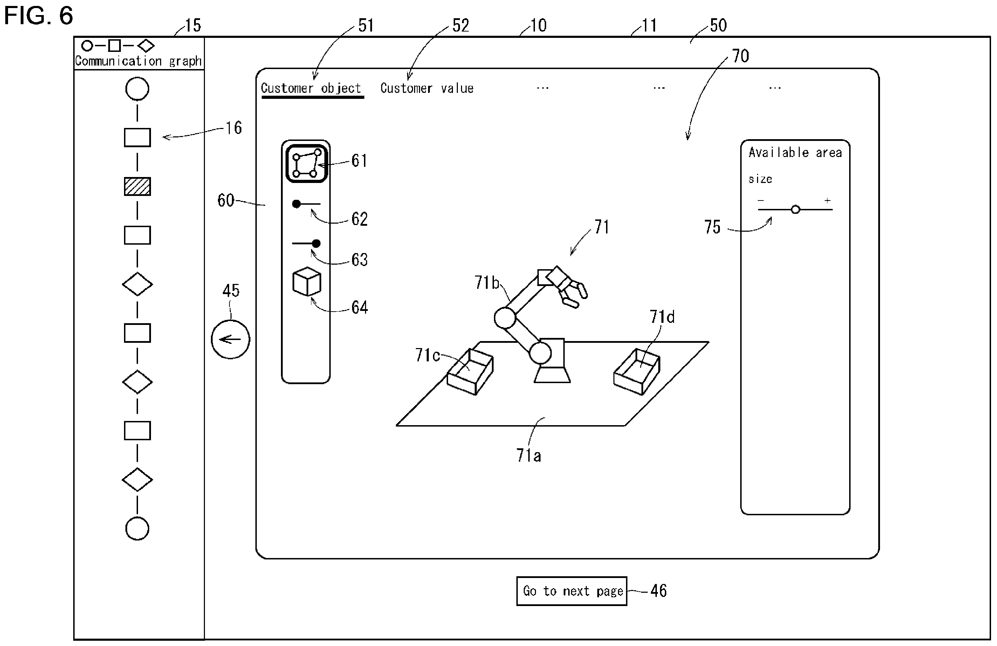

FIG. 6 is a schematic diagram of an example of the detail input screen 50 that appears in response to the instruction area 46 being selected subsequent to the specification area 41a. The detail input screen 50 includes instruction areas 51 and 52. The detail input screen 50 also includes the instruction areas 45 and 46 described above.

The instruction area 51 receives an instruction to display an object input screen 60 for receiving requests from the user about a workspace, an in-tray, an out-tray, and workpieces. The instruction area 52 receives an instruction to display a priority input screen 170 for receiving an input of a priority content about the robot operation from the user.

In response to the instruction area 51 being selected, the object input screen 60 appears on the detail input screen 50. In response to the instruction area 52 being selected, the priority input screen 170 appears on the detail input screen 50. FIG. 6 illustrates an example in which the instruction area 51 is selected and the object input screen 60 is shown on the detail input screen 50.

### Example of Object Input Screen

The object input screen 60 includes instruction areas 61 to 64. The instruction area 61 receives an instruction to display a space input screen 70 for receiving requests about a workspace from the user. In response to the instruction area 61 being selected, the space input screen 70 appears on the object input screen 60. FIG. 6 illustrates an example in which the instruction area 61 is selected and the space input screen 70 is shown on the object input screen 60. The instruction area 61 being selected is surrounded by, for example, a frame line. The instruction areas 62 to 64 are also surrounded by frame lines when selected.

The instruction area 62 receives an instruction to display an in-tray input screen 80 for receiving requests about an in-tray from the user. In response to the instruction area 62 being selected, the in-tray input screen 80 appears on the object input screen 60.

The instruction area 63 receives an instruction to display an out-tray input screen 90 for receiving requests about an out-tray from the user. In response to the instruction area 63 being selected, the out-tray input screen 90 appears on the object input screen 60.

The instruction area 64 receives an instruction to display a workpiece input screen 100 for receiving requests about workpieces from the user. In response to the instruction area 64 being selected, the workpiece input screen 100 appears on the object input screen 60. Example of Space Input Screen

The space input screen 70 includes, for example, a specification area 75 for specifying the size of the workspace. The specification area 75 includes a slider for specifying the size of the workspace. The user can move, for example, the slider left and right by performing a predetermined input on the input unit 5. The user can specify the size of the workspace by moving the slider left and right. When the slider is moved right, the specified size of the workspace increases. When the slider is moved left, the specified size of the workspace decreases. The input unit 5 receives an operation for the slider from the user and receives the specification of the workspace size from the user. Note that the slider in each specification area (described later) is operated in the same manner as or in a similar manner to the slider included in the specification area 75.

The space input screen 70 includes an overview image 71 representing the overview of the intended robot operation input by the user on the overview input screen 40. In the example in FIG. 6, the specification area 41a is selected in the overview input screen 40. FIG. 6 illustrates the overview image 71 representing the first operation overview specified by the user. The overview image 71 representing the first work overview includes an image 71a of the workspace and an image 71b of the robot. In the first operation overview, both the in-tray and the out-tray are used. The overview image 71 thus includes an image 71c of the in-tray and an image 71d of the out-tray.

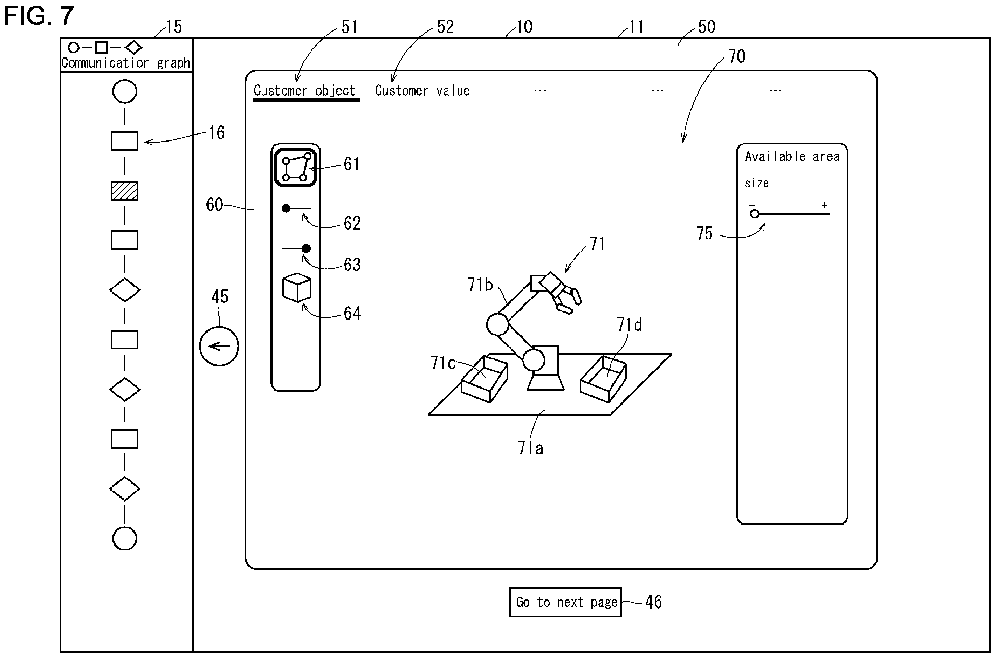

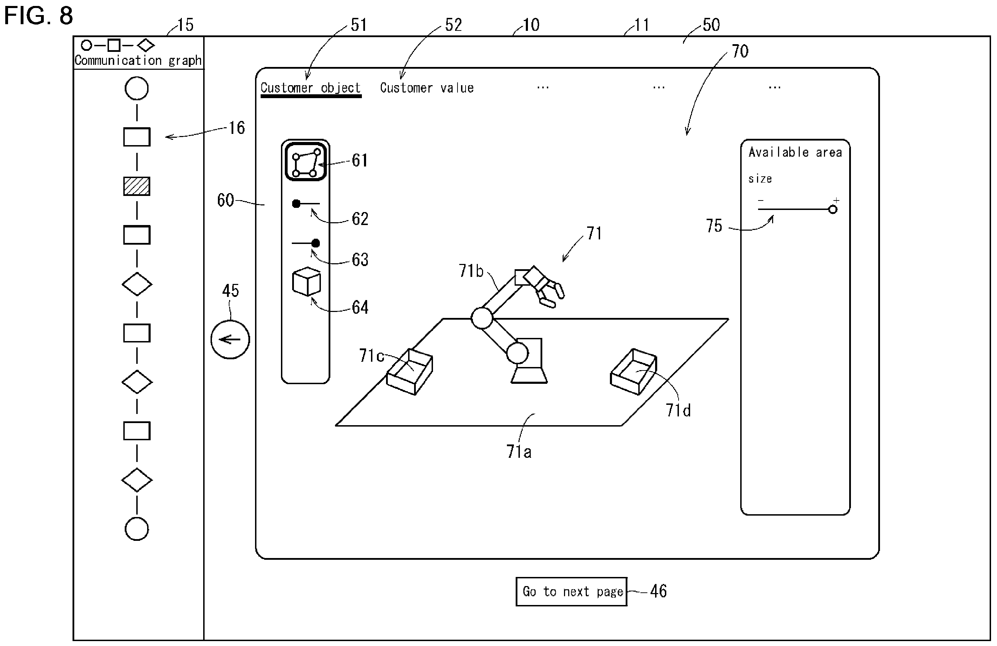

The overview image 71 changes based on the size of the workspace specified in the specification area 75. FIG. 7 illustrates the overview image 71 obtained when the slider in the specification area 75 is moved left to reduce the specified size of the workspace. FIG. 8 illustrates the overview image 71 obtained when the slider in the specification area 75 is moved right to increase the specified size of the workspace.

### Example of In-Tray Input Screen

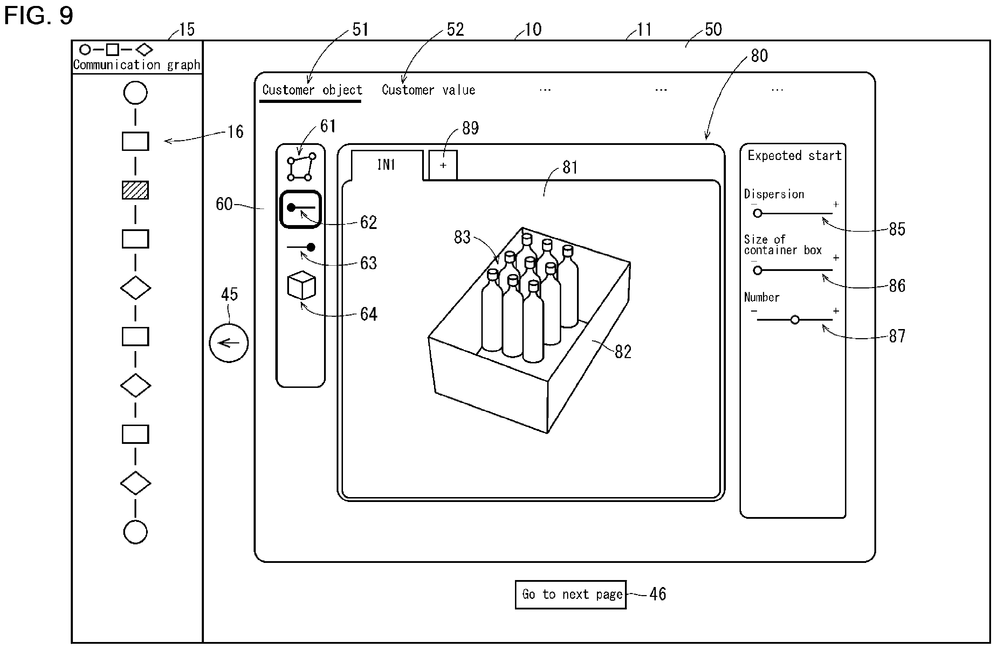

FIG. 9 is a schematic diagram of an example display of the in-tray input screen 80. The in-tray input screen 80 includes specification areas 85 to 87. The specification area 85 is used to specify the degree of dispersion of workpieces in the in-tray (also referred to as an in-tray workpiece dispersion). The in-tray workpiece dispersion is, for example, the degree of randomness of the workpieces in the in-tray or the degree of non-alignment of workpieces in the in-tray. The specification area 86 is used to specify the size of the in-tray. The specification area 87 is used to specify the number of workpieces in the in-tray.

The specification area 85 includes a slider, in the same manner as or in a similar manner to the specification area 75 described above. When the slider is moved right, the specified in-tray workpiece dispersion increases. When the slider is moved left, the specified in-tray workpiece dispersion decreases. When the slider is set at the left end, the workpieces are specified to be aligned in the in-tray. When the slider is set to the right of the left end, the workpieces are specified to be dispersed in the in-tray. More specifically, the workpieces are specified to be placed randomly in the in-tray. The specification areas 86 and 87 each include a slider, in the same manner as in a similar manner to the specification area 85.

The initial position of the slider in the specification area 85 is, for example, the position corresponding to the overview of the intended robot operation input by the user on the overview input screen 40. FIG. 9 illustrates the initial position of the slider in the specification area 85. In the example in FIG. 9, the specification area 41a is selected in the overview input screen 40. In the first operation overview, the robot holds the workpieces aligned in the in-tray. Thus, the slider in the specification area 85 is thus initially set at the leftmost position.

The in-tray input screen 80 includes a screen 81 showing the in-tray and the workpieces corresponding to the items specified in the specification areas 85 to 87. The screen 81 includes an in-tray image 82 of the in-tray with the size specified in the specification area 86 and a workpiece image 83 of the workpieces in the in-tray corresponding to the items specified in the specification areas 85 and 86.

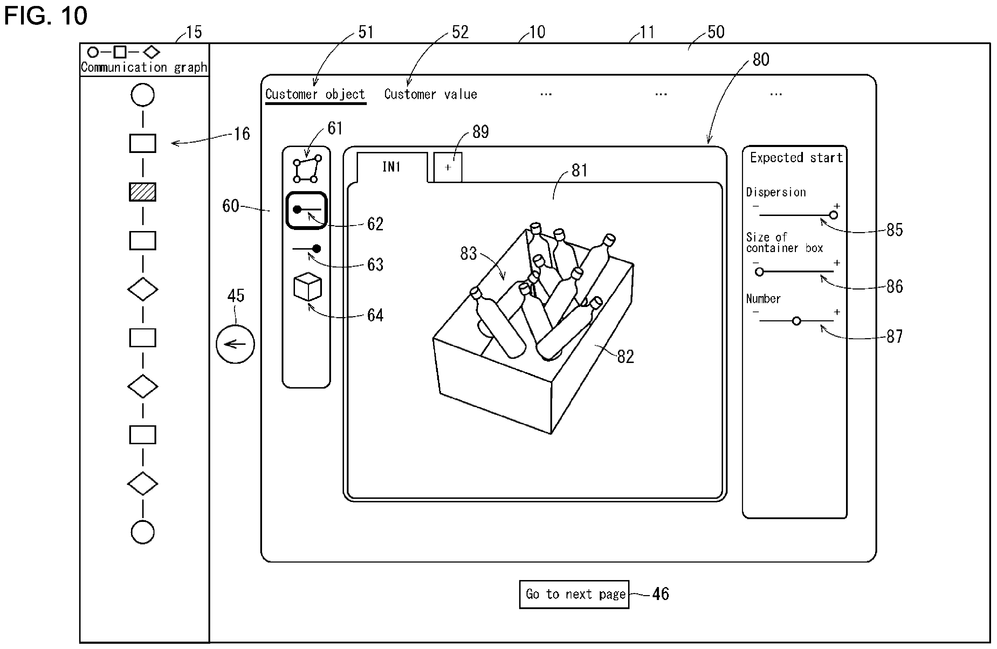

The workpiece image 83 changes based on the in-tray workpiece dispersion specified in the specification area 85. FIG. 10 illustrates the workpiece image 83 obtained when the slider in the specification area 85 is moved right to increase the specified in-tray workpiece dispersion.

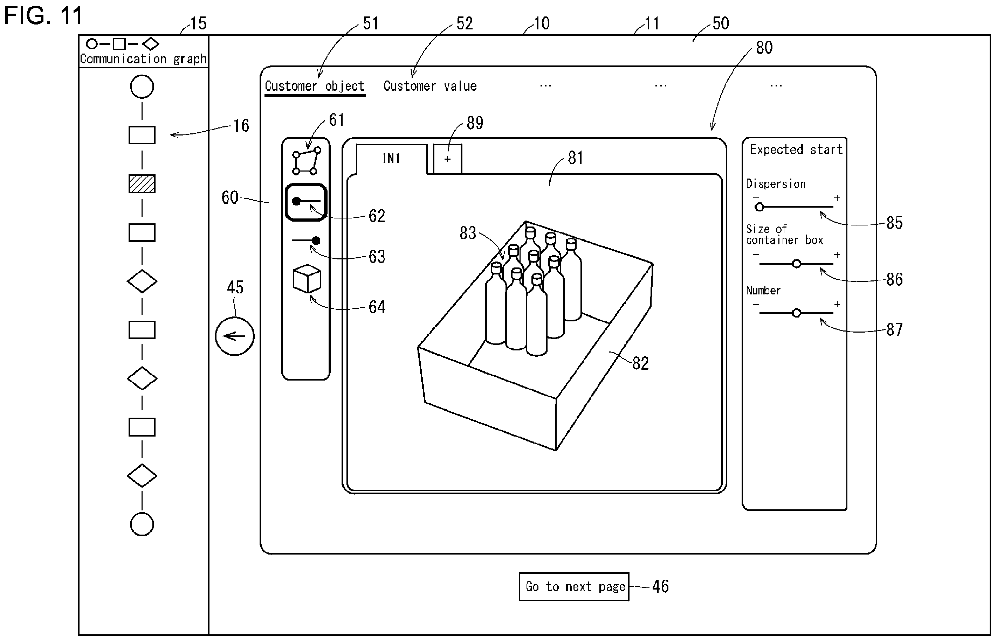

The in-tray image 82 changes based on the size of the in-tray specified in the specification area 86. FIG. 11 illustrates the in-tray image 82 obtained when the slider in the specification area 86 is moved right to increase the specified size of the in-tray.

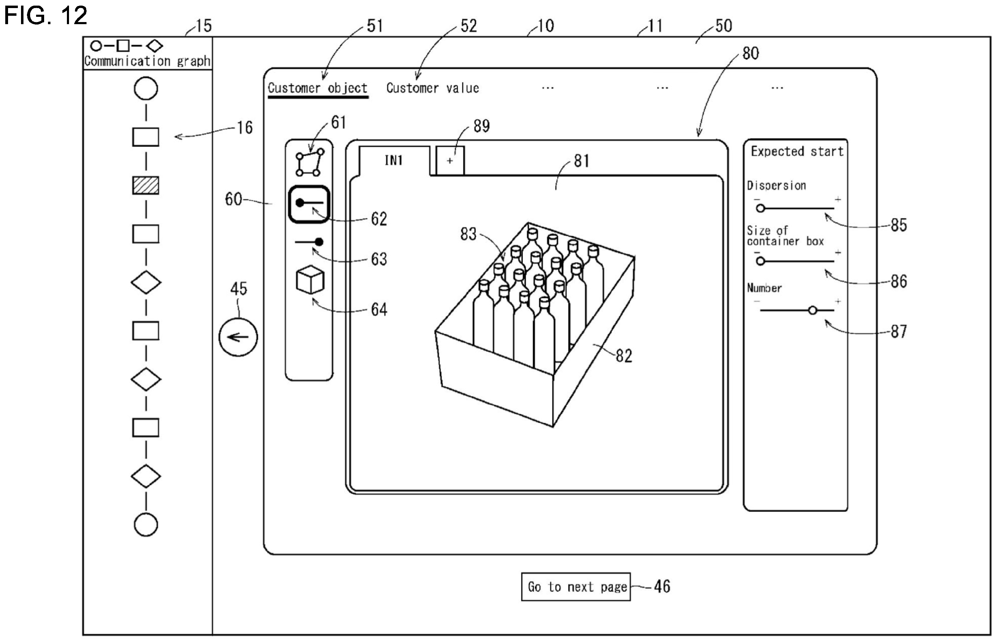

The workpiece image 83 changes based on the number of workpieces in the in-tray specified in the specification area 87. FIG. 12 illustrates the workpiece image 83 obtained when the slider in the specification area 87 is moved right to increase the specified number of workpieces in the in-tray.

The in-tray input screen 80 includes an instruction area 89 for receiving an instruction to add an in-tray as an input target. When use of multiple in-trays is intended in the robot operation, the user selects the instruction area 89. In response to the instruction area 89 being selected, the screen 81 for an additional in-tray appears on the in-tray input screen 80. When the screen 81 for an additional in-tray is displayed, the user can specify items for the additional in-tray in the specification areas 85 to 87.

Each time the instruction area 89 is selected, a new instruction area 89 is added to the in-tray input screen 80. Selecting the new instruction area 89 allows specifying items for the third and subsequent in-trays in the specification areas 85 to 87.

### Example of Out-Tray Input Screen

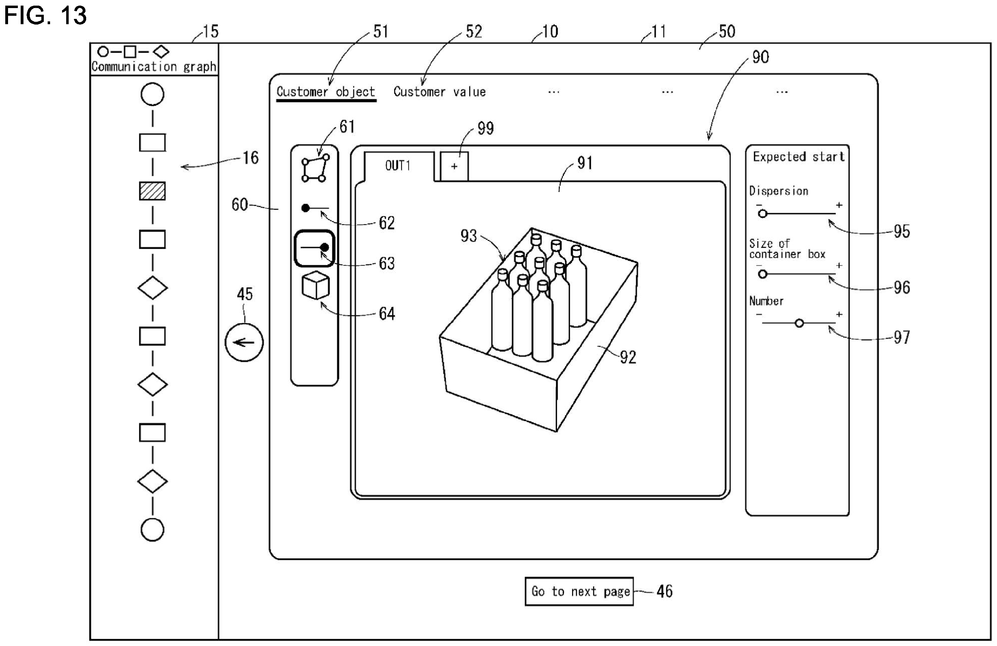

FIG. 13 is a schematic diagram of an example display of an out-tray input screen 90. The out-tray input screen 90 includes specification areas 95 to 97. The specification area 95 is used to specify the degree of dispersion of workpieces in the out-tray (also referred to as an out-tray workpiece dispersion). The specification area 96 is used to specify the size of the out-tray. The specification area 97 is used to specify the number of workpieces in the out-tray.

The specification areas 95 to 97 each include a slider. When the slider in the specification area 95 is at the leftmost position, the workpieces are specified to be aligned in the out-tray.

The initial position of the slider in the specification area 95 is, for example, the position corresponding to the overview of the intended robot operation input by the user on the overview input screen 40. FIG. 13 illustrates the initial position of the slider in the specification area 95. In the example in FIG. 13, the specification area 41a is selected in the overview input screen 40. In the first operation overview, the robot places workpieces in the out-tray in an aligned manner. The slider in the specification area 95 is thus initially set at the leftmost position.

The out-tray input screen 90 includes a screen 91 showing the out-tray and the workpieces corresponding to the items specified in the specification areas 95 to 97. The screen 91 includes an out-tray image 92 of the out-tray with the size specified in the specification area 96 and a workpiece image 93 of the workpieces in the out-tray corresponding to the items specified in the specification areas 95 and 96.

In the same manner as or in a similar manner to the workpiece image 83 included in the in-tray input screen 80, the workpiece image 93 changes based on the out-tray workpiece dispersion specified in the specification area 95. In the same manner as or in a similar manner to the in-tray image 82 included in the in-tray input screen 80, the out-tray image 92 changes based on the size of the out-tray specified in the specification area 96. In the same manner as or in a similar manner to the workpiece image 83, the workpiece image 93 changes based on the number of workpieces in the out-tray specified in the specification area 97.

The out-tray input screen 90 includes an instruction area 99 for receiving an instruction to add an out-tray as an input target. When use of multiple out-trays is intended in the robot operation, the user selects the instruction area 99. In response to the instruction area 99 being selected, the screen 91 for an additional out-tray appears on the out-tray input screen 90. When the screen 91 for an additional out-tray is displayed, the user can specify items for the additional out-tray in the specification areas 95 to 97. Note that the out-tray input screen 90 may allow assigning ordinal numbers for aligning workpieces in the out-tray.

Each time the instruction area 99 is selected, a new instruction area 99 is added to the out-tray input screen 90. Selecting the new instruction area 99 allows specifying items for the third and subsequent out-trays in the specification areas 95 to 97.

### Example of Workpiece Input Screen

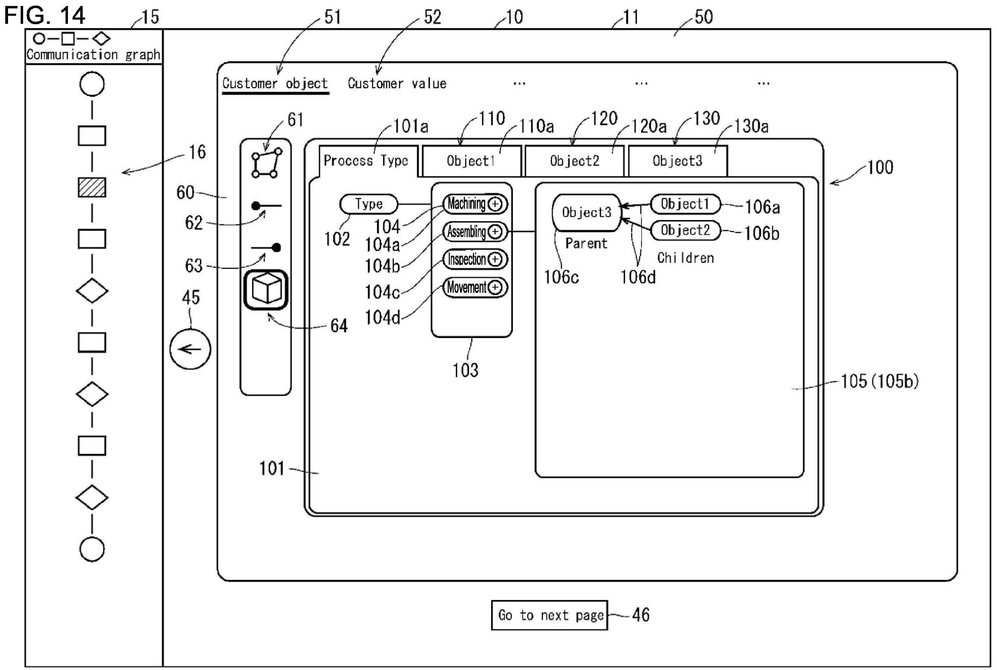

FIG. 14 is a schematic diagram of an example display of a workpiece input screen 100. The workpiece input screen 100 includes a process input screen 101 for receiving requests from the user about the process to be performed on the workpiece between the in-tray and the out-tray. The process input screen 101 includes an instruction area 102 for receiving an instruction to display a specification screen 103 for specifying the type of process (or in other words, the type of processing method) for the workpiece. In response to the instruction area 102 being selected, the specification screen 103 appears as illustrated in FIG. 14.

The specification screen 103 includes multiple specification areas 104 corresponding to different types of processes. The specification areas 104 are each used to specify the type of process corresponding to the specification area 104 as the process to be performed on the workpiece.

The multiple specification areas 104 include, for example, specification areas 104a, 104b, 104c, and 104d. The specification area 104a corresponds to a machining process for machining the workpiece. When the specification area 104a is selected, the machining process is specified as the process to be performed on the workpiece. The specification area 104b corresponds to an assembly process for assembling the workpiece. When the specification area 104b is selected, an assembly process is specified as the process to be performed on the workpiece. The specification area 104c corresponds to an inspection process for inspecting the workpiece. When the specification area 104c is selected, an inspection process is specified as the process to be performed on the workpiece. The specification area 104d corresponds to a movement process for moving the workpiece. When the specification area 104d is selected, a movement process is specified as the process to be performed on the workpiece.

After selecting one of the specification areas 104, the user can specify, through the input unit 5, the process of the type corresponding to the selected specification area 104 in the information processing device 1. The process input screen 101 includes a process-detail screen 105 showing the details of the process specified by the user. FIG. 14 illustrates the process-detail screen 105 (also referred to as a process-detail screen 105a) that appears in response to the specification area 104b corresponding to the assembly process being selected.

For example, after specifying the specification area 104b, the user can specify the details of the assembly through the input unit 5. For example, the user specifies assembling a first object (also referred to as an object 1) and a second object (also referred to as an object 2) together to manufacture a third object (also referred to as an object 3) as a complete product. In this case, the process-detail screen 105a includes a figure 106a representing the first object, a figure 106b representing the second object, and a figure 106c representing the third object, as illustrated in FIG. 14. The process-detail screen 105a also includes arrows 106d indicating that the first object and the second object are assembled together to complete the third object.

In response to the user specifying the first object and the second object as assembling targets, the display unit 4 is ready to display, on the workpiece input screen 100, a first-object input screen 110 for receiving an input of the details of the first object and a second-object input screen 120 for receiving an input of the details of the second object. In response to the user specifying the third object as a complete product, the display unit 4 is ready to display a third-object input screen 130 for receiving an input of the details of the third object on the workpiece input screen 100.

The first-object input screen 110 includes an instruction area 110a for receiving an instruction to display the entire first-object input screen 110 when the entire first-object input screen 110 is not displayed. The second-object input screen 120 includes an instruction area 120a for receiving an instruction to display the entire second-object input screen 120 when the entire second-object input screen 120 is not displayed. The third-object input screen 130 includes an instruction area 130a for receiving an instruction to display the entire third-object input screen 130 when the entire third-object input screen 130 is not displayed.

In the same manner as or in a similar manner to, for example, the first-object input screen 110, the process input screen 101 includes an instruction area 101a for receiving an instruction to display the entire process input screen 101 when the entire process input screen 101 is not displayed.

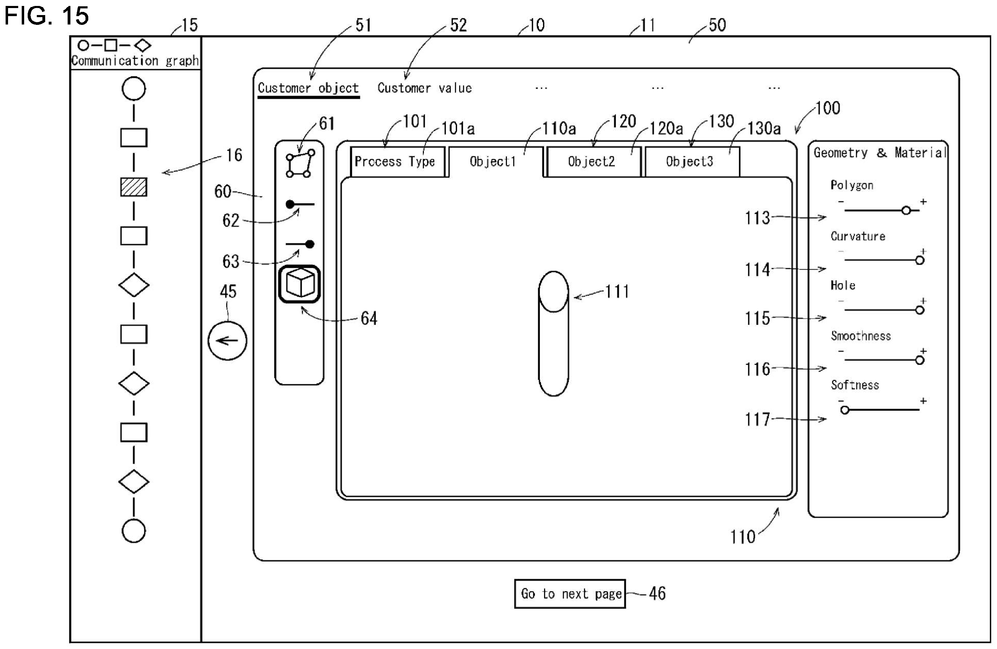

In response to the first object being specified on the process input screen 101, the instruction area 110a of the first-object input screens 110 alone appears on the workpiece input screen 100, as illustrated in FIG. 14. More specifically, in response to the instruction area 110a being selected with the first-object input screen 110 being not entirely displayed as in FIG. 14, the entire first-object input screen 110 appears on the workpiece input screen 100 as illustrated in FIG. 15. In this state, the portions of the process input screen 101, the second-object input screen 120, and the third-object input screen 130 other than the instruction area 101a, the instruction area 120a, and the instruction area 130a are not displayed.

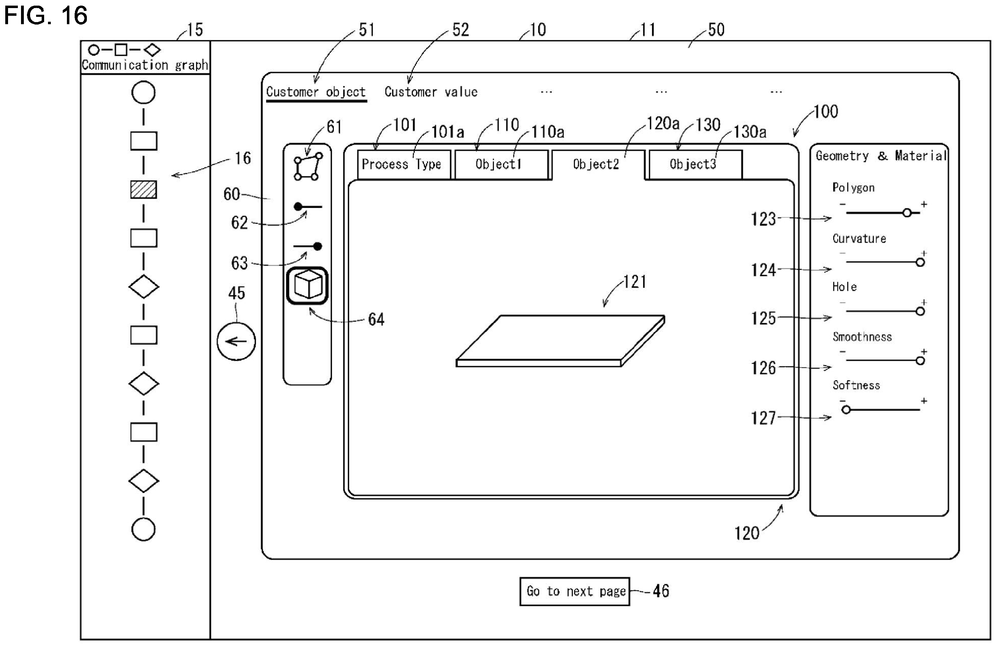

In response to the second object being specified on the process input screen 101, the instruction area 120a of the second-object input screen 120 alone appears on the workpiece input screen 100, as illustrated in FIG. 14. More specifically, in response to the instruction area 120a being selected with the second-object input screen 120 being not entirely displayed as in FIG. 14, the entire second-object input screen 120 appears on the workpiece input screen 100 as illustrated in FIG. 16. In this state, the portions of the process input screen 101, the first-object input screen 110, and the third-object input screen 130 other than the instruction area 101a, the instruction area 110a, and the instruction area 130a are not displayed.

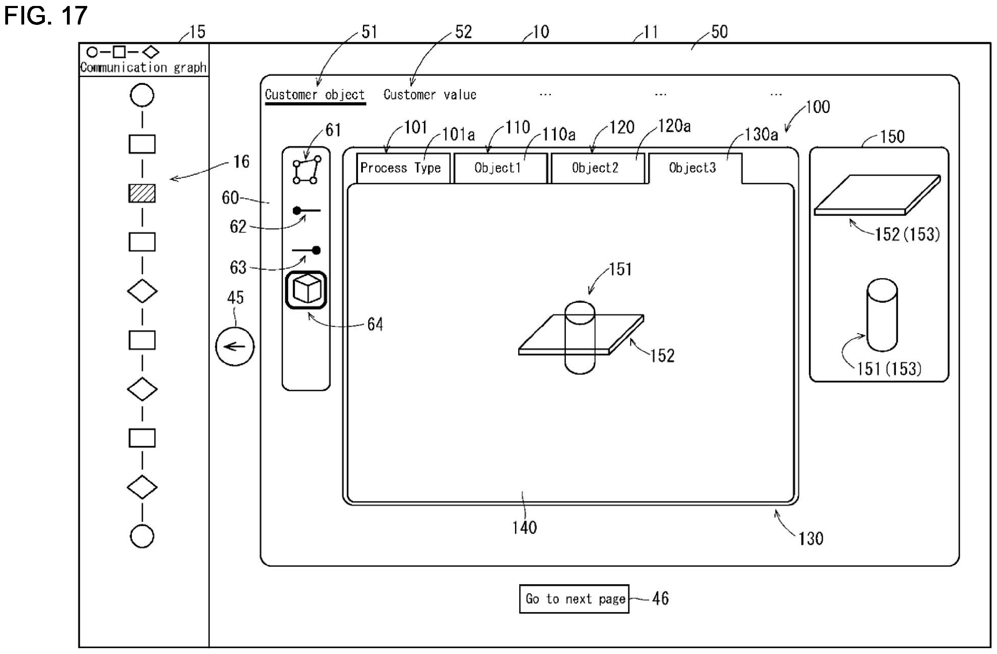

In response to the third object being specified on the process input screen 101, the instruction area 130a of the third-object input screen 130 alone appears on the workpiece input screen 100, as illustrated in FIG. 14. More specifically, in response to the instruction area 130a being selected with the third-object input screen 130 being not entirely displayed as in FIG. 14, the entire third-object input screen 130 appears on the workpiece input screen 100 as illustrated in FIG. 17. In this state, the portions of the process input screen 101, the first-object input screen 110, and the second-object input screen 120 other than the instruction area 101a, the instruction area 110a, and the instruction area 120a are not displayed.

In response to the instruction area 101a being selected with the process input screen 101 being not entirely displayed as in FIGs. 15 to 17, the entire process input screen 101 appears on the workpiece input screen 100 as illustrated in FIG. 14.

### Example of First-Object Input Screen

The first-object input screen 110 is used to specify, for example, the geometry and the material of the first object to be assembled. As illustrated in FIG. 15, the first-object input screen 110 includes specification areas 113 to 117. The specification area 113 is used to specify the number of corners in the outline of the first object (in other words, the degree of polygonality). The specification area 114 is used to specify the curvature in the outline of the first object. The specification area 115 is used to specify the number of holes in the first object. The specification area 116 is used to specify the surface smoothness of the first object. The specification area 117 is used to specify the softness of the first object. The specification areas 113 to 117 each include a slider.

The first-object input screen 110 includes a first-object image 111 representing the first object corresponding to the items specified in the specification areas 113 to 117. The first-object image 111 changes based on the items specified in the specification areas 113 to 117.

### Example of Second-Object Input Screen

The second-object input screen 120 is used to specify, for example, the geometry and the material of the second object to be assembled. As illustrated in FIG. 16, the second-object input screen 120 includes specification areas 123 to 127. The specification area 123 is used to specify the number of corners in the outline of the second object. The specification area 124 is used to specify the curvature in the outline of the second object. The specification area 125 is used to specify the number of holes in the second object. The specification area 126 is used to specify the surface smoothness of the second object. The specification area 127 is used to specify the softness of the second object. The specification areas 123 to 127 each include a slider.

The second-object input screen 120 includes a second-object image 121 representing the second object corresponding to the items specified in the specification areas 123 to 127. The second-object image 121 changes based on the items specified in the specification areas 123 to 127.

### Example of Third-Object Input Screen

The third-object input screen 130 is used to specify, for example, the method for assembling the third object. As illustrated in FIG. 17, the third-object input screen 130 includes an object-image staging area 150. The object-image staging area 150 includes a first-object image 151 representing the first object with the geometry and the material specified on the first-object input screen 110 and a second-object image 152 representing the second object with the geometry and the material specified on the second-object input screen 120. The first-object image 151 and the second-object image 152 may hereafter be each referred to as an object image 153 without being distinguished from each other.

The third-object input screen 130 includes an assembly method specifying screen 140 used to specify the assembly method for the third object. The user can move the object image 153 in the object-image staging area 150 to the assembly method specifying screen 140 by performing a predetermined input on the input unit 5. The object image 153 may be moved to the assembly method specifying screen 140 by, for example, drag and drop.

For example, the second-object image 152 is placed on the assembly method specifying screen 140. When the first-object image 151 is overlaid on the second-object image 152 as illustrated in FIG. 17, this specifies combining the second object and the first object to manufacture the third object. Note that the first-object image 151 may be placed on the assembly method specifying screen 140 before the second-object image 152 is overlaid on the first-object image 151. For a second object including an area on which multiple first objects can be overlaid, the order in which multiple first objects are overlaid on the second object may be pre-input into the information processing device 1 to allow the multiple first-object images 151 to be overlaid on the second-object image 152 automatically on the assembly method specifying screen 140.

In this manner, the user can specify the assembly method for the third object using the third-object input screen 130.

The operation of the information processing device 1 is described below. The operation is performed in response to the workpiece input screen 100 receiving a specification to assemble the first object and the second object together to manufacture the third object. Example of Priority Input Screen

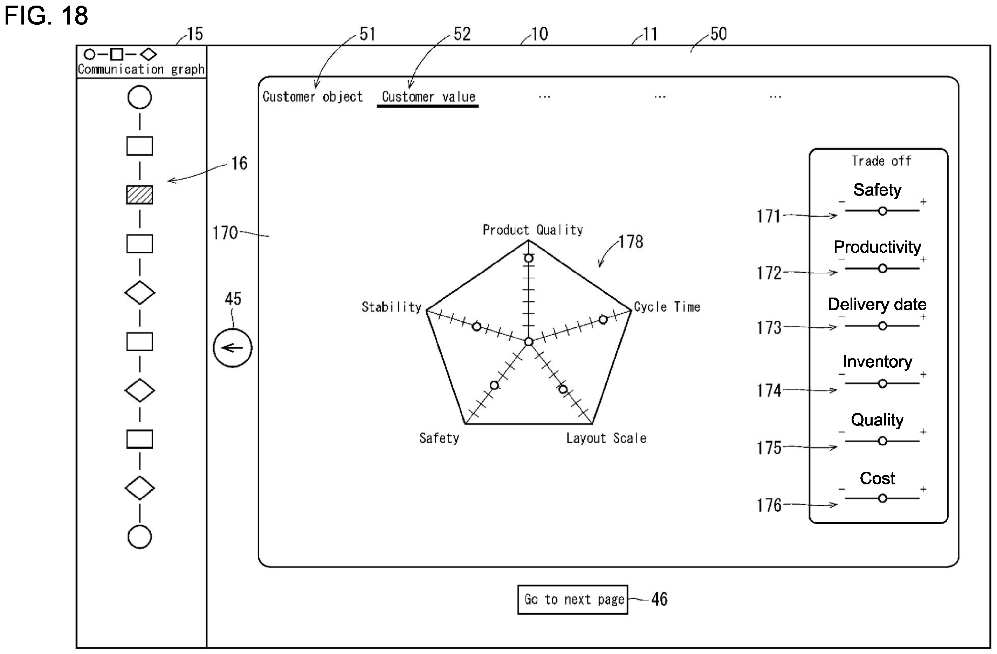

FIG. 18 is a schematic diagram of an example display of the priority input screen 170 that appears in response to the instruction area 52 included in the detail input screen 50 being selected.

The priority input screen 170 includes, for example, specification areas 171 to 176. The specification area 171 is used to specify the priority level for the safety of the robot operation. The specification area 172 is used to specify the priority level for the productivity of the robot operation. The specification area 173 is used to specify the priority level for the delivery date of the products (e.g., third objects) to be produced in the robot operation. The specification area 174 is used to specify the priority level for the inventory of the products to be produced in the robot operation. The specification area 175 is used to specify the priority level for the quality of the products to be produced in the robot operation. The specification area 176 is used to specify the priority level for the cost of the products to be produced in the robot operation. The specification areas 171 to 176 each include a slider.

To place higher priority on the safety of the robot operation, for example, the user moves the slider in the specification area 171 to the right. To place higher priority on the productivity of the robot operation, for example, the user moves the slider in the specification area 172 to the right. To place higher priority on a shorter delivery time of the products to be produced in the robot operation, for example, the user moves the slider in the specification area 173 to the left. To place higher priority on a lower inventory of the products to be produced in the robot operation, for example, the user moves the slider in the specification area 173 to the left. To place higher priority on the quality of the products to be produced in the robot operation, for example, the user moves the slider in the specification area 175 to the right. To place higher priority on the lower cost of the products to be produced in the robot operation, the user moves the slider in the specification area 176 to the left.

The priority input screen 170 also includes, for example, a radar chart 178 that indicates evaluation metrics for the robot operation based on the priority contents specified in the specification areas 171 to 176. The evaluation metrics for the robot operation are hereafter referred to as operation evaluation metrics.

In this example, five operation evaluation metrics are used. The five operation evaluation metrics include, for example, a success metric indicating the degree of success of the robot operation, an operation time metric indicating the operation time of the robot operation, a motion range metric indicating the range in which the robot can move in a workspace usable for the robot operation, a psychological safety metric indicating the psychological safety for humans during the robot operation, and a stability metric indicating the stability of the robot motion in the robot operation. The psychological safety for humans during the robot operation refers to the safety for the operators around the robot against auditory or visual stress caused by robot operation sounds and arm movements crossing the operator's visual field. The priority input screen 170 shows the radar chart 178 indicating the success metric, the operation time metric, the motion range metric, the psychological safety metric, and the stability metric. The success metric, the operation time metric, the motion range metric, the psychological safety metric, and the stability metric are each expressed by, for example, a numerical value greater than or equal to 0 and less than or equal to 1.

In this example, the success metric, the operation time metric, the motion range metric, the psychological safety metric, and the stability metric are respectively indicated as, for example, "Product quality", "Cycle time", "Layout scale", "Safety", and "Stability" on the screen displayed on the display unit 4. The success metric, the operation time metric, the motion range metric, the psychological safety metric, and the stability metric are hereafter collectively referred to as robot KPIs. KPI is an abbreviation for key performance indicator.

The controller 2 in the information processing device 1 determines the robot KPIs indicated on the priority input screen 170 based on, for example, the items specified in the specification areas 171 to 176. The controller 2 quantifies, for example, each of the items specified in the six specification areas 171 to 176. The controller 2 then determines the success metric, the operation time metric, the motion range metric, the psychological safety metric, and the stability metric based on the obtained six numerical values. For example, the controller 2 may use the sum of weighted values of the six numerical values as the success metric. In this case, the storage 3 prestores the weighting coefficients. The operation time metric, the motion range metric, the psychological safety metric, and the stability metric may also be determined in the same or a similar manner.

In the manner described above, the user inputs, into the information processing device 1, the requests about the in-tray, the out-tray, and the workpieces and the priority contents for the robot operation using the object input screen 60 and the priority input screen 170. The user then selects the instruction area 46 included in the detail input screen 50. In response to the instruction area 46 being selected, a reference input screen 180 appears on the main screen 11 to receive an input of a reference position used in the robot operation from the user. In response to the instruction area 45 included in the detail input screen 50 being selected, the interaction returns by one stage, and the overview input screen 40 appears on the main screen 11.

### Example of Reference Input Screen

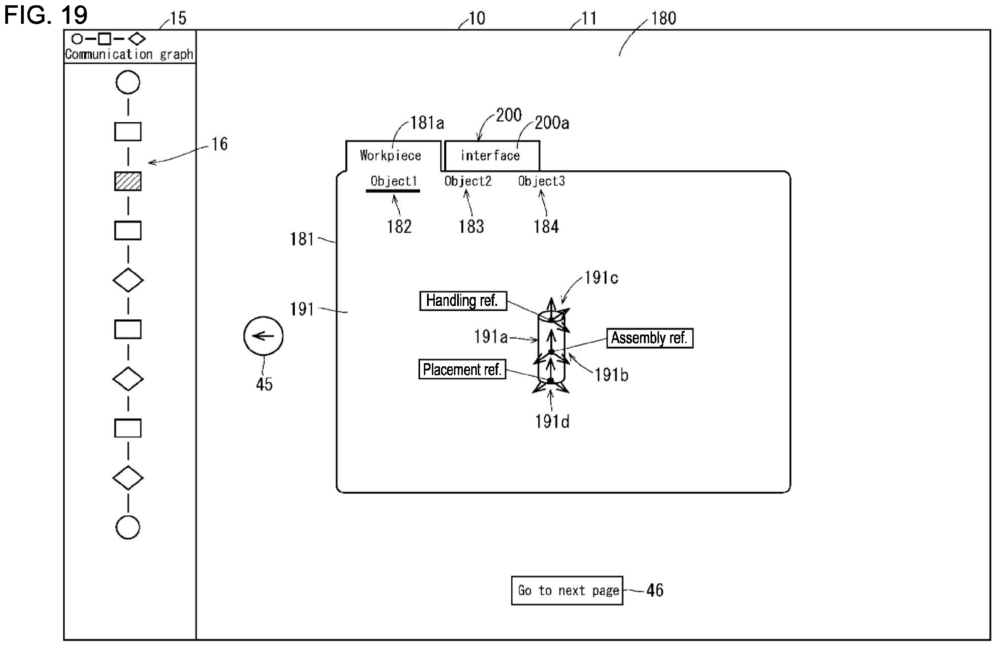

FIG. 19 is a schematic diagram of an example display of the application screen 10 including the reference input screen 180. The reference input screen 180 includes the instruction areas 45 and 46. The reference input screen 180 also includes a workpiece reference input screen 181 for receiving an input of a reference position of the workpiece from the user. FIG. 19 illustrates the workpiece reference input screen 181 displayed when the user intends to manufacture the third object by assembling the first object and the second object together as in the example in FIGs. 14 to 17.

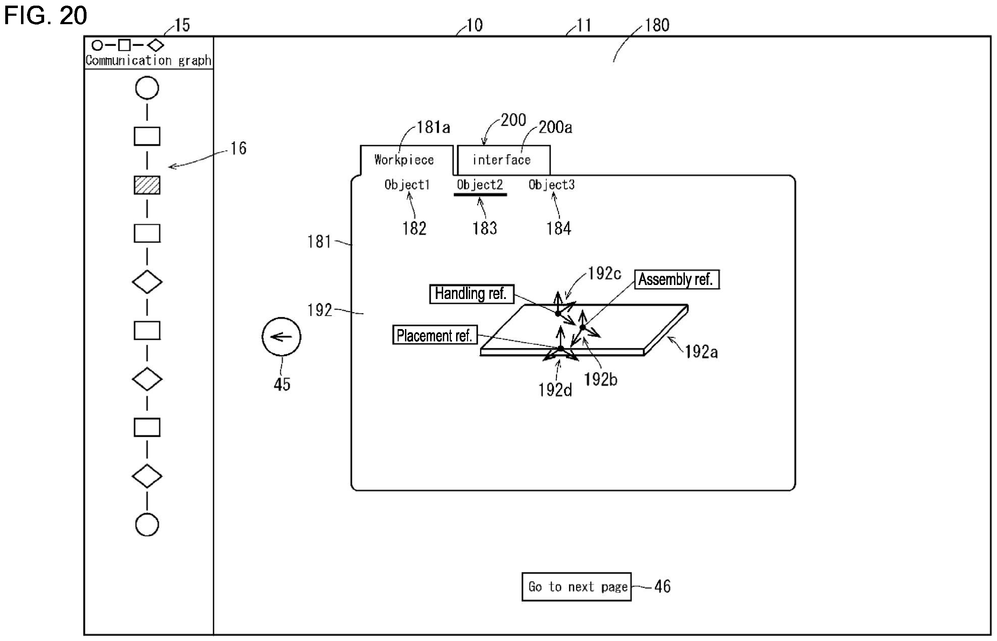

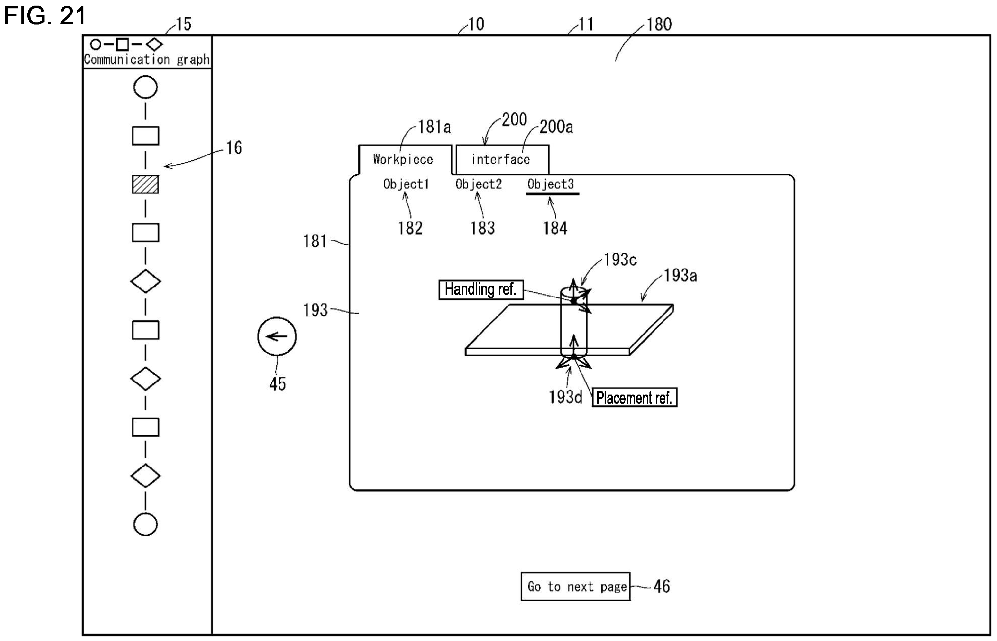

The workpiece reference input screen 181 includes, for example, instruction areas 182 to 184. The instruction area 182 receives an instruction to display a first-object reference input screen 191 for receiving an input of a reference position to be set for the first object. In response to the instruction area 182 being selected, the first-object reference input screen 191 appears on the workpiece reference input screen 181 as illustrated in FIG. 19. The instruction area 183 receives an instruction to display a second-object reference input screen 192 for receiving an input of a reference position to be set for the second object. In response to the instruction area 183 being selected, the second-object reference input screen 192 appears on the workpiece reference input screen 181 as illustrated in FIG. 20. The instruction area 184 receives an instruction to display a third-object reference input screen 193 for receiving an input of a reference position to be set for the third object. In response to the instruction area 184 being selected, the third-object reference input screen 193 appears on the workpiece reference input screen 181 as illustrated in FIG. 21.

### Example of First-Object Reference Input Screen

The first-object reference input screen 191 allows specifying the position of the first object to be held by the robot, an assembly reference position of the first object for assembling the first object and the second object together, and a placement reference position of the first object for placing the first object in a tray. The position of the object to be held by the robot may hereafter be referred to as a holding reference position or a handling reference position.

As described later, the second-object reference input screen 192 allows specifying an assembly reference position of the second object for assembling the first object and the second object together. In this example, the first object and the second object are assembled together to have the assembly reference position of the first object aligned with the assembly reference position of the second object.

To place first objects in a tray in an aligned manner, the user can specify a placement reference position of the tray for placing each of the first objects in the tray, as described later. In this example, for placing first objects in a tray in an aligned manner, the first objects are placed in the tray to have the placement reference position of each of the first objects matching the placement reference position of the tray. Note that the application screen 10 may allow the user to indicate whether to align objects physically or in a logical order when applying rules for placing the objects in a manner aligned with the placement reference positions.

As illustrated in FIG. 19, the first-object reference input screen 191 includes a first-object image 191a representing the first object. The first-object reference input screen 191 also includes a coordinate system figure 191c representing a three-dimensional coordinate system for specifying the holding reference position (in other words, the handling reference position). The user can move the coordinate system figure 191c on the first-object reference input screen 191 by performing a predetermined input on the input unit 5. An origin portion of the coordinate system figure 191c indicating the origin in the coordinate system figure 191c is overlaid on the first-object image 191a to specify the holding reference position of the first object. The origin portion of the coordinate system figure 191c on the first-object image 191a indicates the holding reference position (in other words, the handling reference position) of the first object.

Note that the orientation of the coordinate system figure 191c may indicate the orientation of the first object when held by the robot. In this case, the user may specify the orientation of the first object when held by the robot by setting the orientation of the coordinate system figure 191c through the input unit 5. Note that the orientation of the coordinate system figure 191c may be used in specifying other information.

The first-object reference input screen 191 includes a coordinate system figure 191b representing a three-dimensional coordinate system for specifying the assembly reference position of the first object. The user can move the coordinate system figure 191b on the first-object reference input screen 191 by performing a predetermined input on the input unit 5. An origin portion of the coordinate system figure 191b indicating the origin in the coordinate system figure 191b is overlaid on the first-object image 191a to specify the assembly reference position of the first object. The position of the origin portion of the coordinate system figure 191b on the first-object image 191a indicates the assembly reference position of the first object.

Note that the orientation of the coordinate system figure 191b may indicate the orientation of the first object when the first object is assembled with the second object by the robot. In this case, the user may specify the orientation of the assembled first object by setting the orientation of the coordinate system figure 191b through the input unit 5. Note that the orientation of the coordinate system figure 191b may be used to specify other information.

The first-object reference input screen 191 includes a coordinate system figure 191d representing a three-dimensional coordinate system for specifying the placement reference position of the first object for placing the first object in the tray. The user can move the coordinate system figure 191d on the first-object reference input screen 191 by performing a predetermined input on the input unit 5. An origin portion of the coordinate system figure 191d indicating the origin in the coordinate system figure 191d is overlaid on the first-object image 191a to specify the placement reference position of the first object. The position of the origin portion of the coordinate system figure 191d on the first-object image 191a indicates the placement reference position of the first object.

Note that the orientation of the coordinate system figure 191d may indicate the orientation of the first object placed in the tray. In this case, the user may specify the orientation of the first object placed in the tray by setting the orientation of the coordinate system figure 191d through the input unit 5. Note that the orientation of the coordinate system figure 191d may be used to specify other information.

### Example of Second-Object Reference Input Screen

The second-object reference input screen 192 allows specifying the holding reference position of the second object, the assembly reference position of the second object for assembling the first object and the second object together, and the placement reference position of the second object for placing the second object in the tray. To place second objects in a tray in an aligned manner, the user can specify the placement reference position of the tray for placing each of the second objects in the tray, as described later. In this example, for placing second objects in a tray in an aligned manner, the second objects are placed in the tray to have the placement reference position of each of the second objects matching the placement reference position of the tray.

As illustrated in FIG. 20, the second-object reference input screen 192 includes a second-object image 192a representing the second object. The second-object reference input screen 191 also includes a coordinate system figure 192c representing a three-dimensional coordinate system for specifying the holding reference position (in other words, the handling reference position). The user can move the coordinate system figure 192c on the second-object reference input screen 192 by performing a predetermined input on the input unit 5. An origin portion of the coordinate system figure 192c indicating the origin in the coordinate system figure 192c is overlaid on the second-object image 192a to specify the holding reference position of the second object. The position of the origin portion of the coordinate system figure 192c on the second-object image 192a indicates the holding reference position (in other words, the handling reference position) of the second object.

Note that the orientation of the coordinate system figure 192c may indicate the orientation of the second object when held by the robot. In this case, the user may specify the orientation of the second object when held by the robot by setting the orientation of the coordinate system figure 192c through the input unit 5. Note that the orientation of the coordinate system figure 192c may be used to specify other information.

The second-object reference input screen 192 includes a coordinate system figure 192b representing a three-dimensional coordinate system for specifying the assembly reference position of the second object. The user can move the coordinate system figure 192b on the second-object reference input screen 191 by performing a predetermined input on the input unit 5. An origin portion of the coordinate system figure 192b indicating the origin in the coordinate system figure 192b is overlaid on the second-object image 192a to specify the assembly reference position of the second object. The position of the origin portion of the coordinate system figure 192b on the second-object image 192a indicates the assembly reference position of the second object.

Note that the orientation of the coordinate system figure 192b may indicate the orientation of the second object when the second object is assembled with the first object by the robot. In this case, the user may specify the orientation of the assembled second object by setting the orientation of the coordinate system figure 192b through the input unit 5. Note that the orientation of the coordinate system figure 192b may be used to specify other information.

The second-object reference input screen 192 includes a coordinate system figure 192d representing a three-dimensional coordinate system for specifying the placement reference position of the second object for placing the second object in the tray. The user can move the coordinate system figure 192d on the second-object reference input screen 192 by performing a predetermined input on the input unit 5. An origin portion of the coordinate system figure 192d indicating the origin in the coordinate system figure 192d is overlaid on the second-object image 192a to specify the placement reference position of the second object. The position of the origin portion of the coordinate system figure 192d on the second-object image 192a indicates the placement reference position of the second object.

Note that the orientation of the coordinate system figure 192d may indicate the orientation of the second object placed in the tray. In this case, the user may specify the orientation of the second object placed in the tray by setting the orientation of the coordinate system figure 192d through the input unit 5. Note that the orientation of the coordinate system figure 192d may be used to specify other information.

### Example of Third-Object Reference Input Screen

The third-object reference input screen 193 allows specifying the holding reference position of the third object to be manufactured through assembling the first object and the second object together, and the placement reference position of the third object for placing the third object in the tray. As described later, the user can specify the placement reference position of the tray for placing the third object in the tray. In this example, the third object is placed in the tray to have the placement reference position of the third object matching the placement reference position of the tray.

As illustrated in FIG. 21, the third-object reference input screen 193 includes a third-object image 193a representing the third object, or specifically, the first object and the second object that are assembled together. The third-object reference input screen 193 also includes a coordinate system figure 192c representing a three-dimensional coordinate system for specifying the holding reference position of the third object. The user can move the coordinate system figure 193c on the third-object reference input screen 193 by performing a predetermined input on the input unit 5. An origin portion of the coordinate system figure 193c indicating the origin in the coordinate system figure 193c is overlaid on the third-object image 193a to specify the holding reference position of the third object. The position of the origin portion of the coordinate system figure 193c on the third-object image 193a indicates the holding reference position (in other words, the handling reference position) of the third object.

Note that the orientation of the coordinate system figure 193c may indicate the orientation of the third object when held by the robot. In this case, the user may specify the orientation of the third object when held by the robot by setting the orientation of the coordinate system figure 193c through the input unit 5. Note that the orientation of the coordinate system figure 193c may be used to specify other information.

The third-object reference input screen 193 includes a coordinate system figure 193b representing a three-dimensional coordinate system for specifying the placement reference position of the third object. The user can move the coordinate system figure 193b on the third-object reference input screen 193 by performing a predetermined input on the input unit 5. An origin portion of the coordinate system figure 193b indicating the origin in the coordinate system figure 193b is overlaid on the third-object image 193a to specify the assembly reference position of the third object. The position of the origin portion of the coordinate system figure 193b on the third-object image 193a indicates the placement reference position of the third object.

Note that the orientation of the coordinate system figure 193b may indicate the orientation of the third object placed in the tray. In this case, the user may specify the orientation of the third object placed in the tray by setting the orientation of the coordinate system figure 193b through the input unit 5. Note that the orientation of the coordinate system figure 193b may be used to specify other information.

The display unit 4 can display, on the reference input screen 180, a tray reference input screen 200 for receiving inputs of reference positions of the in-tray and the out-tray from the user, in addition to the workpiece reference input screen 181.

The tray reference input screen 200 includes an instruction area 200a for receiving an instruction to display the entire tray reference input screen 200 when the tray reference input screen 200 is not entirely displayed.

The workpiece reference input screen 181 includes an instruction area 181a for receiving an instruction to display the entire workpiece reference input screen 181 when the workpiece reference input screen 181 is not entirely displayed.

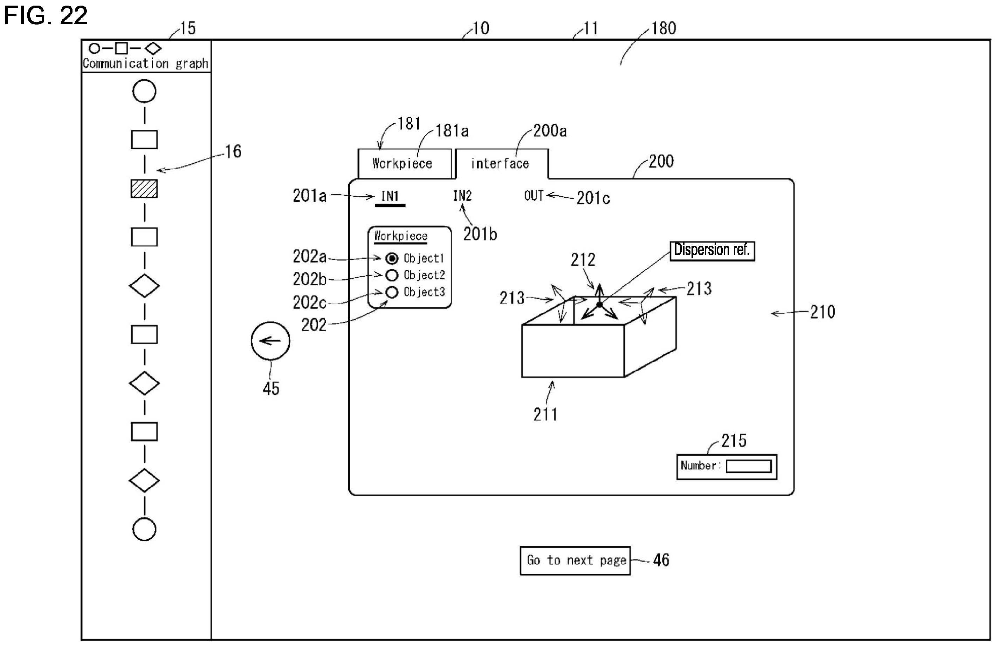

As illustrated in, for example, FIG. 19, when the entire workpiece reference input screen 181 is displayed, the tray reference input screen 200 displays the instruction area 182a. In response to the instruction area 200a being selected in this state, the entire tray reference input screen 200 appears as illustrated in FIG. 22, whereas the instruction area 181a alone appears for the workpiece reference input screen 181. In response to the instruction area 181a being selected in this state, the entire workpiece reference input screen 181 appears as illustrated in, for example, FIG. 19, whereas the instruction area 200a alone appears for the tray reference input screen 200.

### Example of Tray Reference Input Screen

FIG. 22 illustrates an example of the tray reference input screen 200 that appears in response to requests about two trays, or specifically, a first in-tray and a second in-tray, being received on the in-tray input screen 80 described above. More specifically, FIG. 22 illustrates an example of the tray reference input screen 200 that appears in response to a request for using two in-trays being received from the user. The operation of the information processing device 1 described below is an operation performed in response to the in-tray input screen 80 receiving requests about the first in-tray and the second in-tray.

The tray reference input screen 200 includes, for example, instruction areas 201a, 201b, and 201c. The instruction area 201a receives an instruction to display a first-in-tray reference input screen 210 for receiving an input of the reference position of the first in-tray from the user. In response to the instruction area 201a being selected, the first-in-tray reference input screen 210 appears on the tray reference input screen 200 as illustrated in FIG. 22.

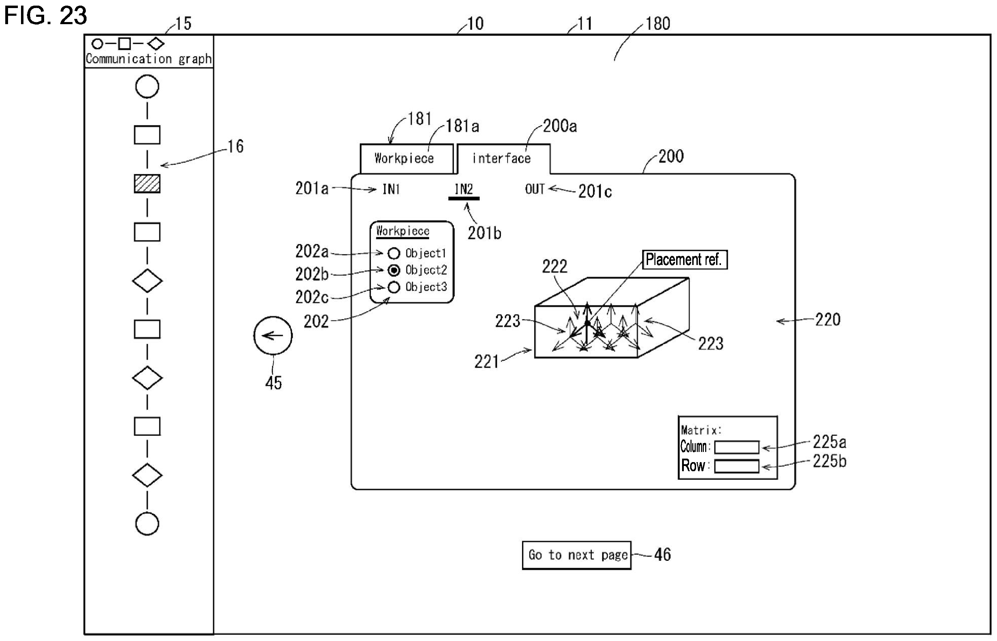

The instruction area 201b receives an instruction to display a second-in-tray reference input screen 220 for receiving an input of the reference position of the second in-tray from the user. In response to the instruction area 201b being selected, the second-in-tray reference input screen 220 appears on the tray reference input screen 200 as illustrated in FIG. 23.

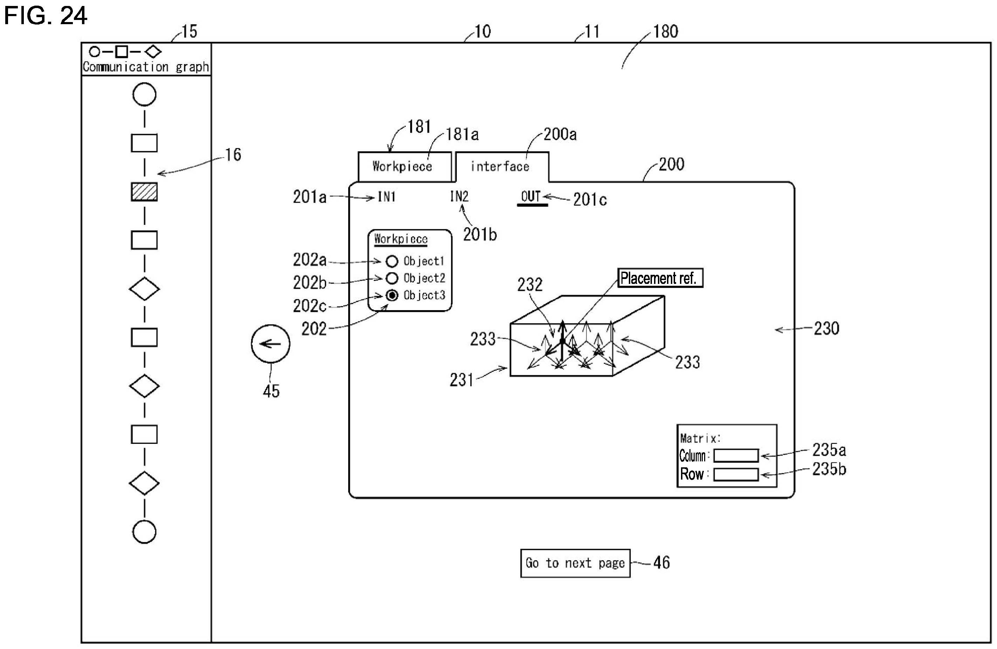

The instruction area 201c receives an instruction to display an out-tray reference input screen 230 for receiving an input of the reference position of the out-tray from the user. In response to the instruction area 201c being selected, the out-tray reference input screen 230 appears on the tray reference input screen 200 as illustrated in FIG. 24.

The tray reference input screen 200 also includes multiple specification areas 202. Each of the specification areas 202 is associated with a workpiece. Each of the specification areas 202 is used to specify the corresponding workpiece as a workpiece to be placed in the tray.

The multiple specification areas 202 include a specification area 202a corresponding to the first object, a specification area 202b corresponding to the second object, and a specification area 202c corresponding to the third object. Selecting the specification area 202a specifies the first object as a workpiece to be placed in the tray. Selecting the specification area 202b specifies the second object as a workpiece to be placed in the tray. Selecting the specification area 202c specifies the third object as a workpiece to be placed in the tray.

Note that multiple specification areas 202 may be selected repeatedly. In this case, the multiple specification areas 202 may be selected automatically based on structural logic information, such as sorting the multiple specification areas 202 in order of the object number, automatically arranging the specification areas 202 into 3 × 2 or 3 × 3 grids, and filling these grids from the upper left to the right. The specification areas 202 may also be selected automatically based on table data indicating the relationship between each of the specification areas 202 and a z-th object (z is an integer greater than or equal to 1).

When one of the specification areas 202 is selected on the first-in-tray reference input screen 210, the object corresponding to the selected specification area 202 is specified as a workpiece to be placed in the first in-tray. For example, when the specification area 202a is selected on the first-in-tray reference input screen 210, the first object corresponding to the selected specification area 202a is specified as a workpiece to be placed in the first in-tray.

When one of the specification areas 202 is selected on the second-in-tray reference input screen 220, the object corresponding to the selected specification area 202 is specified as a workpiece to be placed in the second in-tray. For example, when the specification area 202b is selected on the second-in-tray reference input screen 220, the second object corresponding to the selected specification area 202b is specified as a workpiece to be placed in the second in-tray.

When one of the specification areas 202 is selected on the out-tray reference input screen 230, the object corresponding to the selected specification area 202 is specified as a workpiece to be placed in the out-tray. For example, when the specification area 202c is selected on the out-tray reference input screen 230, the third object corresponding to the selected specification area 202c is specified as a workpiece to be placed in the out-tray. Example of First-In-Tray Reference Input Screen

FIG. 22 illustrates an example in which the specification area 202a corresponding to the first object is selected on the first-in-tray reference input screen 210. The first-in-tray reference input screen 210 includes a first in-tray image 211 representing the first in-tray.

In this example, the slider in the specification area 85 on the in-tray input screen 80 described above is positioned rightward from the left end to specify dispersed placement of workpieces in the first in-tray. More specifically, workpieces are specified to be placed randomly in the first in-tray. In this case, the first-in-tray reference input screen 210 includes a coordinate system figure 212 representing a three-dimensional coordinate system for specifying a dispersion reference position of the workpieces in the first in-tray. In this example, the workpieces are dispersed outward from the dispersion reference position in the first in-tray.

The user can move the coordinate system figure 212 on the first-in-tray reference input screen 210 by performing a predetermined input on the input unit 5. An origin portion of the coordinate system figure 212 indicating the origin in the coordinate system figure 212 is overlaid on the first-in-tray image 211 to specify the dispersion reference position of the first in-tray. The origin portion of the coordinate system figure 212 on the first in-tray image 211 indicates the dispersion reference position of the first in-tray.

To show dispersed placement of workpieces in the first in-tray, the first-in-tray reference input screen 210 includes, in addition to the coordinate system figure 212, multiple coordinate system figures 213 representing three-dimensional coordinate systems orientated differently from the coordinate system figure 212.

When dispersed placement of workpieces in the first in-tray is specified, the first-in-tray reference input screen 210 displays an input area 215 for receiving an input of the number of workpieces in the first in-tray. In the example in FIG. 22, with the specification area 202a being selected, the number of first objects in the first in-tray can be input into the input area 215. The user can select the input area 215 to input the number of workpieces in the first in-tray into the information processing device 1. In response to the user performing an input of the number of workpieces in the first in-tray on the input unit 5, the input area 215 shows the input numerical value.

### Example of Second-In-Tray Reference Input Screen

FIG. 23 illustrates an example in which the specification area 202b corresponding to the second object is selected on the second-in-tray reference input screen 220. The second-in-tray reference input screen 220 includes a second in-tray image 221 representing the second in-tray.

In this example, the slider in the specification area 85 on the in-tray input screen 80 described above is positioned at the left end to specify aligned placement of workpieces in the second in-tray. In this case, the second-in-tray reference input screen 220 includes a coordinate system figure 222 representing a three-dimensional coordinate system for specifying the placement reference position of the second in-tray. In this example, for placing second objects in the second in-tray in an aligned manner, the second objects are placed in the second in-tray to have the placement reference position of each of the second objects matching the placement reference position of the second in-tray.

The user can move the coordinate system figure 222 on the second-in-tray reference input screen 220 by performing a predetermined input on the input unit 5. An origin portion of the coordinate system figure 222 indicating the origin in the coordinate system figure 222 is overlaid on the second-in-tray image 221 to specify the placement reference position of the second in-tray. The position of the origin portion of the coordinate system figure 222 on the second in-tray image 221 indicates the placement reference position of the second in-tray.

To show aligned placement of the objects in the second in-tray, the second-in-tray reference input screen 220 includes, in addition to the coordinate system figure 222, multiple coordinate system figures 223 representing three-dimensional coordinate systems oriented in the same manner as the coordinate system figure 222.

When aligned placement of workpieces in the second in-tray is specified, the second-in-tray reference input screen 220 displays input areas 225a and 225b. The input area 225a receives an input of the number of workpieces in the vertical direction (in other words, in the column direction) in the second in-tray. The input area 225b receives an input of the number of workpieces in the horizontal direction (in other words, in the row direction) in the second in-tray. In the example in FIG. 23, with the specification area 202b being selected, the input area 225a can receive an input of the number of second objects in the vertical direction in the second in-tray and the input area 225b can receive an input of the number of second objects in the horizontal direction in the second in-tray.

The user can select the input area 225a to input, into the information processing device 1, the number of workpieces in the vertical direction in the second in-tray. In response to the user inputting the number of workpieces in the vertical direction in the second in-tray into the input unit 5, the input area 225a shows the input numerical value. In the same or a similar manner, the user can select the input area 225b to input, into the information processing device 1, the number of workpieces in the horizontal direction in the second in-tray. In response to the user inputting the number of workpieces in the horizontal direction in the second in-tray into the input unit 5, the input area 225b shows the input numerical value.

Note that the second-in-tray reference input screen 220 shows the same display as or a similar display to the first-in-tray reference input screen 210 illustrated in FIG. 22 when dispersed placement of workpieces in the second in-tray is specified on the in-tray input screen 80.

When aligned placement of workpieces in the first in-tray is specified on the in-tray input screen 80, the first-in-tray reference input screen 210 shows the same display as or a similar display to the second-in-tray reference input screen 220 illustrated in FIG. 23. Example of Out-Tray Reference Input Screen

FIG. 24 illustrates an example in which the specification area 202c corresponding to the third object is selected on the out-tray reference input screen 230. The out-tray reference input screen 230 includes an out-tray image 231 representing the out-tray.

In this example, the slider in the specification area 95 on the out-tray input screen 90 described above is positioned at the left end to specify aligned placement of workpieces in the out-tray. In this case, the out-tray reference input screen 230 includes a coordinate system figure 232 representing a three-dimensional coordinate system for specifying the placement reference position of the out-tray. In this example, for placing third objects in the out-tray in an aligned manner, the third objects are placed in the out-tray to have the placement reference position of each of the third objects matching the placement reference position of the out-tray.

The user can move the coordinate system figure 232 on the out-tray reference input screen 230 by performing a predetermined input on the input unit 5. An origin portion of the coordinate system figure 232 indicating the origin in the coordinate system figure 232 is overlaid on the out-tray image 231 to specify the placement reference position of the out-tray. The position of the origin portion of the coordinate system figure 232 on the out-tray image 231 indicates the placement reference position of the out-tray.

To show aligned placement of workpieces in the out-tray, the out-tray reference input screen 230 includes, in addition to the coordinate system figure 232, multiple coordinate system figures 233 representing three-dimensional coordinate systems oriented in the same manner as the coordinate system figure 232.

When aligned placement of workpieces in the out-tray is specified, the out-tray reference input screen 230 displays input areas 235a and 235b. The input area 235a receives an input of the number of workpieces in the vertical direction in the out-tray. The input area 235b receives an input of the number of workpieces in the horizontal direction in the second in-tray. In the example in FIG. 24, with the specification area 202c being selected, the input area 235a can receive the number of second objects in the vertical direction in the out-tray and the input area 235b can receive the number of second objects in the horizontal direction in the out-tray.

The user can select the input area 235a to input, into the information processing device 1, the number of workpieces in the vertical direction in the out-tray. In response to the user inputting the number of workpieces in the vertical direction in the out-tray into the input unit 5, the input area 235a shows the input numerical values. In the same or a similar manner, the user can select the input area 235b to input, into the information processing device 1, the number of workpieces in the horizontal direction in the out-tray. In response to the user inputting the number of workpieces in the horizontal direction in the out-in-tray into the input unit 5, the input area 235b shows the input numerical value.

Note that the out-tray reference input screen 230 shows the same display as or a similar display to the first-in-tray reference input screen 210 illustrated in FIG. 22 when dispersed placement of workpieces in the out-tray is specified on the out-tray input screen 90.

In the manner described above, the user's requests about the reference positions of the workpieces and the trays are received through the reference input screen 180. This completes collecting the user's requests about the robot operation. In response to the instruction area 46 included in the reference input screen 180 being selected, the interaction advances by one stage. This causes the main screen 11 to display an asset suggesting screen 250 for suggesting, to the user, multiple candidate sets of assets for the robot operation intended by the user. The controller 2 determines the multiple candidate sets of assets for the robot operation to be presented to the user based on the requests that have been received from the user. The multiple candidate sets of assets may be hereafter referred to as asset candidate sets.

In response to the instruction area 45 included in the reference input screen 180 being selected, the main screen 11 returns to the detail input screen 50.

### Example of Asset Suggesting Screen

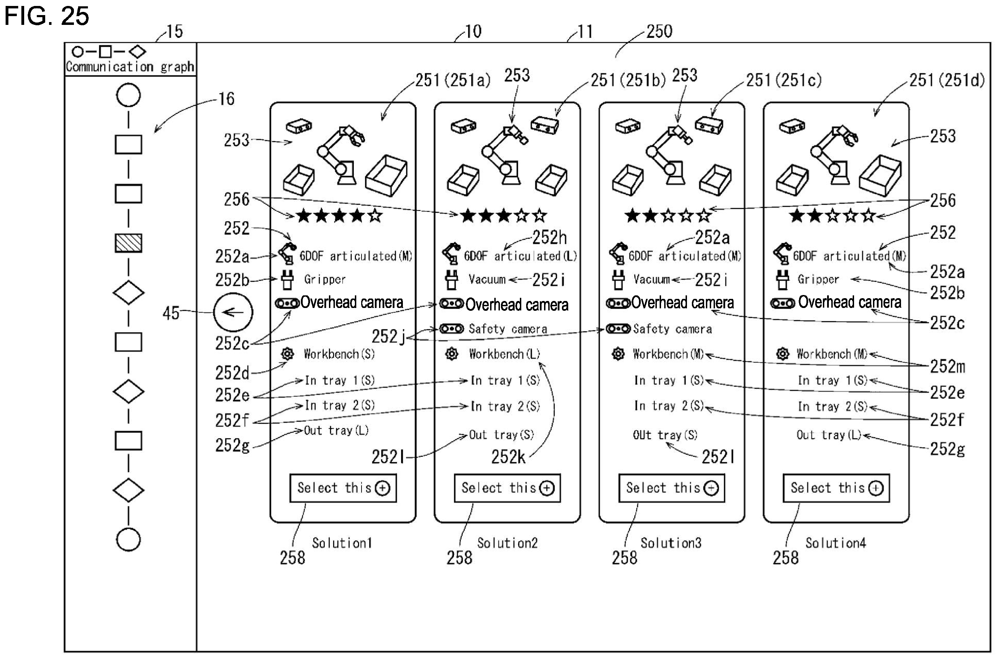

FIG. 25 is a schematic diagram of an example display of the application screen 10 including the asset suggesting screen 250. As illustrated in FIG. 25, the asset suggesting screen 250 includes the instruction area 45. In response to the instruction area 45 being selected, the interaction returns by one stage, and the main screen 11 returns to the reference input screen 180.

The asset suggesting screen 250 also includes, for example, candidate set information 251 indicating the asset candidate sets suggested to the user. For example, the asset suggesting screen 250 includes multiple pieces of candidate set information 251 indicating different asset candidate sets. The candidate set information 251 can be information or a screen for identifying asset candidate sets suggested to the user. The asset suggesting screen 250 can be a screen that shows at least one asset candidate set suggested to the user. Note that at least one asset candidate set includes multiple asset candidate sets in the example described below.

The controller 2 determines multiple asset candidate sets for the robot operation intended by the user based on the requests that have been input from the user into the information processing device 1. The controller 2 then causes the display unit 4 to display the asset suggesting screen 250 including multiple pieces of candidate set information 251 indicating the multiple determined asset candidate sets.

In the example in FIG. 25, the asset suggesting screen 250 suggests four asset candidate sets to the user. The multiple pieces of candidate set information 251 on the asset suggesting screen 250 include, for example, first candidate set information 251a indicating a first asset candidate set, second candidate set information 251b indicating a second asset candidate set, third candidate set information 251c indicating a third asset indicate set, and fourth candidate set information 251d indicating a fourth asset candidate set.

The asset may be, for example, hardware. Examples of the asset include an arm, an end effector, a workbench, an overhead camera for capturing images of a workbench, a safety camera for detecting humans, an in-tray, and an out-tray.

The candidate set information 251 includes, for example, candidate set images 253 each representing the overall image of the corresponding asset candidate set. The candidate set information 251 also includes multiple pieces of asset identification information 252 for identifying multiple assets included in each asset candidate set.

The first asset candidate set includes, for example, a medium arm, a gripper as an effector, an overhead camera, a small workbench, a small first in-tray, a small second in-tray, and a large out-tray. The first candidate set information 251a includes, for example, pieces of asset identification information 252a, 252b, 252c, 252d, 252e, 252f, and 252g.

The asset identification information 252a indicates that the asset candidate set includes a medium arm. The asset identification information 252b indicates that the asset candidate set includes a gripper. The asset identification information 252c indicates that the asset candidate set includes an overhead camera. The asset identification information 252d indicates that the asset candidate set includes a small workbench. The asset identification information 252e indicates that the asset candidate set includes a small first in-tray. The asset identification information 252f indicates that the asset candidate set includes a small second in-tray. The asset identification information 252g indicates that the asset candidate set includes a large out-tray.

The second asset candidate set includes, for example, a large arm, a vacuum as an effector, an overhead camera, a safety camera, a large workbench, a small first in-tray, a small second in-tray, and a small out-tray. The second candidate set information 251b includes, for example, pieces of asset identification information 252h, 252i, 252c, 252j, 252k, 252e, 252f, and 252l.

The asset identification information 252h indicates that the asset candidate set includes a large arm. The asset identification information 252i indicates that the asset candidate set includes a vacuum. The asset identification information 252k indicates that the asset candidate set includes a safety camera. The asset identification information 252l indicates that the asset candidate set includes a small out-tray.

The third asset candidate set includes, for example, a medium arm, a vacuum, an overhead camera, a safety camera, a medium workbench, a small first in-tray, a small second in-tray, and a small out-tray. The third candidate set information 251c includes, for example, pieces of asset identification information 252a, 252i, 252c, 252j, 252m, 252e, 252f, and 252l. The asset identification information 252m indicates that the asset candidate set includes a medium workbench.

The fourth candidate set includes, for example, a medium arm, a gripper, an overhead camera, a medium workbench, a small first in-tray, a small second in-tray, and a large out-tray. The fourth candidate set information 251d includes, for example, pieces of asset identification information 252a, 252b, 252c, 252m, 252e, 252f, and 252g.

The asset suggesting screen 250 includes, for each of the asset candidate sets, recommendation information 256 indicating the degree of recommendation for the asset candidate set. The recommendation information 256 may indicate the degree of recommendation by, for example, the number of stars. In FIG. 25, the recommendation information 256 with more filled stars has a higher degree of recommendation. The asset suggesting screen 250 in the example in FIG. 25 indicates multiple asset candidate sets, arranged from left to right in order of higher degree of recommendation.

The multiple pieces of candidate set information 251 indicating multiple asset candidate sets and the recommendation degrees of the multiple asset candidate sets are displayed together, facilitating the user's selection of an asset candidate set. Note that the user's selection of an asset candidate set may be facilitated by, for example, displaying the manufacturer, the model number, the size, and other detailed information of each asset in response to any asset identification information 252 being selected. This allows the user to select an asset candidate set after reviewing the detailed information about the asset.

The asset suggesting screen 250 includes selection areas 258 each for selecting the corresponding asset candidate set. In response to one of the selection areas 258 being selected, the information processing device 1 is notified of the selection of the asset candidate set corresponding to the selected selection area 258.

In response to one of the selection areas 258 being selected, the interaction advances by one stage, and a first layout preview screen 270 appears on the display unit 4 to allow a preview of the layout of the asset candidate set that has been selected (also referred to as a selected asset candidate set).

### Example Method for Determining Asset Candidate Set to Be Presented to User

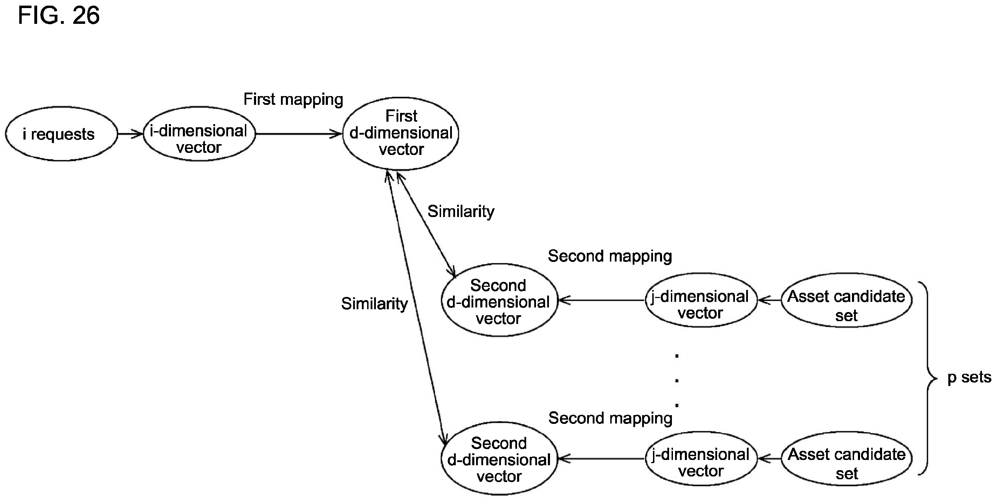

FIG. 26 is a schematic diagram illustrating an example method for determining an asset candidate set to be presented to the user. When causing the display unit 4 to display the asset suggesting screen 250, the controller 2 represents, as an i-dimensional vector, many requests (i requests in this example) about the robot operation that have been input by the user into the information processing device 1, where i is an integer greater than or equal to 2. The i requests include, for example, a request about a workpiece, a request about a tray, and a priority content about the robot operation.

The controller 2 then performs first mapping to transform the i-dimensional vector to a d-dimensional vector of lesser order, where d is an integer greater than or equal to 1 and less than i.

In this example, d = 3, and d variables in the d-dimensional vector are three variables, or specifically, an energy use, an area volume, and a processing time. The energy use is the electric power used in the robot operation. The area volume is the volume of the space used for the robot operation. The processing time is the time taken for the robot operation. More specifically, the controller 2 performs the first mapping to transform n requests to an energy use, an area volume, and a processing time. Note that the d variables of the d-dimensional vector are not limited to the above examples. The d-dimensional vector obtained through the first mapping is hereafter referred to as a first d-dimensional vector.

In this example, p asset candidate sets are prepared in advance, where p is an integer greater than or equal to 2. The p asset candidate sets include, for example, the first asset candidate set, the second asset candidate set, the third asset candidate set, the fourth asset candidate set described above, and at least one other asset candidate set. The information about the p asset candidate sets is stored in the storage 3. The controller 2 can identify the p asset candidate sets based on the information in the storage 3.

For each of the p candidate asset sets prepared in advance, the controller 2 represents the multiple assets included in the asset candidate set as a j-dimensional vector. The controller 2 then performs second mapping to transform the j-dimensional vector for each of the p candidate asset sets to the d-dimensional vector including variables that are the energy use, the area volume, and the processing time. The d-dimensional vector obtained through the second mapping is hereafter referred to as a second d-dimensional vector. In this example, the second d-dimensional vector is determined for each of the p asset candidate sets.

The first mapping and the second images may be implemented with AI techniques such as machine learning. AI is an abbreviation for artificial intelligence. For example, the controller 2 may include a first trained neural network that receives an input of an i-dimensional vector and outputs a first d-dimensional vector. The controller 2 may include a second trained neural network that receives an input of a j-dimensional vector and outputs a second d-dimensional vector.

The controller 2 calculates the similarity (e.g., cosine similarity) between the second d-dimensional vector and the first d-dimensional vector for each of the p asset candidate sets. The controller 2 then determines, among the p asset candidate sets, the top q asset candidate sets with the highest calculated similarity as the asset candidate sets to be presented to the user. More specifically, the controller 2 determines, among the p asset candidate sets, the top q asset candidate sets with the highest calculated similarity as the asset candidate sets to be displayed on the asset suggesting screen 250, where q is an integer greater than or equal to 1 and less than or equal to p. FIG. 25 illustrates the asset suggesting screen 250 for q = 4.

The controller 2 also causes the display unit 4 to display the similarity calculated for the top q asset candidate sets as the recommendation information 256 indicating the degree of recommendation.

When q = 1, note that the controller 2 determines, among the p asset candidate sets, the asset candidate set with the highest calculated similarity as the asset candidate set to be presented to the user. In this case, the asset suggesting screen 250 includes a single piece of candidate set information 251.

### Example of First Layout Preview Screen

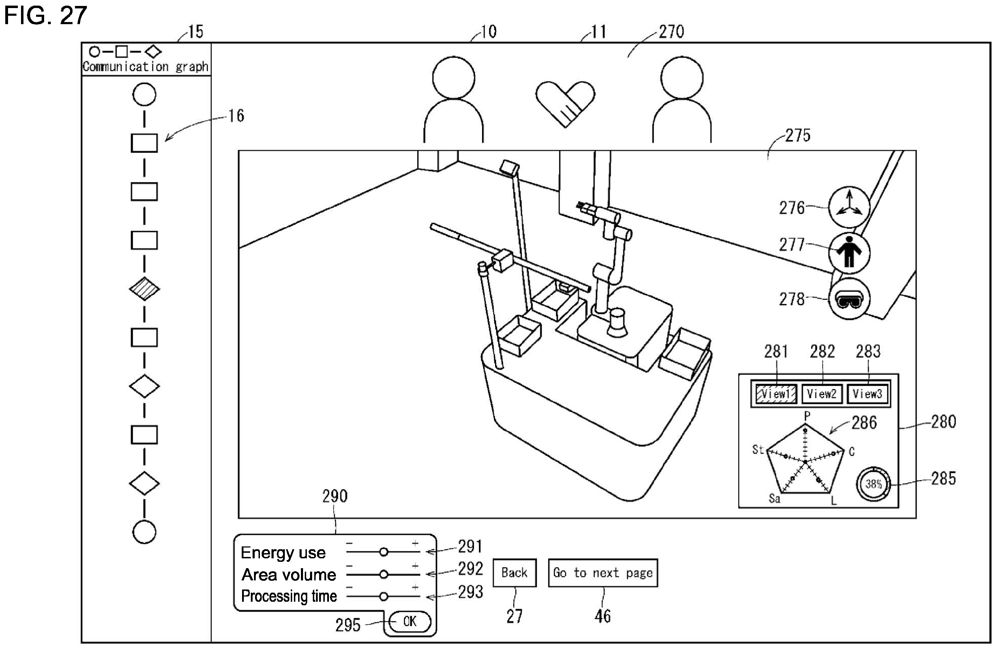

FIG. 27 is a schematic diagram of an example display of the first layout preview screen 270. The first layout preview screen 270 includes the instruction area 27. In response to the instruction area 27 being selected, the interaction returns by one stage, and the main screen 11 returns to the asset suggesting screen 250. The first layout preview screen 270 also includes the instruction area 46. In response to the instruction area 46 being selected, the interaction advances by one stage, and a layout edit screen 300 appears on the main screen 11 to allow editing the layout of multiple assets (in other words, multiple pieces of hardware) included in the selected asset candidate set.

The first layout preview screen 270 includes a layout image 275 representing the layout of the selected asset candidate set, or specifically, the layout of multiple assets included in the selected asset candidate set. The layout image 275 is, for example, a three-dimensional image. The layout image 275 may be, for example, a three-dimensional computer image (in other words, an animated image). In this example, the layout image 275 is displayed with the initial layout setting for the selected asset candidate set. The layout of the selected asset candidate set can be changed from the initial setting using the layout edit screen 300. The layout of the selected asset candidate set, or specifically, the layout of multiple assets included in the selected asset candidate set, may be referred to as a selected set layout.

In the example in FIG. 27, the selected asset candidate set includes an arm, an end effector, a workbench, a first in-tray, a second in-tray, an out-tray, an overhead camera, and a safety camera. The layout image 275 shows the layout of the arm, the end effector, the workbench, the first in-tray, the second in-tray, the out-tray, the overhead camera, and the safety camera. The layout image 275 includes an image of the arm, an image of the end effector, an image of the workbench, an image of the first in-tray, an image of the second in-tray, an image of the out-tray, an image of the overhead camera, and an image of the safety camera. The arrangement of these images represents the selected set layout. The layout image 275 also includes a background image representing the background.

The first layout preview screen 270 includes an instruction area 276 for receiving an instruction to enable changing of the display viewpoint of the layout. When the instruction area 276 is selected, the user can change the display viewpoint of the selected set layout shown in the three-dimensional layout image 275 by performing a predetermined input on the input unit 5. The controller 2 causes the display unit 4 to display the selected set layout with the display viewpoint being changeable in response to an input received at the input unit 5.

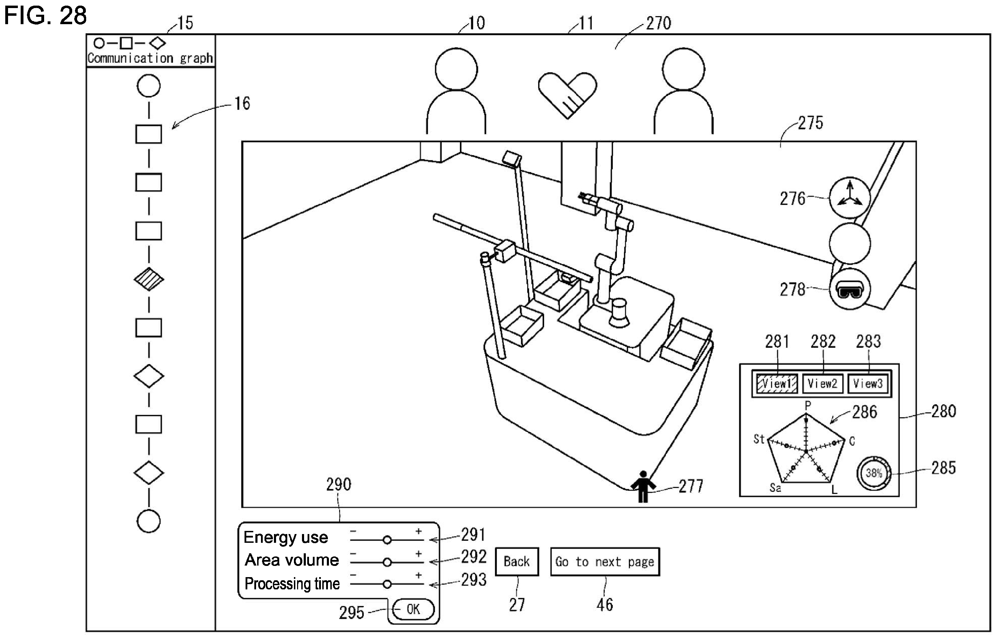

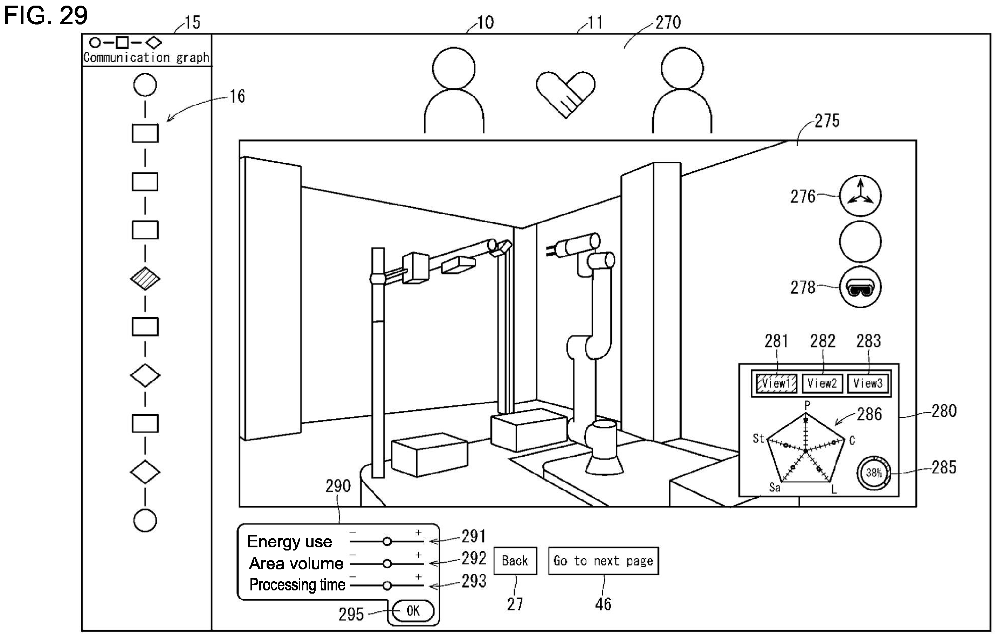

The controller 2 can cause the display unit 4 to display the selected set layout from the viewpoint of a human standing at a point through the input unit 5. This point is referred to as a reference point. The first layout preview screen 270 includes a human image 277 of a human shape for specifying the reference point. The user can move the human image 277 on the layout image 275 by performing a predetermined input on the input unit 5. The position of the human image 277 on the layout image 275 represents the reference point. For example, when the position of the human image 277 is set as illustrated in FIG. 28 on the layout image 275, the selected set layout appears on the layout image 275 as illustrated in, for example, FIG. 29. The display viewpoint of the selected set layout illustrated in FIG. 29 is changed from the display viewpoint in FIG. 27. In response to the instruction area 276 being selected after the change of the display viewpoint, the display on the first layout preview screen 270 returns to the display in FIG. 27.

In the manner described above, the controller 2 causes the display unit 4 to display the selected set layout with the display viewpoint changeable in response to an input received at the input unit 5. This allows the user to change the display viewpoint of the layout through an input on the input unit 5. This improves the convenience of the information processing device 1.

The controller 2 can cause the display unit 4 to display the selected set layout from the viewpoint of a human standing at the point input through the input unit 5. This allows the user to view the selected set layout from the viewpoint of the human.

The first layout preview screen 270 includes an instruction area 278 for receiving an instruction to cause a second display device, which can communication with the information processing device 1, to display the selected set layout. The second display device virtually reproduces and displays the selected set layout. The second display device may be, for example, a VR display device 1000 or an AR display device 1200.

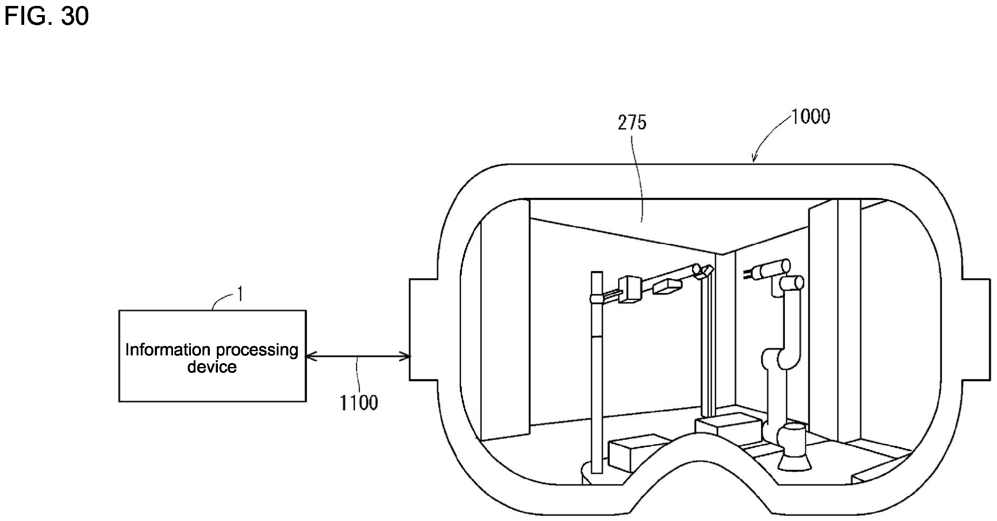

FIG. 30 is a schematic diagram of an example of the VR display device 1000 that can communicate with the information processing device 1. The VR display device 1000 is, for example, a head-mounted display. The VR display device 1000 may be in a goggle form or another form.

In response to the instruction area 278 being selected, the controller 2 transmits, to the VR display device 1000 through the interface 6, information about the selected set layout such as image data 1100 of the three-dimensional layout image 275 of the selected set layout. The interface 6 may communicate directly with the VR display device 1000 or with the VR display device 1000 in a remote location through a network including, for example, the Internet. The VR display device 1000 displays the three-dimensional layout image 275 based on the received image data 1100.

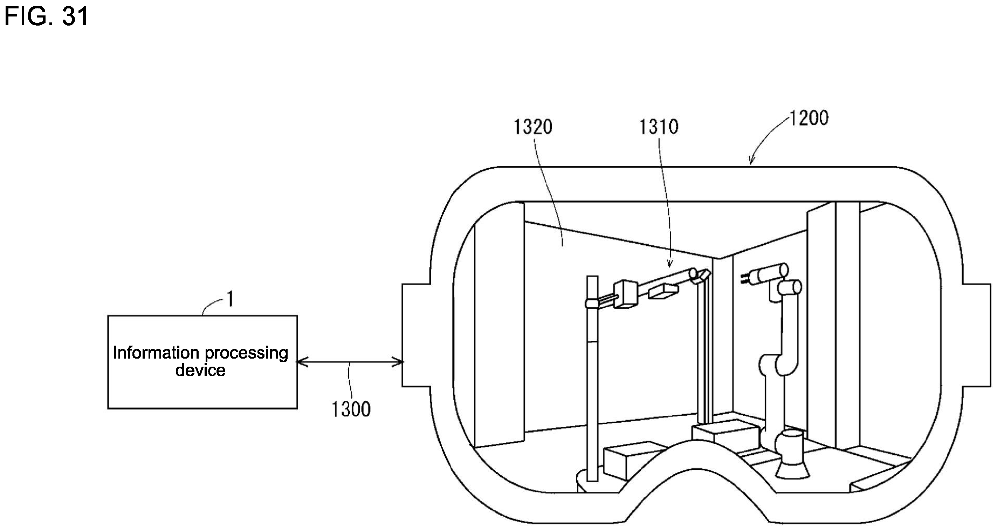

Note that the instruction area 278 may receive an instruction to cause the AR display device 1200 connected to the information processing device 1 to display the selected set layout. FIG. 31 is a schematic diagram of an example of the AR display device 1200 that can communicate with the information processing device 1. The AR display device 1200 is, for example, a head-mounted display. The AR display device 1200 may be in a goggle form or another form.

In response to the instruction area 278 being selected, the controller 2 transmits, to the AR display device 1200 through the interface 6, image data 1300 of the portion of the layout image 275 other than the background image, or specifically, an image 1310 representing the selected asset candidate set alone. The interface 6 may communicate directly with the AR display device 1200 or with the AR display device 1200 in a remote location (e.g., in the actual working environment of the robot) through a network including, for example, the Internet. The AR display device 1200 displays the image 1310 based on the received image data 1300. The AR display device 1200 overlays the image 1310 on an actual background 1320 shown on its display surface. The image 1310 is displayed to display the layout of the selected asset candidate set.

Note that the first layout preview screen 270 may include both the instruction area 278 for receiving an instruction to cause the VR display device 1000 to display the selected set layout and an instruction area for receiving an instruction to cause the AR display device 1200 to display the selected set layout.

The first layout preview screen 270 includes a robot KPI screen 280 showing robot KPIs corresponding to the selected asset candidate set. The robot KPI screen 280 includes an instruction area 281 for receiving an instruction to display the robot KPIs in a radar chart, an instruction area 282 for receiving an instruction to display the robot KPIs in a doughnut chart, and an instruction area 282 for receiving an instruction to display the robot KPIs in a horizontal bar chart.

In response to the instruction area 281 being selected, the robot KPIs corresponding to the selected asset candidate set appear on the robot KPI screen 280 in a radar chart 286, as illustrated in FIGs. 27 to 29. The symbols "P," "C," "L," "Sa," and "St" on the robot KPI screen 280 respectively indicate the success metric, the operation time metric, the motion range metric, the psychological safety metric, and the stability metric.

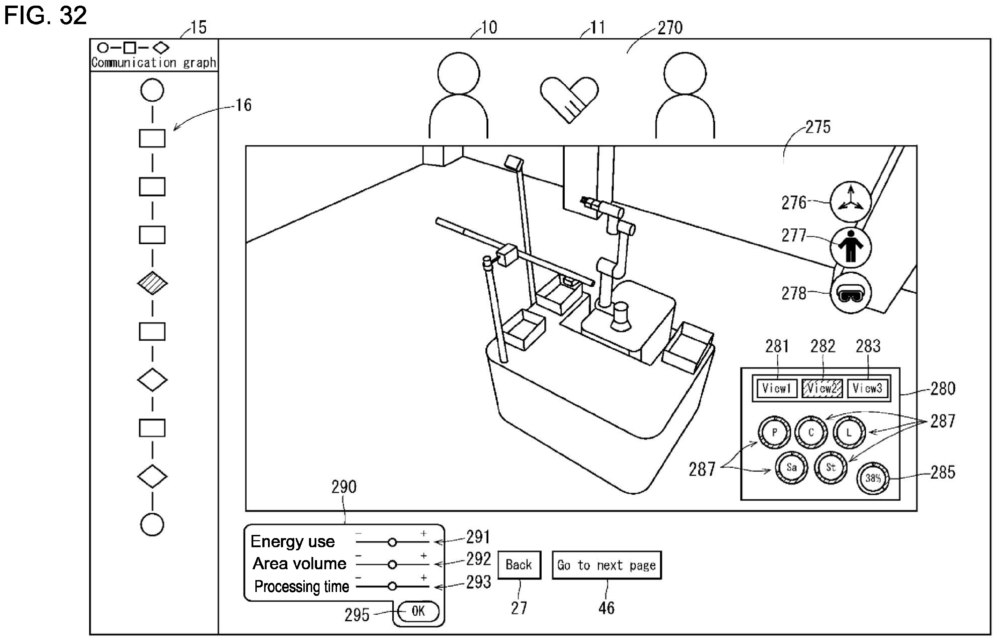

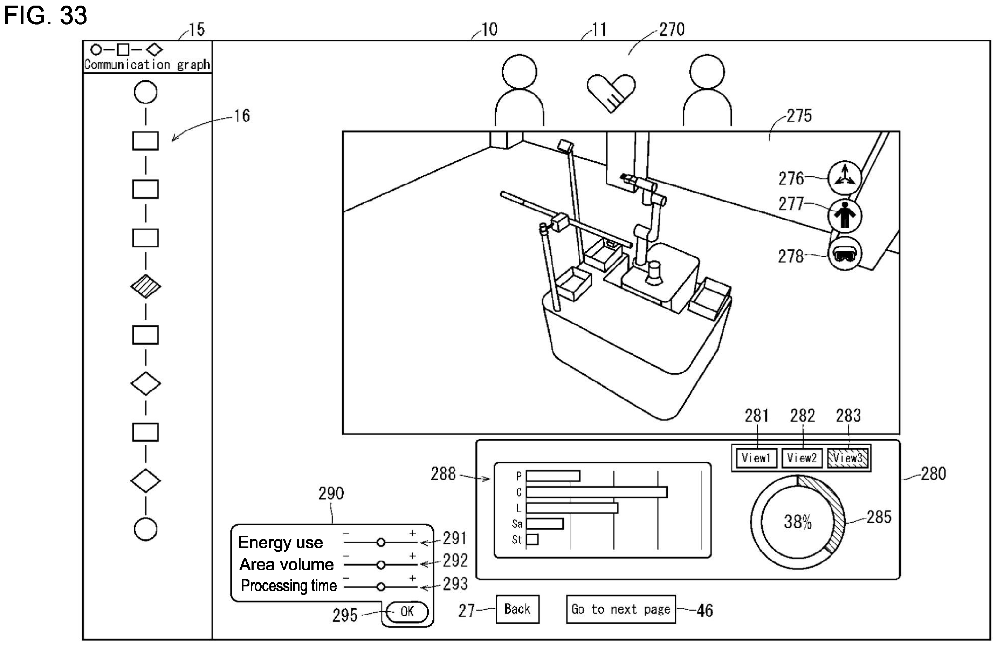

In response to the instruction area 282 being selected, the success metric, the operation time metric, the motion range metric, the psychological safety metric, and the stability metric in the robot KPIs corresponding to the selected asset candidate set appear individually as doughnut charts 287 on the robot KPI screen 280 as illustrated in FIG. 32. In response to the instruction area 283 being selected, the robot KPIs corresponding to the selected asset candidate set appear as a horizontal bar chart 288 on the robot KPI screen 280, as illustrated in FIG. 33.

The robot KPI screen 280 indicates the combined metric of the success metric, the operation time metric, the motion range metric, the psychological safety metric, and the stability metric included in the robot KPIs corresponding to the selected asset candidate set using, for example, a doughnut chart 285. The combined metric is, for example, a value obtained by multiplying the success metric, the operation time metric, the motion range metric, the psychological safety metric, and the stability metric by one another. In the center of the doughnut chart 285, the combined metric is indicated as a percentage value.

The controller 2 determines the robot KPIs shown on the robot KPI screen 280 in a manner different from the manner in which the robot KPIs shown on the priority input screen 170 described above are determined. Simply referring to robot KPIs hereafter means the robot KPIs corresponding to the selected asset candidate set shown on the robot KPI screen 280. The controller 2 determines the robot KPIs based on the request received from the user on the application screen 10. An example method for determining the robot KPIs will be described below.

### Example Method for Determining Robot KPIs

In this example, simply referring to an in-tray means the in-tray included in the selected asset candidate set, and simply referring to an out-tray means the out-tray included in the selected asset candidate set. Simply referring to an arm means the arm included in the selected asset candidate set, and simply referring to an effector means the end effector included in the selected asset candidate set.

### Success Metric

For example, the controller 2 determines the success rate of the robot holding a workpiece in the in-tray. The controller 2 then multiplies the holding success rate by the number of products, such as third objects described above, to be manufactured through the robot operation and uses the resulting value as the success metric in the robot KPIs. The success metric in this case is the number of acceptable products.

The number of products to be manufactured (in other words, the planned number of products) is pre-received from the user and stored in the storage 3. The controller 2 obtains the holding success rate through estimation based on the requests received from the user on the application screen 10. For example, the controller 2 estimates the holding success rate based on the shape of the in-tray (also referred to as an in-tray shape), the in-tray workpiece dispersion for the in-tray, the type of end effector (also referred to as an effector type), and the orientation of the end effector to approach a workpiece in the in-tray for holding the workpiece (also referred to as an approach orientation). For the selected asset candidate set including multiple in-trays, the in-tray shape, the in-tray workpiece dispersion, and the approach orientation of one of the multiple in-trays (e.g., the first in-tray) are used.

The approach orientation of the end effector used to determine the holding success rate may be, for example, the orientation to approach a representative workpiece in the in-tray (e.g., the workpiece at the center of the in-tray) to hold the workpiece. The controller 2 can obtain the approach orientation through estimation based on, for example, the position of the in-tray, the position of the representative workpiece in the in-tray, and the orientation of the representative workpiece in the in-tray. The controller 2 can obtain the orientation of the representative workpiece in the in-tray through estimation based on the in-tray shape, the in-tray workpiece dispersion, and the workpiece dispersion reference position in the in-tray.

For determining the holding success rate, for example, a specific four-dimensional coordinate space (also referred to as a specific four-dimensional coordinate system) is used. The specific four-dimensional coordinate space includes four axes representing the respective four parameters, or specifically, the in-tray shape, the in-tray workpiece dispersion, the effector type, and the approach orientation. Each position in the specific four-dimensional space is associated with a holding success rate corresponding to the set of in-tray shape, in-tray workpiece dispersion, effector type, and approach orientation defining the coordinates of the position. The holding success rate associated with each position in the specific four-dimensional space is predetermined through experimentation or simulation.

The controller 2 identifies the position in the specific four-dimensional space of the coordinates defined by the set of in-tray shape, in-tray workpiece dispersion, effector type, and approach orientation based on the requests from the user received on the application screen 10, and multiplies the holding success rate corresponding to the identified position by the number of products to be manufactured to determine the success metric.

Note that the controller 2 may estimate the holding success rate using AI techniques such as machine learning. For example, the controller 2 may include a trained neural network that outputs the holding success rate in response to an input of the in-tray shape, the in-tray workpiece dispersion, the effector type, and the approach orientation.

For example, when the success metric is displayed, the controller 2 redetermines the success metric each time the information used to determine the success metric changes, and causes the display unit 4 to display the redetermined success metric. This allows, for example, real-time update of the success metric display.

### Operation Time Metric

For example, the controller 2 determines the actual operation time of the robot operation. The controller 2 then divides a target operation time of the robot operation by the actual operation time of the robot operation. The resulting value is the operation time metric in the robot KPIs. The target operation time is pre-received from the user and stored in the storage 3. The controller 2 obtains the actual operation time through estimation based on the requests received from the user on the application screen 10.

For example, the controller 2 estimates the actual operation time based on the in-tray shape, the in-tray workpiece dispersion, the orientation of each workpiece in the in-tray, and the approach orientation of the end effector. The controller 2 obtains the orientation of each workpiece in the in-tray through estimation based on the in-tray workpiece dispersion, the in-tray shape, and the dispersion reference position of the workpieces in the in-tray. The controller 2 may estimate the actual operation time in the same manner as or in a similar manner to when estimating the holding success rate.

For example, when the operation time metric is displayed, the controller 2 redetermines the operation time metric each time the information used to determine the operation time metric changes and causes the display unit 4 to display the redetermined operation time metric.

### Motion Range Metric

For example, the controller 2 determines the volume of the workspace (also referred to as a workspace volume) usable for the robot operation. The controller 2 also determines the volume of the space occupied by obstacles that obstruct motion of the robot (also referred to as an obstacle space volume). The controller 2 subtracts the obstacle space volume from the workspace volume and divides the resulting value by the workspace volume to obtain the motion range metric. The value obtained by subtracting the obstacle space volume from the workspace volume can be the volume of the range within which the arm can move without interfering with obstacles.

The controller 2 can determine the workspace volume from the range occupied by the multiple assets in the selected set layout. The controller 2 can also determine the obstacle space volume from the range occupied by the obstacles included in the selected asset candidate set in the selected set layout. In the selected asset candidate set, the assets other than the arm and the end effector are obstacles.

For example, when the motion range metric is displayed, the controller 2 redetermines the motion range metric each time the information used to determine the motion range metric changes and causes the display unit 4 to display the redetermined motion range metric.

### Psychological Safety Metric

For example, the controller 2 subtracts the maximum reachable distance of the arm from the shortest distance between the arm and a walkway for humans to obtain a difference value. The controller 2 divides the obtained difference value by the shortest distance between the arm and the walkway to obtain the psychological safety metric. The shortest distance between the arm and the walkway is the shortest distance between the basal end of the arm and the walkway. The walkway for humans is specified by the user on the layout edit screen 300 (described later). In this example, the initial setting is used for the walkway.

For example, when the psychological safety metric is displayed, the controller 2 redetermines the psychological safety metric each time the information used to determine the psychological safety metric changes and causes the display unit 4 to display the redetermined psychological safety metric.

### Stability Metric

For example, the controller 2 simulates the motion of the robot in the robot operation using the selected asset candidate set. In the simulation, the controller 2 determines the trajectory of the arm in the robot operation to avoid interference of the arm and the end effector with obstacles (e.g., the workbench) included in the selected asset candidate set. The trajectory of the arm can also be the trajectory of the end effector. The controller 2 defines the distance (in other words, the path length) of the determined trajectory of the arm as a first distance. The controller 2 may cause the display unit 4 to show the simulated motion of the robot on the layout image 275. More specifically, the controller 2 may cause the display unit 4 to change the robot image included in the layout image 275 based on the simulated motion of the robot.

The controller 2 also simulates the motion of the robot in the robot operation without any obstacle using the selected asset candidate set, and determines the distance of the trajectory of the arm without any obstacle as a second distance. The second distance can also be the shortest distance of the trajectory of the arm.

The controller 2 divides the value obtained by subtracting the second distance from the first distance by the first distance and defines the resulting value as the stability metric in the robot KPIs. For example, when the stability metric is displayed, the controller 2 redetermines the stability metric each time the information used to determine the stability metric changes and causes the display unit 4 to display the redetermined stability metric.

As described above, the success metric, the operation time metric, and the stability metric of the robot KPIs can change based on the change in the selected set layout. For example, a change in the in-tray position in the selected set layout can change the success metric, the operation time metric, and the stability metric. A change in the out-tray position in the selected set layout can change the stability metric.

The first layout preview screen 270 includes a priority input screen 290 for receiving an input of a priority content about the robot operation different from the priority contents input through the priority input screen 170 described above.

The priority input screen 290 includes, for example, specification areas 291 to 293. The specification area 291 is used to specify the priority level for energy use. Higher priority levels for energy use indicate that less energy is to be used. The specification area 292 is used to specify the priority level for area volume. Higher priority levels for area volume indicate that the area volume is to be smaller. The specification area 293 is used to specify the priority level for processing time. Higher priority levels for processing time indicate that the processing time is to be shorter. Each of the specification areas 291 to 293 includes a slider.

The priority input screen 290 includes a notification area 295 for indicating the completion of specifying the priority levels for energy use, area volume, and processing time. In response to the notification area 295 being selected, the interaction returns by one stage. The controller 2 adjusts, based on the priority levels for energy use, area volume, and processing time specified on the priority input screen 290, the first d-dimensional vector determined based on the user requests. The controller 2 then redetermines the q asset candidate sets to be suggested to the user as described above based on the adjusted first d-dimensional vector and the second d-dimensional vector for each of the p asset candidate sets. The controller 2 causes the display unit 4 to display the asset suggesting screen 250 showing the redetermined q asset candidate sets, as illustrated in FIG. 25. The information processing device 1 thereafter operates in the same or a similar manner.

In the example described below, the priority level for the energy use specified on the priority input screen 290 is higher than the initial value when the first d-dimensional vector corresponding to the user requests is adjusted. In this case, the controller 2 reduces the value of the energy use in the first d-dimensional vector by the amount corresponding to the absolute value of the difference between the priority level specified by the user and the initial value. When the priority level for the energy use specified on the priority input screen 290 is lower than the initial value, the controller 2 increases the value of the energy use in the first d-dimensional vector by the absolute value corresponding to the difference between the priority level specified by the user and the initial value.

In another example, the priority level for the area volume specified on the priority input screen 290 is higher than the initial value. In this case, the controller 2 reduces the area volume value in the first d-dimensional vector by the amount corresponding to the absolute value of the difference between the priority level specified by the user and the initial value. When the priority level for the area volume specified on the priority input screen 290 is lower than the initial value, the controller 2 increases the area volume value in the first d-dimensional vector by the amount corresponding to the absolute value of the difference between the priority level specified by the user and the initial value. The controller 2 processes the processing time in the same or a similar manner.

A change in the value of the energy use in the first d-dimensional vector changes the similarity (e.g., cosine similarity) between the first d-dimensional vector and the second d-dimensional vector. Thus, a change in the value of the energy use in the first d-dimensional vector can change the q asset candidate sets suggested to the user. In the same or a similar manner, a change in the area volume value in the first d-dimensional vector can change the q asset candidate sets suggested to the user. In the same or a similar manner, a change in the value in the first d-dimensional vector can change the q asset candidate sets suggested to the user.

When the priority level for energy use or other parameters is changed on the priority input screen 290 included in the first layout preview screen 270, the asset candidate sets suggested to the user are redetermined based on the priority level for the energy use or other parameters. When the selected asset candidate set previewed on the first layout preview screen 270 cannot be used, the user can change the priority level or other parameters to cause the information processing device 1 to suggest asset candidate sets based on the changed priority level.

In response to the instruction area 27 being selected, the asset suggesting screen 250 illustrated in FIG. 25 appears again. When the user cannot use the selected asset candidate set previewed on the first layout preview screen 270, the user can select the instruction area 27 to re-select an asset candidate set.

In response to the instruction area 46 included in the first layout preview screen 270 being selected, the interaction advances by one stage, and the layout edit screen 300 appears on the main screen 11.

### Example of Layout Edit Screen

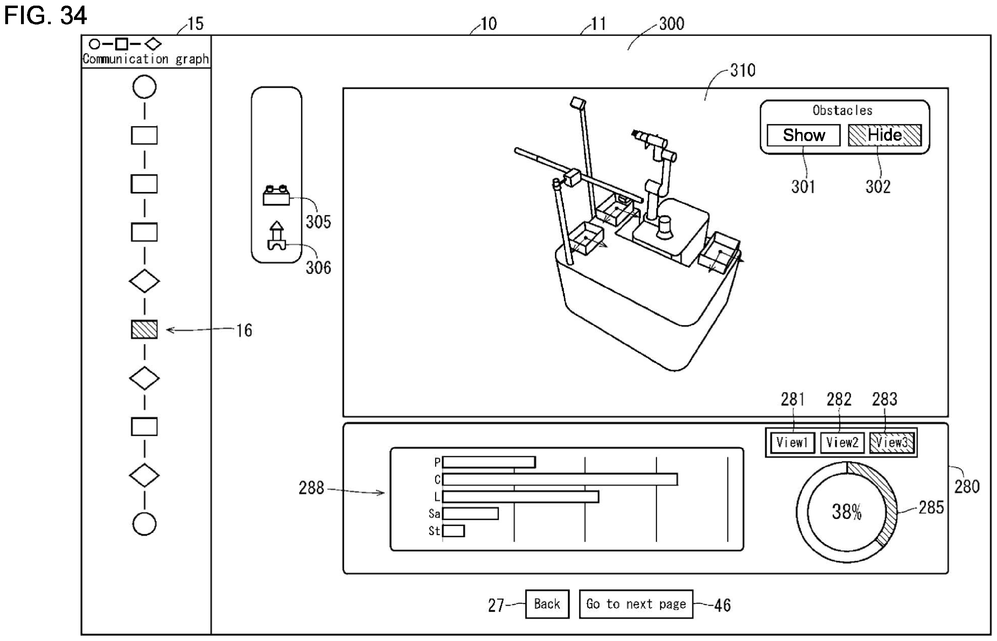

FIG. 34 is a schematic diagram of an example display of the application screen 10 including the layout edit screen 300. The layout edit screen 300 includes the instruction areas 27 and 46. In response to the instruction area 27 being selected, the interaction returns by two stages, and the asset suggesting screen 250 appears on the main screen 11. In response to the instruction area 46 being selected, the interaction advances by one stage, and a second layout preview screen 350 appears on the main screen 11 to allow a preview of the selected set layout edited on the layout edit screen 300.

The layout edit screen 300 includes a layout image 310 representing the selected set layout, in the same manner as or in a similar manner to the layout image 275 described above. The layout edit screen 300 also includes the robot KPI screen 280 described above that shows the robot KPIs corresponding to the selected asset candidate set.

The layout edit screen 300 allows, for example, changing the position of a tray in the selected set layout. The user can change the position of a tray in the layout image 310 by performing a predetermined input on the input unit 5. In other words, the user can change the position of the image representing the tray included in the layout image 310 on the layout image by performing a predetermined input on the input unit 5. The change in the position of the tray in the layout image 310 changes the position of the tray in the selected set layout.

In the example in FIG. 34, the user can move the first in-tray, the second in-tray, and the out-tray in the layout image 310 independently of one another. The layout image 310 includes a two-dimensional coordinate figure representing a two-dimensional coordinate system overlaid on the image representing the first in-tray. The two-dimensional coordinate figure indicates that the position of the first in-tray in the layout image 310 can be changed. The same or a similar structure applies to the second in-tray and the out-tray.

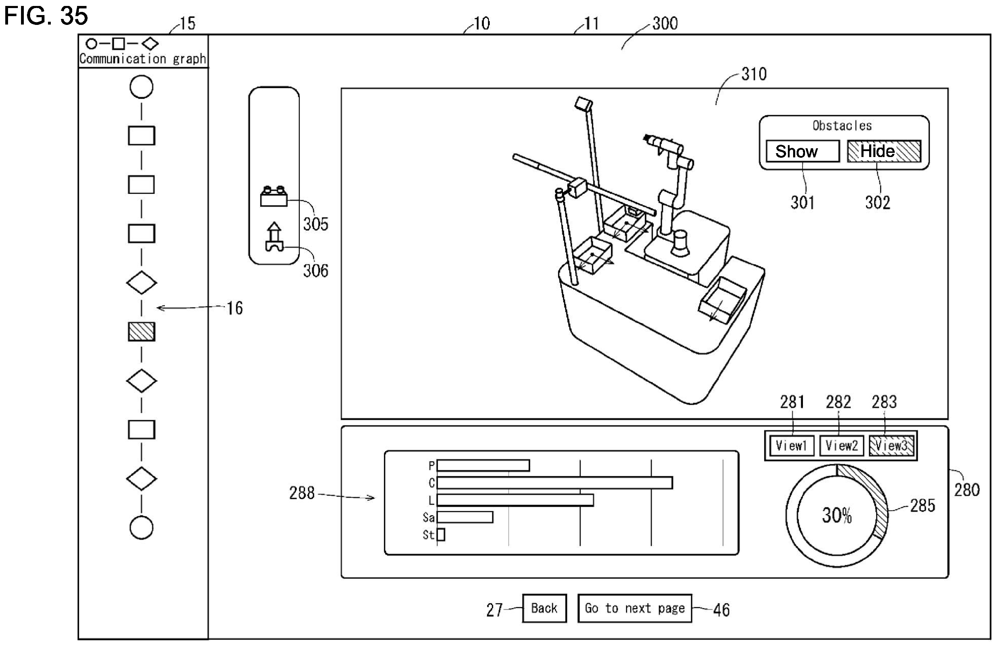

FIG. 35 is a schematic diagram illustrating an example in which the position of the out-tray in the layout image 310 is changed by a predetermined input on the input unit 5 performed by the user. In the example in FIG. 35, the position of the image representing the out-tray included in the layout image 310 is changed from the position in the example in FIG. 34. The change in the position of the out-tray in the layout image 310 changes the position of the out-tray in the selected set layout. In the example in FIG. 35, a broken arrow indicating the shift of the out-tray in the layout image 310 is overlaid on the layout image 310. The out-tray position may be changed in units of length such as metric or in grid units discretized by the bottom size of the tray. The user can select a unit for position change with high operability from multiple units on the layout edit screen 300.

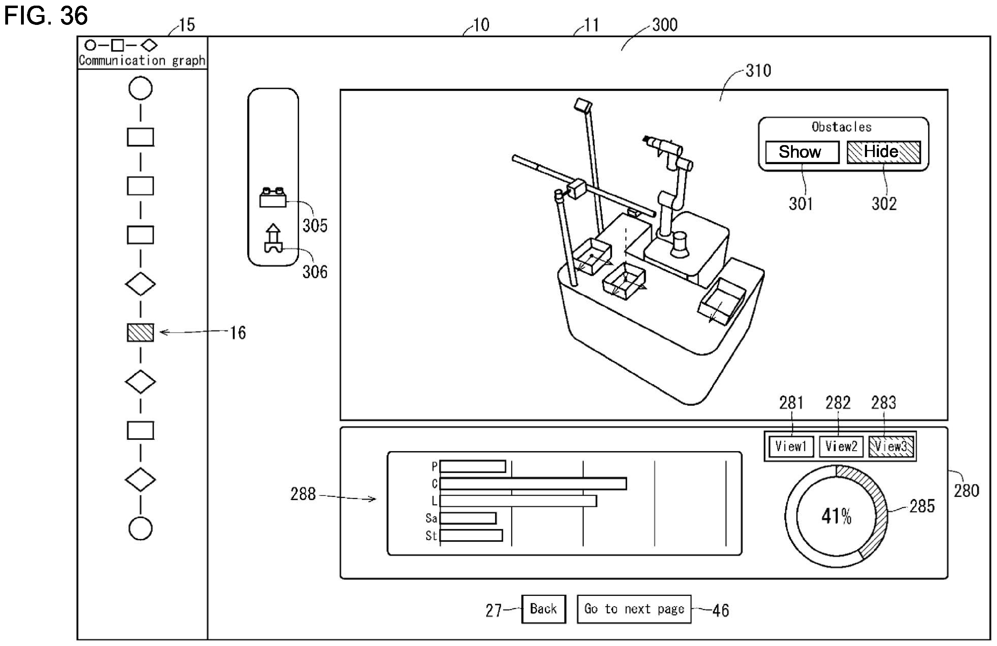

FIG. 36 is a schematic diagram illustrating an example in which the position of the first in-tray in the layout image 310 is changed by a predetermined input on the input unit 5 performed by the user. In the example in FIG. 36, the position of the image representing the first in-tray included in the layout image 310 is changed from the position in the example in FIG. 34. The change in the position of the first in-tray in the layout image 310 changes the position of the first in-tray in the selected set layout. In the example in FIG. 36, a broken arrow indicating the shift of the first in-tray in the layout image 310 is overlaid on the layout image 310.

When the selected set layout is edited as illustrated in FIGs. 35 and 36, the controller 2 determines the robot KPIs for the edited selected set layout. The controller 2 causes the display unit 4 to display the determined robot KPIs on the robot KPI screen 280.

In the example described below, the position of the out-tray is changed in the selected set layout as in the example in FIG. 35. In this case, the controller 2 simulates the motion of the robot in the robot operation based on the selected set layout with the out-tray position being changed. The controller 2 then redetermines the stability metric as described above based on the simulation results. The controller 2 also redetermines the combined metric based on the robot KPIs including the redetermined stability metric. The controller 2 then causes the robot KPI screen 280 to show the robot KPIs including the redetermined stability metric and the redetermined combined metric. Note that the success metric, the operation time metric, the motion range metric, and the psychological safety metric are unaffected by any change in the out-tray position in the selected set layout. In the example in FIG. 35, the stability metric and the combined metric are changed from the values in the example in FIG. 34.

In another example, the position of the first in-tray may be changed in the selected set layout as in the example in FIG. 36. In this case, the controller 2 redetermines the success metric and the operation time metric as described above using the position of the first in-tray after the change. The controller 2 also simulates the motion of the robot in the robot operation based on the selected set layout with the position of the first in-tray being changed. The controller 2 then redetermines the stability metric as described above based on the simulation results. The controller 2 redetermines the combined metric based on the robot KPIs including the redetermined success metric, operation time metric, and stability metric. The controller 2 then causes the robot KPI screen 280 to show the robot KPIs including the redetermined success metric, operation time metric, and stability metric, and the redetermined combined metric. Note that the motion range metric and the psychological safety metric are unaffected by any change in the position of the in-tray in the selected set layout. In the example in FIG. 36, the success metric, the operation time metric, the stability metric, and the combined metric are changed from the values in the example in FIG. 34.

Note that the position of the arm in the selected set layout may be changeable on the layout edit screen 300, in the same manner as in a similar manner to the trays. The position of the workbench in the selected set layout may be changeable on the layout edit screen 300. The position of the overhead camera in the selected set layout or the position of the safety camera in the selected set layout may be changeable on the layout edit screen 300.

In this manner, the controller 2 can cause the display unit 4 to display the selected set layout in a manner editable with an input received by the input unit 5. The user can thus edit the selected set layout while viewing the selected set layout through a predetermined input into the input unit 5. This improves the convenience of the information processing device 1.

The controller 2 determines the operation evaluation metrics for the edited selected set layout and causes the display unit 4 to display the operation evaluation metrics. This allows the user to edit the selected set layout while viewing the operation evaluation metrics including the success metric.

The layout edit screen 300 is used to specify a walkway for humans in the selected set layout. The layout edit screen 300 includes an instruction area 305 for receiving an instruction to enable specifying of a walkway for humans. In response to the instruction area 305 being selected, the user can specify the position and the range of a walkway for humans in the selected set layout by performing a predetermined input on the input unit 5.

The position and the range of a walkway for humans are specified using, for example, a 3D object (also referred to as a 3D walkway object) representing the walkway. 3D refers to being three-dimensional. In this example, the 3D object includes at least one rectangular prism. The 3D walkway object includes, for example, at least one rectangular prism. The user can place the 3D walkway object on the layout image 310 by performing a predetermined input on the input unit 5. The 3D walkway object is placed on the layout image 310 to specify the position and the range of the walkway.

When the assembly process is specified on the process input screen 101 (refer to FIG. 14) described above, the location at which the assembly process is performed (also referred to as an assembly location) may be specified on the layout edit screen 300. The layout edit screen 300 includes an instruction area 306 for receiving an instruction to enable specifying of the assembly location. When selecting the instruction area 306, the user can specify the position and the range of the assembly location in the selected set layout by performing a predetermined input on the input unit 5.

The position and the range of the assembly location are specified using, for example, a 3D object representing the assembly location (also referred to as a 3D assembly location object). The 3D assembly location object includes, for example, at least one rectangular prism. The user can place the 3D assembly location object on the layout image 310 by performing a predetermined input on the input unit 5. The 3D assembly location object is placed on the layout image 310 to specify the position and the range of the assembly location.

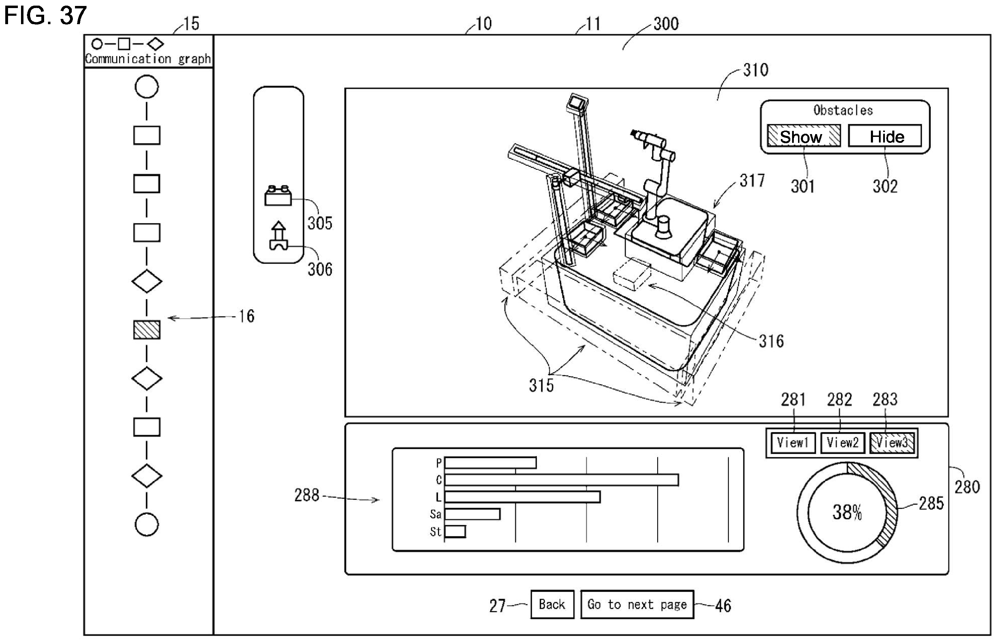

The layout edit screen 300 includes an instruction area 301 for receiving an instruction to show a 3D object such as a 3D walkway object and an instruction area 302 for receiving an instruction to hide the 3D object. When the instruction area 301 is selected without a 3D object shown as illustrated in FIGs. 34 to 36, a 3D object appears in the layout image 310 as illustrated in FIG. 37. When the instruction area 302 is selected with a 3D object shown as illustrated in FIG. 37, the 3D object is hidden as illustrated in FIGs. 34 to 36.

In the example in FIG. 37, the layout image 310 includes two-dot-dash lines indicating 3D walkway objects 315. The layout image 310 also includes dot-dash lines indicating a 3D assembly location object 316. The layout image 310 also includes thin solid lines indicating 3D objects 317 representing obstacles (3D obstacle objects) included in the selected asset candidate set. In the example in FIG. 37, the 3D obstacle objects 317 include a 3D object representing the first in-tray, a 3D object representing the second in-tray, a 3D object representing the out-in-tray, a 3D object representing the workbench, a 3D object representing the overhead camera, and a 3D object representing the safety camera. These 3D objects are prestored in the storage 3.

In response to a walkway for humans being specified on the layout edit screen 300, the controller 2 redetermines the psychological safety metric for the specified walkway. The controller 2 also redetermines the combined metric based on the robot KPIs including the redetermined psychological safety metric. The controller 2 causes the display unit 4 to display the redetermined psychological safety metric and combined metric on the robot KPI screen 280.

In response to the assembly location being specified on the layout edit screen 300, the controller 2 resimulates the motion of the robot in the robot operation based on the specified assembly location. The controller 2 may cause the display unit 4 to show the simulated motion of the robot on the layout image 310. The controller 2 then redetermines the stability metric as described above based on the simulation results. The controller 2 also redetermines the combined metric based on the robot KPIs including the redetermined stability metric. The controller 2 causes the display unit 4 to show the redetermined stability metric and combined metric on the robot KPI screen 280. Note that the stability metric is determined based on the initial setting of the assembly location when the assembly location has not been specified.

In response to the instruction area 46 included in the layout edit screen 300 being selected, the interaction advances by one stage, and the second layout preview screen 350 appears on the main screen 11 to allow a preview of the latest selected set layout.

### Example of Second Layout Preview Screen

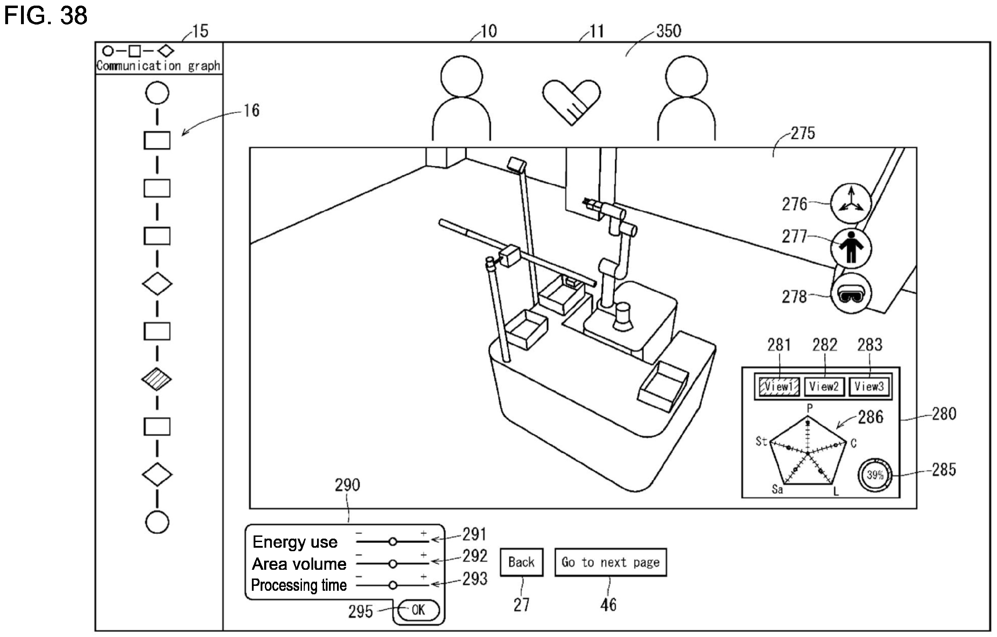

FIG. 38 is a schematic diagram of an example display of the application screen 10 including the second layout preview screen 350. As illustrated in FIG. 38, the second layout preview screen 350 has the same structure as the first layout preview screen 270 described above (refer to, for example, FIG. 27). The layout image 275 included in the second layout preview screen 350 shows the latest selected set layout.

In response to the instruction area 27 included in the second layout preview screen 350 being selected, the interaction returns by one stage, and the layout edit screen 300 appears on the main screen 11. In response to the instruction area 46 included in the second layout preview screen 350 being selected, the interaction advances by one stage, and a first detail-motion input screen 360 appears on the main screen 11 for receiving an input of the detailed motion of the robot in the robot operation.

### Example of First Detail Input Screen

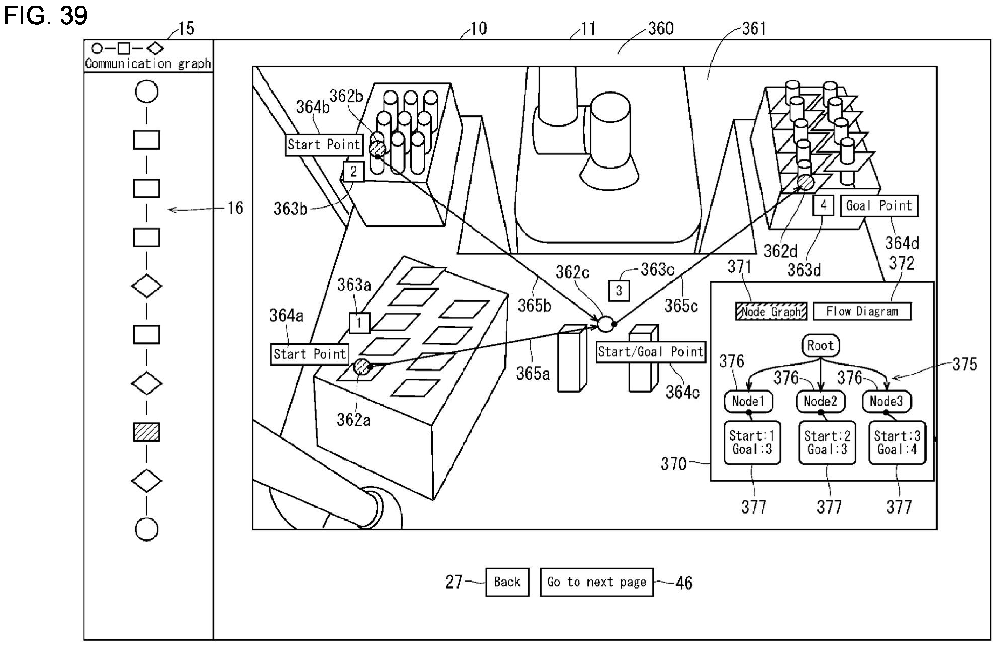

FIG. 39 is a schematic diagram of an example display of the application screen 10 including the first detail-motion input screen 360. The user can specify, for example, the sequence of the robot operation on the first detail-motion input screen 360. For example, the user can specify the details and the sequence of operation processes in the robot operation on the first detail-motion input screen 360.

As illustrated in FIG. 39, the first detail-motion input screen 360 includes a layout image 361 representing the selected set layout. The layout image 361 is, for example, a two-dimensional image.

The layout image 361 shows, for example, an area including the in-tray and the out-tray in an enlarged manner in the selected set layout. In the example in FIG. 39, the layout image 361 shows the first in-tray, the second in-tray, and the out-tray.

The layout image 361 includes a point figure indicating the position of the first in-tray (referred to as a first-in-tray point figure 362b) and an identification number 363b for identifying the position of the first in-tray. In the example in FIG. 39, the identification number 363b is set to 2.

The layout image 361 includes a point figure indicating the position of the second in-tray (referred to as a second-in-tray point figure 362a) and an identification number 363a for identifying the position of the second in-tray. In the example in FIG. 39, the identification number 363a is set to 1.

The layout image 361 includes a point figure indicating the position of the out-tray (referred to as an out-tray point figure 362d) and an identification number 363d for identifying the position of the out-tray. In the example in FIG. 39, the identification number 363d is set to 4.

The layout image 361 includes a point figure (referred to as an assembly location point figure 362c) indicating the assembly location (also referred to as an assembly position) specified on the layout edit screen 300 and an identification number 363c for identifying the assembly location. In the example in FIG. 39, the identification number 363c is set to 3. As illustrated in FIG. 39, the layout image 361 may include an image representing a fixture used at the assembly location.

In this example, the layout image 361 includes arrows drawn between the point figures to specify the details of one operation process in the robot operation. The user can draw arrows between the point figures by performing a predetermined input on the input unit 5. For example, in response to the user moving the finger on the display surface from one point figure to another point figure, an arrow appears between the point figures on the display unit 4. The sequence of the operation is then specified in the order in which arrows are drawn between point figures on the layout image 361. Note that the user may specify the process details by specifying the start point and the end point of the operation through an input, without drawing arrows. The points to be the candidates for the end point may be, for example, highlighted in response to the user selecting the start point.

For example, when an arrow 365a is first drawn from the second-in-tray point figure 362a to the assembly location point figure 362c on the layout image 361 as illustrated in FIG. 39, the end effector is specified to hold a workpiece in the second in-tray (e.g., a second object) and move to the assembly location in the first operation process in the robot operation (also referred to as a first operation process). When an arrow 365b is drawn from the first-in-tray point figure 362b to the assembly location point figure 362c on the layout image 361, the end effector is specified to hold a workpiece in the first in-tray (e.g., a first object) and move to the assembly location in the next operation process in the robot operation (also referred to as a second operation process). When an arrow 365c is drawn from the assembly location point figure 362c to the out-tray point figure 362d on the layout image 361, the end effector is specified to hold the workpiece assembled at the assembly location (e.g., a third object) and move to the out-tray in the next operation process in the robot operation (also referred to as a third operation process).

Note that the 3D object representing the second object (also referred to as a second 3D object) may be displayed as an animation representing a movement on the arrow 365a as the arrow 365a is drawn. In this case, the state of the second 3D object that has moved to the assembly location point figure 362c may be displayed. When the state of the second 3D object is displayed, the second 3D object may snap to the assembly location point figure 362c.

In the same or a similar manner, the 3D object representing the first object (also referred to as a first 3D object) may be displayed as an animation representing a movement on the arrow 365b as the arrow 365b is drawn. In this case, the state of the first 3D object that has moved to the assembly location point figure 362c may be displayed. When the state of the first 3D object is displayed, the first 3D object may snap to the assembly location point figure 362c.

In the same or a similar manner, the 3D object representing the third object (also referred to as a third 3D object) may be displayed as an animation representing a movement on the arrow 365c as the arrow 365c is drawn. In this case, the state of the third 3D object that has move to the out-tray point figure 362d may be displayed. When the state of the third 3D object is displayed, the third out-tray 3D object may snap to the point figure 362d.

In response to the arrow 365a being drawn from the second-in-tray point figure 362a to the assembly location point figure 362c on the layout image 361, start point information 364a appears near the second-in-tray point figure 362a on the layout image 361 to indicate that the position of the second in-tray is the start point of the operation process. In response to the arrow 365b being drawn from the first-in-tray point figure 362b to the assembly location point figure 362c, start point information 364b appears near the first-in-tray point figure 362b on the layout image 361 to indicate that the position of the first in-tray is the start point of the operation process.

The assembly location is the goal point of the first operation process and the second operation process and is also the start point of the third operation process. Thus, start-goal point information 364c appears near the assembly location point figure 362c to indicate that the assembly location is the start point and the goal point. The position of the out-tray is the goal point of the third operation process. Thus, goal point information 364d appears near the out-tray point figure 362d to indicate that the position of the out-tray is the goal point.

In the first operation process, the end effector moves from the position of the second in-tray as the start point to the assembly location as the goal point. In the second operation process, the end effector moves from the position of the first in-tray as the start point to the assembly location as the goal point. In the third operation process, the end effector moves from the assembly location as the start point to the position of the out-tray as the goal point.

The first detail-motion input screen 360 includes an operation detail screen 370 showing the details and the sequence of the operation processes specified by the user. The operation detail screen 370 includes an instruction area 371 for receiving an instruction to display the details and the sequence of the operation processes in a node graph and an instruction area 372 for receiving an instruction to display the details and the sequence of the operation processes in a flow diagram.

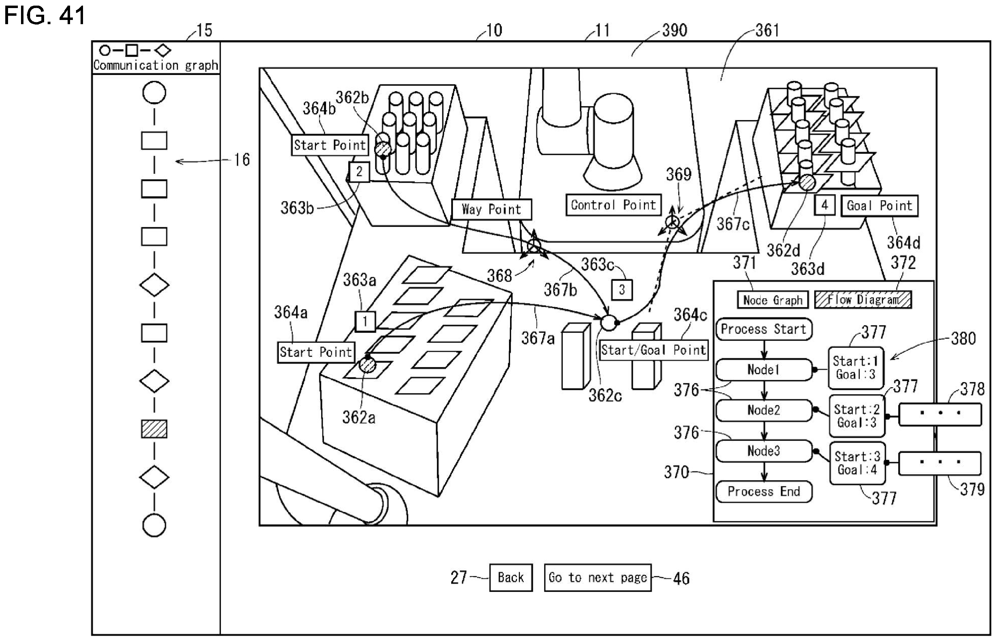

In response to the instruction area 371 being selected, a node graph 375 appears on the operation detail screen 370 to indicate the details and the sequence of the operation processes, as illustrated in FIG. 39. In response to the instruction area 372 being selected, a flow diagram 380 appears on the operation detail screen 370 (refer to FIG. 41 described later) to indicate the details and the sequence of the operation processes.

The operation detail screen 370 shows identification information 376 for identifying the operation processes. In this example, "Node" indicates the operation process. "Nodex" represents the identification information 376 for the operation process performed x-th (x is an integer greater than or equal to 1).

The operation detail screen 370 also shows process detail information 377 indicating the details of the operation process. The operation detail screen 370 shows the process detail information 377 about an x-th operation process connected with, for example, a line to the identification information 376 of the x-th operation process. The process detail information 377 includes, for example, information indicating the start point and the goal point of the operation process.

The process detail information 377 about the first operation process represented by "Node1" includes the identification number 363a (or specifically, 1) of the position of the second in-tray as the start point of the first operation process and the identification number 363c (or specifically, 3) of the assembly location as the goal point of the first operation process. The process detail information 377 about the first operation process indicates that the end effector moves from the second in-tray to the operation location in the first operation process.

The process detail information 377 about the second operation process represented by "Node2" includes the identification number 363b (or specifically, 2) of the position of the first in-tray as the start point of the second operation process and the identification number 363c (or specifically, 3) of the assembly location as the goal point of the second operation process. The process detail information 377 about the second operation process indicates that the end effector moves from the first in-tray to the operation location in the second operation process.

The process detail information 377 about the third operation process represented by "Node3" includes the identification number 363c (or specifically, 3) of the assembly location as the start point of the third operation process and the identification number 363d (or specifically, 4) of the out-tray position as the goal point of the third operation process. The process detail information 377 about the third operation indicates that the end effector moves from the assembly location to the out-tray in the third operation process.

Note that the process detail information 377 may include information indicating the behavior of the robot between the start point and the goal point. For example, the process detail information 377 may include a velocity profile between the start point and the goal point or an acceleration profile between the start point and the goal point. The process detail information 377 may include at least one of the upper limit or the lower limit of the velocity between the start point and the goal point or at least one of the upper limit or the lower limit of the acceleration between the start point and the goal point. The information indicating the behavior of the robot between the start point and the goal point included in the process detail information 377 may be changeable based on an instruction from the user. The process detail information 377 may include information indicating an instruction to a subordinate device such as the end effector at the start point or the goal point. The instruction to the device may include turning holding on or off, or specifying a holding force.

The first detail-motion input screen 360 includes the instruction areas 27 and 46. In response to the instruction area 27 being selected, the interaction returns by two stages, and the layout edit screen 300 appears on the main screen 11. In response to the instruction area 46 being selected, a second detail-motion input screen 390 appears on the main screen 11 to receive an input of the detailed motion of the robot in the robot operation different from the detailed motion of the robot input through the first detail-motion input screen 360.

### Example of Second Detail-Motion Input Screen

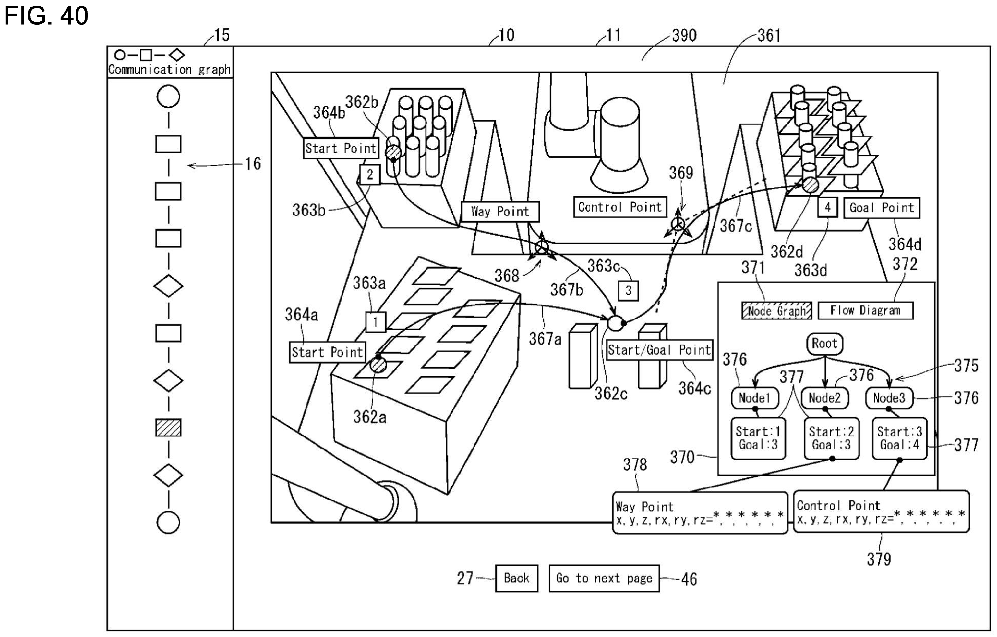

FIG. 40 is a schematic diagram of an example display of the application screen 10 including the second detail-motion input screen 390. As illustrated in FIG. 40, the second detail-motion input screen 390 includes the layout image 361 and the operation detail screen 370 described above. The second detail-motion input screen 390 includes the instruction areas 27 and 46.

The second detail-motion input screen 390 allows the user to correct the trajectory of the arm (in other words, the trajectory of the end effector) to be followed when the robot moves as specified by the details and the sequence of the operation processes on the first detail-motion input screen 360.

In response to the instruction area 46 included in the first detail-motion input screen 360 being selected, the controller 2 simulates the motion of the robot performing the operation as specified by the details and the sequence of the operation processes on the first detail-motion input screen 360. In the simulation, the controller 2 determines the trajectory of the arm in the robot operation to avoid interference of the arm and the end effector with obstacles included in the selected asset candidate set. In the example in FIGs. 39 and 40, the controller 2 determines a trajectory 367a of the arm in the first operation process (also referred to as a first arm trajectory 367a), a trajectory 367b of the arm in the second operation process (also referred to as a second arm trajectory 367b), and a trajectory 367c of the arm in the third operation process (also referred to as a third arm trajectory 367c). As illustrated in FIG. 40, the controller 2 causes the display unit 4 to display the first arm trajectory 367a, the second arm trajectory 367b, and the third arm trajectory 367c on the layout image 361.

The layout image 361 shows the first arm trajectory 367a with an arrow extending from the second-in-tray point figure 362a to the assembly location point figure 362c. The layout image 361 shows the second arm trajectory 367b with an arrow extending from the first-in-tray point figure 362b to the assembly location point figure 362c. The layout image 361 shows the third arm trajectory 367c with an arrow extending from the assembly location point figure 362c to the out-tray point figure 362d. The first arm trajectory 367a, the second arm trajectory 367b, and the third arm trajectory 367c are each hereafter referred to as a process arm trajectory, without being distinguished from one another.

The user can correct the process arm trajectory on the layout image 361 by performing a predetermined input on the input unit 5. In response to the user performing the predetermined input on the input unit 5, a coordinate system figure 368 representing a three-dimensional coordinate system appears on the process arm trajectory for correcting the process arm trajectory. For example, in response to the user pressing any position on the process arm trajectory with the finger, the coordinate system figure 368 for correcting the process arm trajectory appears at the pressed position. The coordinate system figure 368 appears with its origin portion aligned on the process arm trajectory. In the example in FIG. 40, the coordinate system figure 368 is aligned on the second arm trajectory 367b.

The user can move the coordinate system figure 368 on the layout image 361 by performing a predetermined input on the input unit 5. For example, when the user moves the finger touching the coordinate system figure 368 on the display surface, the display position of the coordinate system figure 368 shifts in response to the finger movement. The process arm trajectory then changes based on the shift of the coordinate system figure 368 on the layout image 361. The process arm trajectory is corrected to pass through the origin portion of the shifted coordinate system figure 368. The user can set multiple coordinate system figures 368 on the process arm trajectory.

In this example, the position of the origin portion of the coordinate system figure 368 on the process arm trajectory is referred to as a way point. The orientation of the coordinate system figure 368 represents the orientation of the end effector at the way point. The user can set the orientation of the coordinate system figure 368 by performing a predetermined input on the input unit 5. The user can set the orientation of the coordinate system figure 368 to indicate the orientation of the end effector at the way point.

In response to the user performing a predetermined input on the input unit 5, a coordinate system figure 369 representing a three-dimensional coordinate system appears on the layout image 361 for correcting the process arm trajectory, separately from the coordinate system figure 368. For example, in response to the user pressing any position on the process arm trajectory with the finger, the coordinate system figure 369 for correcting the process arm trajectory appears at the pressed position.

The user can move the coordinate system figure 369 on the layout image 361 by performing a predetermined input on the input unit 5. For example, when the user moves the finger touching the coordinate system figure 369 on the display surface, the coordinate system figure 369 shifts to the position to which the finger has moved. When the coordinate system figure 369 shifts, the process arm trajectory changes to bend toward the position to which the coordinate system figure 369 has shifted. For example, when the process arm trajectory is represented by a spline curve, the process arm trajectory may bend toward the position to which the coordinate system figure 369 has shifted to maintain the spline curve. In the example in FIG. 40, the coordinate system figure 369 for correcting the third arm trajectory 367c is shown.

In this example, the position nearest the origin portion of the coordinate system figure 369 on the process arm trajectory is referred to as a control point. The orientation of the coordinate system figure 369 represents the orientation of the end effector at the control point. The user can set the orientation of the coordinate system figure 369 by performing a predetermined input on the input unit 5. The user can set the orientation of the coordinate system figure 369 to indicate the orientation of the end effector at the control point.

When the coordinate system figure 368 appears on the layout image 361, the display unit 4 can display the position of the way point and the orientation of the end effector at the way point on the operation detail screen 370. When the coordinate system figure 369 appears on the layout image 361, the display unit 4 can display the position of the control point and the orientation of the end effector at the control point on the operation detail screen 370.

When the coordinate system figure 368 for correcting the process arm trajectory in an operation process is displayed, way point information 378 indicating the position of the way point and the orientation of the end effector at the way point appears in response to the process detail information 377 about the operation process being selected. The way point information 378 is connected to the selected process detail information 377 with a line when displayed.

When the coordinate system figure 369 for correcting the process arm trajectory in an operation process is displayed, control point information 379 indicating the position of the control point and the orientation of the end effector at the control point appears in response to the process detail information 377 about the operation process being selected. The control point information 379 is connected to the selected process detail information 377 when displayed.

In the example in FIG. 40, the coordinate system figure 368 for correcting the process arm trajectory in the second operation (specifically, the second arm trajectory 367b) is displayed. In response to the process detail information 377 about the second operation process being selected, the way point information 378 indicating the position of the way point and the orientation of the end effector at the way point appears.

In the example in FIG. 40, the coordinate system figure 369 for correcting the process arm trajectory in the third operation process (specifically, the third arm trajectory 367c) is displayed. In response to the process detail information 377 about the third operation process being selected, the control point information 379 indicating the position of the control point and the orientation of the end effector at the control point appears.

In response to the instruction area 372 included in the operation detail screen 370 being selected in the example in FIG. 40, the operation detail screen 370 shows the flow diagram 380 indicating the details and the sequence of the operation processes as illustrated in FIG. 41.

In response to the instruction area 27 included in the second detail-motion input screen 390 being selected, the interaction returns by two stages, and the layout edit screen 300 appears on the main screen 11. In response to the instruction area 46 included in the second detail-motion input screen 390 being selected, the interaction advances by one stage, and a third layout preview screen 400 appears on the main screen 11 to allow a preview of the selected set layout again.

### Example of Third Layout Preview Screen

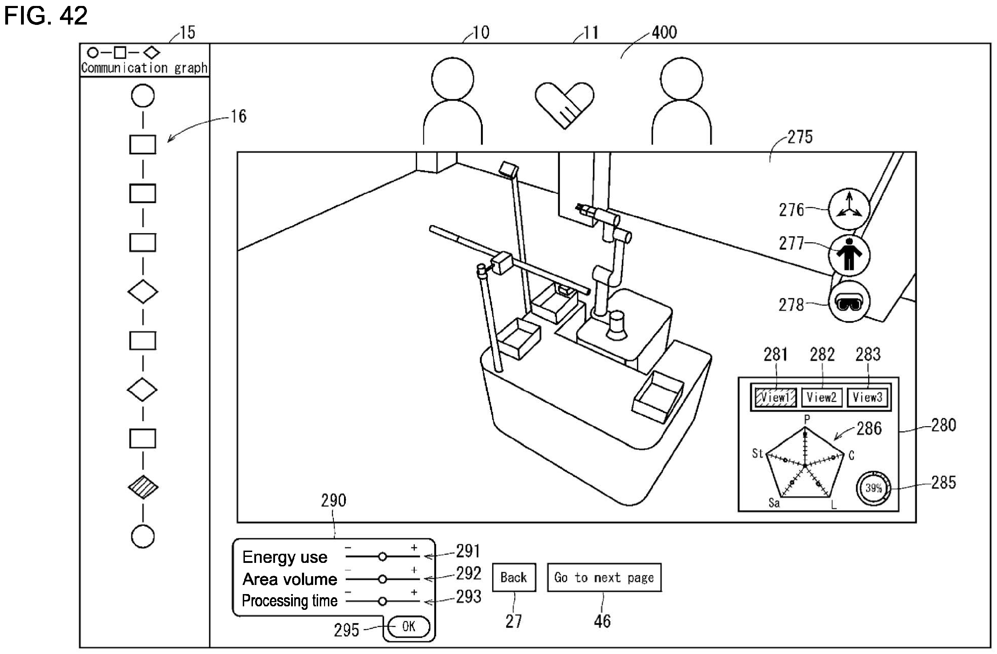

FIG. 42 is a schematic diagram of an example display of the application screen 10 including the third layout preview screen 400. As illustrated in FIG. 42, the third layout preview screen 400 has the same structure as the first layout preview screen 270 and the second layout preview screen 350. The layout image 275 included in the third layout preview screen 400 shows the latest selected set layout. The robot KPI screen 280 included in the third layout preview screen 400 shows the latest robot KPIs. The latest robot KPIs include a stability metric corresponding to the trajectory of the arm corrected on the second detail-motion input screen 390.

In response to the instruction area 27 included in the third layout preview screen 400 being selected, the interaction returns by one stage, and the first detail-motion input screen 360 appears on the main screen 11.

When the user finally agrees to the suggestion about the robot operation from the information processing device 1, the user selects the instruction area 46 included in the third layout preview screen 400. In response to the instruction area 46 being selected, the interaction advances to the final stage, and a final confirmation screen 410 appears on the main screen 11 for confirming the items to which the user has finally agreed. The controller 2 identifies the user's final agreement to the suggestion about the robot operation in response to the instruction area 46 being selected.

### Example of Final Confirmation Screen

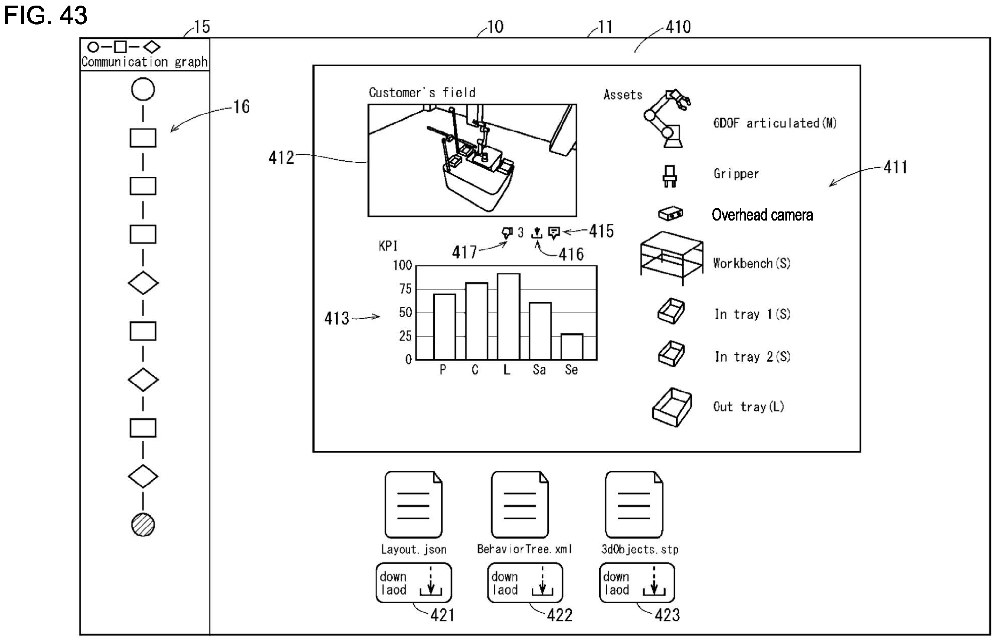

FIG. 43 is a schematic diagram of an example display of the application screen 10 including the final confirmation screen 410. The final confirmation screen 410 includes final asset set information 411 indicating the final selected asset candidate set. The final selected asset candidate set can be multiple assets determined finally by the user for the robot operation (also referred to as a final asset set).

The final confirmation screen 410 includes a final layout image 412 representing the final layout of the final selected asset candidate set. The final layout of the final selected asset candidate set can be a layout determined finally by the user for the final asset set (also referred to as a final layout).

The final confirmation screen 410 also includes final robot KPI information 413 indicating final robot KPIs. The final robot KPIs correspond to the final layout of the final asset set and the final arm trajectory. The final arm trajectory is the trajectory of the arm corrected on the second detail-motion input screen 390. In FIG. 43, the final robot KPI information 413 is shown as a vertical bar graph.

The final confirmation screen 410 includes an instruction area 421 for receiving an instruction to transmit final layout data indicating the final layout from the information processing device 1 to an external device. In response to the instruction area 421 being selected, the controller 2 causes the interface 6 to transmit the final layout data to an external device. The external device as a transmission destination may be a computer of the user, a cloud server, or another device.

The final confirmation screen 410 includes an instruction area 422 for receiving an instruction to transmit final arm trajectory data indicating the final arm trajectory from the information processing device 1 to an external device. In response to the instruction area 423 being selected, the controller 2 causes the interface 6 to transmit the final arm trajectory data to an external device.

The final confirmation screen 410 includes an instruction area 423 for receiving an instruction to transmit 3D object data indicating 3D objects representing multiple assets included in the final asset set from the information processing device 1 to an external device. In response to the instruction area 423 being selected, the controller 2 causes the interface 6 to transmit the 3D object data to an external device.

The final confirmation screen 410 includes an instruction area 416 for receiving an instruction to collectively transmit the final layout data, the final arm trajectory data, and the 3D object data from the information processing device 1 to an external device. In response to the instruction area 416 being selected, the controller 2 causes the interface 6 to transmit the final layout data, the final arm trajectory data, and the 3D object data to an external device.

The final confirmation screen 410 includes an instruction area 415 for receiving an instruction to enable transmission of a message input by the user from the information processing device 1 to an external device. In response to the instruction area 415 being selected, the user can input a message by performing a predetermined input on the input unit 5 and cause the information processing device 1 to transmit the input message to an external device.

The final confirmation screen 410 includes backtrack count information 417 indicating the count of returns to the previous stage in the interaction between the information processing device 1 and the user performed through the application screen 10.

In response to one of the instruction areas 416, 421, 422, and 423 being selected, the controller 2 ends the execution of the predetermined application program 3a, and the application screen 10 does not appear on the display surface.

The confirmation screen 30 (refer to FIG. 3) that appears in response to one item of the status information 26a, 26b, and 26c included in the project management screen 20 illustrated in FIG. 2 being selected is similar to the final confirmation screen 410. As illustrated in FIG. 3, the confirmation screen 30 includes asset set information 31 indicating multiple assets, a layout image 32 showing the layout of the multiple assets, and robot KPI information 33 indicating the robot KPIs corresponding to the layout. The robot KPI information 33 is shown as a vertical bar graph on the confirmation screen 30.

The asset set information 31 on the confirmation screen 30 that appears in response to the status information 26a included in the project management screen 20 being selected (also referred to as an in-progress project confirmation screen 30) indicates the latest selected asset candidate set for a project in progress. On the in-progress project confirmation screen 30, the layout image 32 shows the latest layout of the latest selected asset candidate set for the project in progress. The robot KPI information 33 on the in-progress project confirmation screen 30 indicates the latest robot KPIs for the project in progress.

The asset set information 31 on the confirmation screen 30 that appears in response to the status information 26b included in the project management screen 20 being selected (also referred to as a complete-project confirmation screen 30) indicates the final selected asset candidate set for a complete project, in the same manner as or in a similar manner to the final asset set information 411 on the final confirmation screen 410. The layout image 32 on the complete-project confirmation screen 30 shows the final layout of the final selected asset candidate set for the complete project, in the same manner as or in a similar manner to the final layout image 412 on the final confirmation screen 410. The robot KPI information 33 in the complete-project confirmation screen 30 indicates the final robot KPIs for the complete project, in the same manner as or in a similar manner to the final robot KPI information 413 on the final confirmation screen 410.

The asset set information 31 on the confirmation screen 30 that appears in response to the status information 26c included in the project management screen 20 being selected (also referred to as a pending-project confirmation screen 30) indicates the latest selected asset candidate set for a pending project. The layout image 32 on the pending-project confirmation screen 30 shows the latest layout of the latest selected asset candidate set for the pending project. The robot KPI information 33 on the pending-project confirmation screen 30 indicates the latest robot KPIs for the pending project.

The confirmation screen 30 includes an instruction area 35 for receiving an instruction to transmit data from the information processing device 1 to an external device. First data transmitted to an external device in response to an instruction area 36 on the in-progress project confirmation screen 30 being selected includes layout data indicating the latest layout of the latest selected asset candidate set for the project in progress. The first data also includes arm trajectory data indicating the trajectory of the arm in the latest layout of the latest selected asset candidate set for the project in progress. The first data also includes 3D object data indicating 3D objects of multiple assets included in the latest selected asset candidate set for the project in progress.

Second data transmitted to an external device in response to the instruction area 36 on the complete-project confirmation screen 30 being selected includes layout data indicating the final layout of the final selected asset candidate set for the complete project. The second data also includes arm trajectory data indicating the final arm trajectory in the final layout of the final selected asset candidate set for the complete project. The second data also includes 3D object data indicating 3D objects of multiple assets included in the final selected asset candidate set for the complete project.

Third data transmitted to an external device in response to the instruction area 36 on the pending-project confirmation screen 30 being selected includes layout data indicating the latest layout of the latest selected asset candidate set for the pending project. The third data also includes arm trajectory data indicating the trajectory of the arm in the latest layout of the latest selected asset candidate set for the pending project. The third data also includes 3D object data indicating 3D objects of multiple assets included in the latest selected asset candidate set for the pending project.

The confirmation screen 30 includes the instruction area 35 for receiving an instruction to enable transmission of a message input by the user from the information processing device 1 to an external device. In response to the instruction area 36 being selected, the user can input a message by performing a predetermined input on the input unit 5 and cause the information processing device 1 to transmit the input message to an external device.

The confirmation screen 30 includes backtrack count information 37 indicating the count of returns to the previous stage in the interaction between the information processing device 1 and the user performed through the application screen 10. The backtrack count information 37 on the in-progress project confirmation screen 30 indicates the count of returns to the previous stage in the interaction on the project in progress. The backtrack count information 37 on the complete-project confirmation screen 30 indicates the count of returns to the previous stage in the interaction on the complete project. The backtrack count information 37 on the pending-project confirmation screen 30 indicates the count of returns to the previous stage in the interaction on the pending project.

The confirmation screen 30 includes the instruction area 27. In response to the instruction area 27 being selected, the main screen 11 returns to the project management screen 20. The confirmation screen 30 includes an instruction area 39 for receiving an instruction to resume a project. In response to the instruction area 39 on the in-progress project confirmation screen 30 being selected, the application screen 10 for the interaction stage on the in-progress project appears on the display surface. In response to the instruction area 39 on the pending-project confirmation screen 30 being selected, the application screen 10 for the interaction stage on the pending project appears on the display surface. Note that the complete-project confirmation screen 30 does not include the instruction area 39.

The user can stop the currently ongoing project by performing a predetermined input on the input unit 5 while the project is ongoing. In this case, the stopped project is placed into an in-progress state. The user can place the currently ongoing project into a pending state by performing a predetermined input on the input unit 5 while the project is ongoing. For example, the controller 2 may place a project in progress having frequent returns to the previous stage in the interaction into a pending state.

The displays of the application screen 10 described above are examples for the specification area 41a selected on the overview input screen 40 illustrated in FIG. 4. The displays of the application screen 10 described below are examples for the specification area 41b selected on the overview input screen 40.

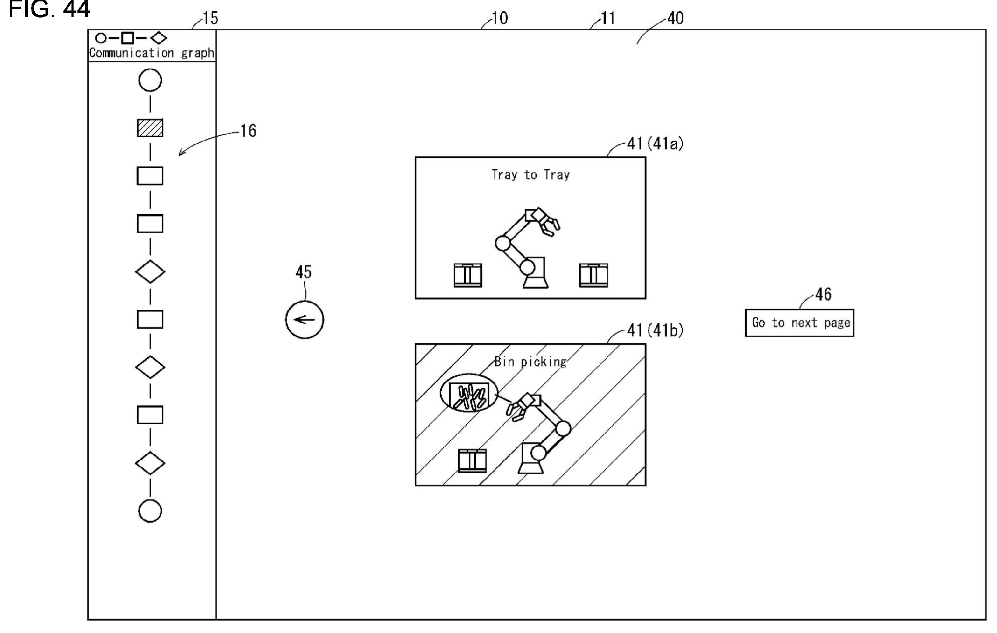

In response to the specification area 41b corresponding to the second operation overview being selected, the specification area 41b is highlighted as illustrated in FIG. 44. In response to the user selecting the instruction area 46 on the overview input screen 40 subsequently to selecting the specification area 41b, the detail input screen 50 appears on the main screen 11. The detail input screen 50 that appears in response to the specification area 41b being selected will be described below, focusing on the difference from the detail input screen 50 that appears in response to the specification area 41a being selected.

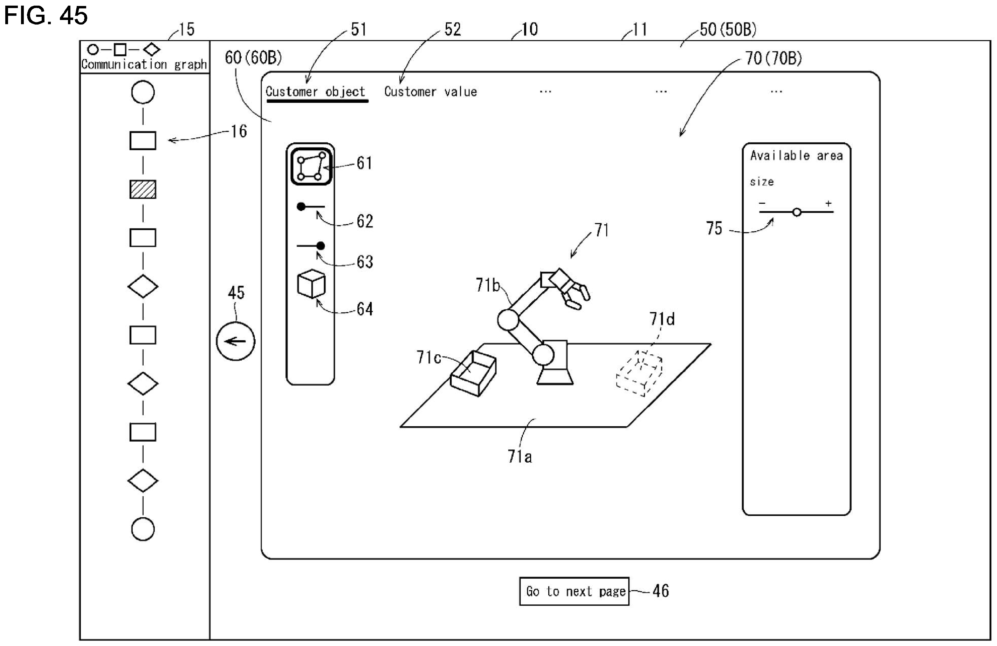

FIG. 45 is a schematic diagram of an example display of the application screen 10 including the detail input screen 50 that appears in response to the specification area 41b being selected (also referred to as a second detail input screen 50B). In the example in FIG. 45, the object input screen 60 including the space input screen 70 is displayed on the second detail input screen 50B. The object input screen 60 on the second detail input screen 50B is hereafter referred to as a second-object input screen 60B. The space input screen 70 on the second-object input screen 60B is referred to as a second space input screen 70B.

The overview image 71 on the second space input screen 70B represents the second operation overview. As described above, the second operation overview does not define the out-tray. Unlike the overview image 71 on the first space input screen 70, the overview image 71 on the second space input screen 70B includes the image 71d showing the outline of the out-tray with a broken line.

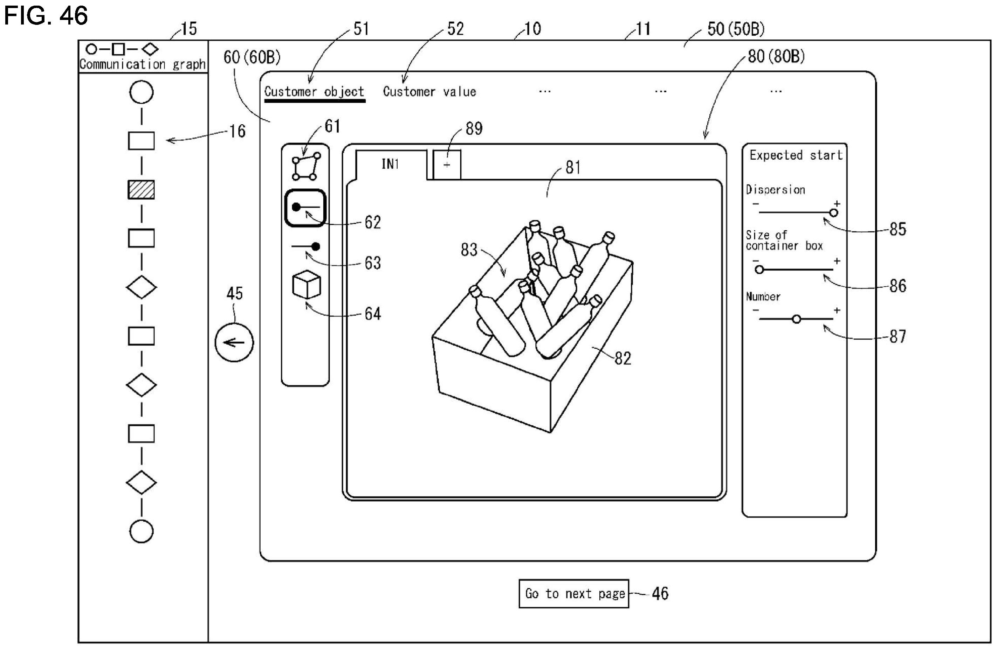

FIG. 46 is a schematic diagram illustrating an example in which the second-object input screen 60B including the in-tray input screen 80 appears on the second detail input screen 50B. The in-tray input screen 80 on the second-object input screen 60B is hereafter referred to as a second in-tray input screen 80B.

The initial position of the slider in the specification area 85 on the second in-tray input screen 80B is the position corresponding to the second operation overview. FIG. 46 illustrates the initial position of the slider in the specification area 85. In the second operation overview, the robot holds workpieces that are randomly placed in the in-tray as described above. The slider in the specification area 85 is thus initially set at the rightmost position, as illustrated in FIG. 46. The workpiece image 83 on the second in-tray input screen 80B thus shows workpieces that are randomly placed in the in-tray.

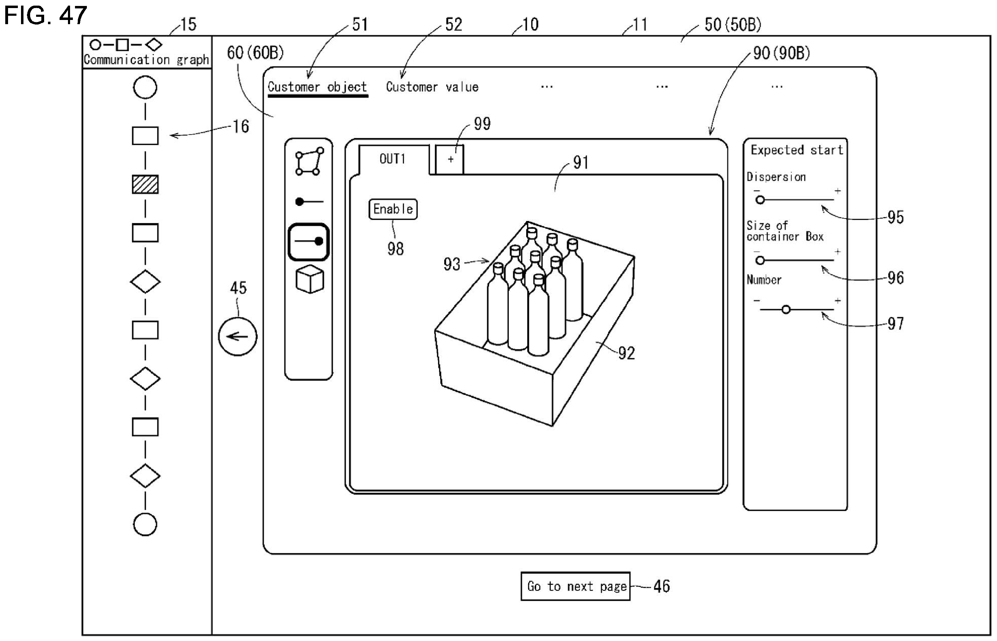

FIG. 47 is a schematic diagram illustrating an example in which the second-object input screen 60B including the out-tray input screen 90 appears on the second detail input screen 50B. The out-tray input screen 90 on the second-object input screen 60B is hereafter referred to as a second out-tray input screen 90B.

The second out-tray input screen 90B includes an instruction area 98 for receiving an instruction to enable inputs of requests from the user about the out-tray. After selecting the instruction area 98, the user can operate the sliders in the specification areas 95, 96, and 97 to input requests about the out-tray into the information processing device 1. When the second space input screen 70B appears after the instruction area 98 is selected, the overview image 71 on the second space input screen 70B includes the image 71d showing the outline of the out-tray with solid lines as illustrated in, for example, FIG. 6.

The other components of the second detail input screen 50B are the same as or similar to the components of the detail input screen 50 that appears in response to the specification area 41a being selected.

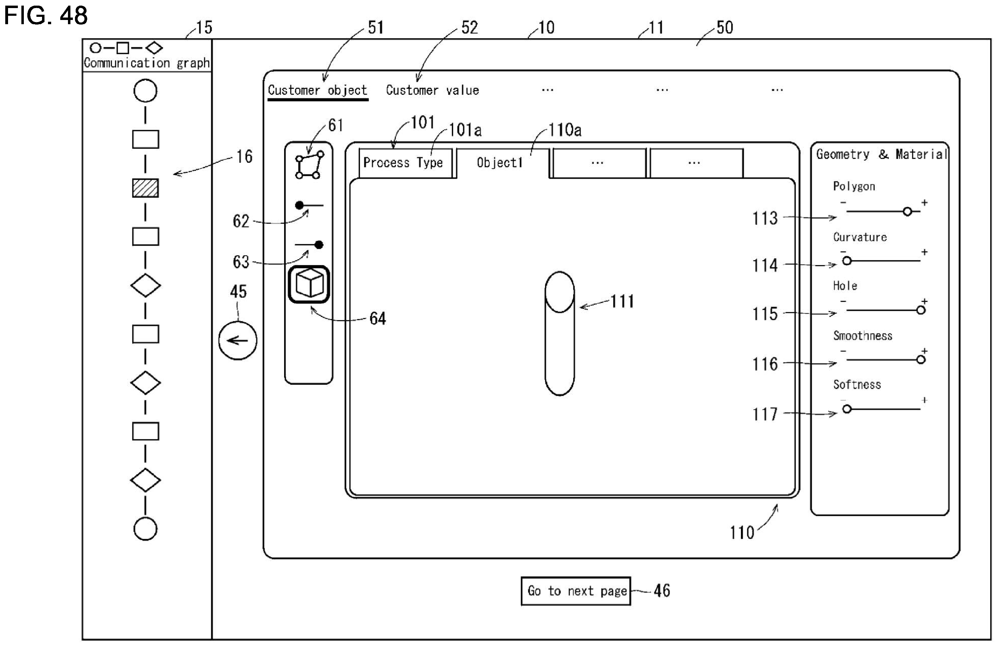

When none of the specification areas 104 is selected on the process input screen 101 illustrated in FIG. 14, no processing is specified for the workpieces between the in-tray and the out-tray. More specifically, this specifies no processing to be performed on the workpieces between the in-tray and the out-tray. In this case, one type of workpiece is simply handled in the robot operation. The display unit 4 can display the first-object input screen 110 alone as a screen for receiving an input of the details of the workpiece, as illustrated in FIG. 48. In this example, the first-object input screen 110 can appear without the first object being specified on the process input screen 101. The user can specify the geometry and the material of the objects in the in-tray on the first-object input screen 110.

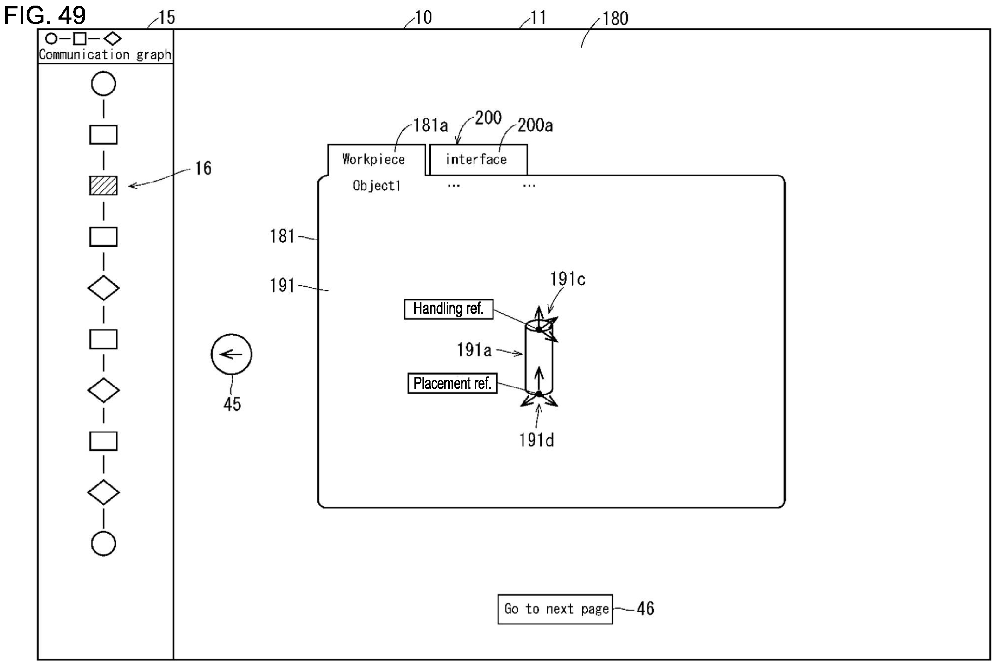

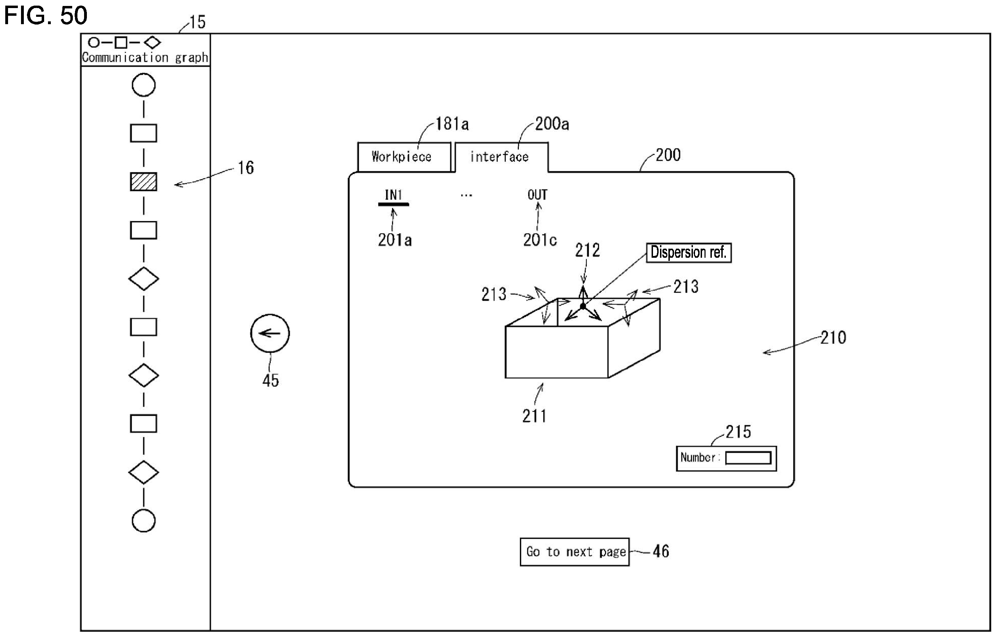

In response to the instruction area 46 included in the detail input screen 50 being selected without any of the specification areas 104 being selected on the process input screen 101, the reference input screen 180 illustrated in FIGs. 49 and 50 appears on the main screen 11. FIG. 49 illustrates an example of the reference input screen 180 including the workpiece reference input screen 181. FIG. 50 illustrates an example of the reference input screen 180 including the tray reference input screen 200.

The workpiece reference input screen 181 illustrated in FIG. 49 allows specifying the holding reference position and the placement reference position of the object in the in-tray. The tray reference input screen 200 illustrated in FIG. 50 can include the first-in-tray reference input screen 210 and the out-tray reference input screen 230. When one type of workpiece is simply handled in the robot operation, the number of in-trays is 1.

Although the asset candidate set suggested to the user includes multiple pieces of hardware alone in the above example, the multiple assets included in the asset candidate set suggested to the user may include software. In this case, the multiple assets included in the asset candidate set may include software for performing object recognition on workpieces, software for performing object recognition on in-trays, software for performing object recognition on out-trays, or other software.

The information processing device has been described in detail, but the above structures are illustrative in all respects, and the disclosure is not limited to the above structures. The above examples may be combined in any manner unless any contradiction arises. Many examples other than those illustrated above may also be implemented without departing from the scope of the present disclosure.

The present disclosure provides the structures described below.

In one embodiment, (1) an information processing device includes a display unit, an input unit that receives a user input, and a controller. The controller causes the display unit to display a layout of a candidate set of a plurality of pieces of hardware for an operation of a robot and an evaluation metric for the operation corresponding to the layout, determines, in response to the input unit receiving a first input about an edit of the layout, the evaluation metric based on the first input, and causes the display unit to redisplay the determined evaluation metric.

(2) In the information processing device according to (1), the controller obtains a second input for the operation of the robot from the input unit and determines the evaluation metric based on the second input.

(3) In the information processing device according to (2), the second input includes information indicating a type of process for a workpiece, and the controller determines the evaluation metric based on the information.

(4) In the information processing device according to any one of (1) to (3), the controller obtains a third input for the operation of the robot from the input unit, obtains information indicating at least one candidate set of the plurality of pieces of hardware based on the third input and causes the display unit to display the information indicating the at least one candidate set in a selectable manner through the input unit, and causes the display unit to display the layout of a selected candidate set of the at least one candidate set.

(5) In the information processing device according to (4), the third input includes a priority content in the operation, and the controller obtains the information indicating the at least one candidate set based on the priority content.

(6) In the information processing device according to (4) or (5), the controller determines a recommendation degree of the at least one candidate set based on the third input, and causes the display unit to display the information and the recommendation degree of the at least one candidate set.

(7) In the information processing device according to any one of (1) to (6), the controller causes the display unit to display the layout with changeable display viewpoints.

(8) In the information processing device according to any one of (1) to (7), the controller causes the display unit to display the layout from a viewpoint of a person standing at a specific point.

In one embodiment, (9) an information processing system includes the information processing device according to any one of (1) to (8), and a display device connected to the information processing device to enable mutual communication. The information processing device is configured to output information about the layout to the display device, and the display device virtually reproduces and displays the layout based on the information about the layout.

In one embodiment, (10) a program causes a computer to function as the information processing device according to any one of (1) to (8) or the information processing system according to (9).

### REFERENCE SIGNS

- 1: information processing device
- 2: controller
- 4: display unit
- 5: input unit
- 3a: program

## Claims

1. An information processing device, comprising:
a display unit;
an input unit configured to receive a user input; and
a controller configured to cause the display unit to display a layout of a candidate set of a plurality of pieces of hardware for an operation of a robot and an evaluation metric for the operation corresponding to the layout, determine, in response to the input unit receiving a first input about an edit of the layout, the evaluation metric based on the first input, and cause the display unit to redisplay the determined evaluation metric.

2. The information processing device according to claim 1, wherein
the controller is configured to obtain a second input for the operation of the robot from the input unit and determine the evaluation metric based on the second input.

3. The information processing device according to claim 2, wherein
the second input includes information indicating a type of process for a workpiece, and
the controller is configured to determine the evaluation metric based on the information.

4. The information processing device according to any one of claims 1 to 3, wherein
the controller is configured to
obtain a third input for the operation of the robot from the input unit,
obtain information indicating at least one candidate set of the plurality of pieces of hardware based on the third input and cause the display unit to display the information indicating the at least one candidate set in a selectable manner through the input unit, and
cause the display unit to display the layout of a selected candidate set of the at least one candidate set.

5. The information processing device according to claim 4, wherein
the third input includes a priority content in the operation, and
the controller is configured to obtain the information indicating the at least one candidate set based on the priority content.

6. The information processing device according to claim 4 or claim 5, wherein
the controller is configured to
determine a recommendation degree of the at least one candidate set based on the third input, and
cause the display unit to display the information and the recommendation degree of the at least one candidate set.

7. The information processing device according to any one of claims 1 to 6, wherein
the controller is configured to cause the display unit to display the layout with changeable display viewpoints.

8. The information processing device according to any one of claims 1 to 7, wherein
the controller is configured to cause the display unit to display the layout from a viewpoint of a person standing at a specific point.

9. An information processing system, comprising:
the information processing device according to any one of claims 1 to 8; and
a display device connected to the information processing device to enable mutual communication,
wherein the information processing device is configured to output information about the layout to the display device, and
the display device is configured to virtually reproduce and display the layout based on the information about the layout.

10. A program for causing a computer to function as the information processing device according to any one of claims 1 to 8 or the information processing system according to claim 9.
